(19) Europäisches Patentamt / European Patent Office / Office européen des brevets

(11) **EP 3 160 140 A1**

(12) **EUROPEAN PATENT APPLICATION**
published in accordance with Art. 153(4) EPC

(43) Date of publication:
**26.04.2017 Bulletin 2017/17**

(51) Int Cl.:
**H04N 19/119** *(2014.01)*   **H04N 19/30** *(2014.01)*
**H04N 19/176** *(2014.01)*   **H04N 19/122** *(2014.01)*

(21) Application number: **15809869.9**

(86) International application number:
**PCT/KR2015/006179**

(22) Date of filing: **18.06.2015**

(87) International publication number:
**WO 2015/194877 (23.12.2015 Gazette 2015/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.06.2014 US 201462013702 P**

(71) Applicant: **Samsung Electronics Co., Ltd Gyeonggi-do 16677 (KR)**

(72) Inventors:
• **PARK, Min-woo**
  **Yongin-si**
  **Gyeonggi-do 446-955 (KR)**
• **LEE, Jin-young**
  **Suwon-si**
  **Gyeonggi-do 441-768 (KR)**

(74) Representative: **Land, Addick Adrianus Gosling et al**
**Arnold & Siedsma**
**Bezuidenhoutseweg 57**
**2594 AC The Hague (NL)**

(54) **MULTI-LAYER VIDEO ENCODING METHOD AND MULTI-LAYER VIDEO DECODING METHOD USING DEPTH BLOCKS**

(57)    Provided is a multilayer video decoding method including obtaining partitioning mode information of a current block; obtaining depth-based block partitioning information when the partitioning mode information indicates one of preset partitioning modes; splitting the current block into a plurality of regions when the depth-based block partitioning information indicates that the current block is to be split into the plurality of regions, based on a depth block corresponding to the current block; and performing at least one of motion compensation and inter-layer compensation on the current block, based on the plurality of split regions.

**FIG. 2B**

```
                    ┌─────────┐
                    │  START  │
                    └────┬────┘
                         │
      ┌──────────────────────────────────────┐
      │  OBTAIN PARTITIONING MODE INFORMATION OF │── S21
      │           CURRENT BLOCK                 │
      └──────────────────┬───────────────────┘
                         │
      ┌──────────────────────────────────────┐
      │ WHEN PARTITIONING MODE INFORMATION INDICATES ONE │── S23
      │ OF PRESET PARTITIONING MODES, OBTAIN DEPTH-BASED │
      │        BLOCK PARTITIONING INFORMATION            │
      └──────────────────┬───────────────────┘
                         │
      ┌──────────────────────────────────────┐
      │ WHEN DEPTH-BASED BLOCK PARTITIONING INFORMATION │── S25
      │ INDICATES THAT CURRENT BLOCK IS TO BE SPLIT INTO │
      │ ONE OR MORE REGIONS, BASED ON DEPTH BLOCK        │
      │ CORRESPONDING TO CURRENT BLOCK, SPLIT CURRENT    │
      │ BLOCK INTO ONE OR MORE REGIONS                   │
      └──────────────────┬───────────────────┘
                         │
      ┌──────────────────────────────────────┐
      │ PERFORM MOTION COMPENSATION ON CURRENT BLOCK,   │── S27
      │ BASED ON ONE OR MORE SPLIT REGIONS              │
      └──────────────────┬───────────────────┘
                         │
                    ┌─────────┐
                    │   END   │
                    └─────────┘
```

EP 3 160 140 A1

**Description**

TECHNICAL FIELD

The present disclosure relates to a multilayer video encoding method and a multilayer video decoding method.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

Image data of a spatial domain is transformed into coefficients of a frequency domain via frequency transformation. According to a video codec, an image is split into blocks having a predetermined size, discrete cosine transformation (DCT) is performed on each block, and frequency coefficients are encoded in block units, for rapid calculation of frequency transformation. Compared with image data of a spatial domain, coefficients of a frequency domain are easily compressed. In particular, since an image pixel value of a spatial domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multilayer video codec encodes and decodes a first layer video and at least one second layer video. Amounts of data of the first layer video and the second layer video may be reduced by removing temporal/spatial redundancy and layer redundancy of the first layer video and the second layer video.

DETAILED DESCRIPTION OF THE INVENTION

TECHNICAL SOLUTION

According to an aspect of the present disclosure, there is provided a multilayer video decoding method including obtaining partitioning mode information of a current block; obtaining block partitioning information when the partitioning mode information indicates one of preset partitioning modes; splitting the current block into a plurality of regions when the depth-based partitioning information indicates that the current block is to be split into the plurality of regions, based on a depth block corresponding to the current block; and performing at least one of motion compensation and inter-layer compensation on the current block, based on the plurality of split regions.

ADVANTAGEOUS EFFECTS

In three-dimensional (3D) video coding, a multilayer video decoding apparatus and method may efficiently derive and transmit partition information for depth-based prediction.

In addition, a non-transitory computer-readable recording medium having recorded thereon a program for executing, by using a computer, a multilayer video decoding method is provided. The technical problems of the present disclosure are not limited to the aforementioned features, and other unstated technical problems may be derived from embodiments below.

DESCRIPTION OF THE DRAWINGS

The present disclosure will be understood with a combination of the detailed descriptions below and the accompanying drawings, in which reference numerals denote structural elements

FIG. 1A is a block diagram of a multilayer video encoding apparatus, according to an embodiment.
FIG. 1B is a flowchart of a multilayer video encoding method, according to an embodiment.
FIG. 1C is a flowchart of a method of splitting a current block into a plurality of regions, the method being performed by the multilayer video encoding apparatus, according to an embodiment.
FIG. 1D is a flowchart of a method of splitting the current block into the plurality of regions, based on a depth block, the method being performed by the multilayer video encoding apparatus, according to an embodiment.
FIG. 2A is a block diagram of a multilayer video decoding apparatus, according to an embodiment.
FIG. 2B is a flowchart of a multilayer video decoding method, according to an embodiment.
FIG. 2C is a flowchart of a method of splitting a current block into a plurality of regions, the method being performed by the multilayer video decoding apparatus, according to an embodiment.

FIG. 2D is a flowchart of a method of splitting the current block into the plurality of regions, based on a depth block, the method being performed by the multilayer video decoding apparatus, according to an embodiment.

FIG. 3A is a diagram of an inter-layer prediction structure, according to an embodiment.

FIG. 3B illustrates a multilayer video, according to an embodiment.

FIG. 4 is a diagram for describing a method of determining a depth block corresponding to a current block, the method being performed by a multilayer video decoding apparatus, according to an embodiment.

FIG. 5A is a diagram for describing a method of splitting a current block into two regions, the method being performed by a multilayer video decoding apparatus, according to an embodiment.

FIG. 5B illustrates examples of a current block that is split into two regions, according to an embodiment.

FIG. 6 is a diagram for describing a method of splitting a current block by using a depth block corresponding to the current block, and determining motion vectors for split regions, when a partitioning mode of the current block is a PART_2NxN mode or a PART_Nx2N mode, according to an embodiment.

FIG. 7A is a diagram for describing whether to obtain depth-based block partitioning information according to partitioning mode information of a current block, according to an embodiment

FIG. 7B is a diagram for describing whether to obtain depth-based block partitioning information according to partitioning mode information of a current block, according to another embodiment.

FIG. 7C is a diagram for describing a method of using corner pixels of a depth block when a current block is split, according to an embodiment.

FIG. 7D is a diagram for describing a method of determining partitioning mode information of a current block, according to an embodiment.

FIG. 8 is a block diagram of a video encoding apparatus based on coding units according to a tree structure, according to an embodiment.

FIG. 9 is a block diagram of a video decoding apparatus based on coding units according to a tree structure, according to an embodiment.

FIG. 10 is a diagram for describing a concept of coding units, according to an embodiment.

FIG. 11 is a block diagram of an image encoder based on coding units, according to an embodiment.

FIG. 12 is a block diagram of an image decoder based on coding units, according to an embodiment.

FIG. 13 is a diagram illustrating coding units and partitions, according to an embodiment.

FIG. 14 is a diagram for describing a relationship between a coding unit and transformation units, according to an embodiment.

FIG. 15 illustrates a plurality of pieces of encoding information, according to an embodiment.

FIG. 16 is a diagram of deeper coding units according to depths, according to an embodiment.

FIGS. 17, 18, and 19 are diagrams for describing a relationship between coding units, prediction units, and transformation units, according to an embodiment.

FIG. 20 is a diagram for describing a relationship between a coding unit, a prediction unit, and a transformation unit, according to encoding mode information of Table 1.

FIG. 21 is a diagram of a physical structure of a disc in which a program is stored, according to an embodiment.

FIG. 22 is a diagram of a disc drive for recording and reading a program by using the disc.

FIG. 23 is a diagram of an overall structure of a content supply system for providing a content distribution service.

FIGS. 24 and 25 illustrate external and internal structures of a mobile phone to which the video encoding method and the video decoding method of the present disclosure are applied, according to embodiments.

FIG. 26 illustrates a digital broadcasting system employing a communication system, according to an embodiment.

FIG. 27 is a diagram illustrating a network structure of a cloud computing system using a video encoding apparatus and a video decoding apparatus, according to an embodiment.

BEST MODE

According to an aspect of the present disclosure, there is provided a multilayer video decoding method including obtaining partitioning mode information of a current block; obtaining depth-based block partitioning information when the partitioning mode information indicates one of preset partitioning modes; splitting the current block into a plurality of regions when the depth-based block partitioning information indicates that the current block is to be split into the plurality of regions, based on a depth block corresponding to the current block; and performing at least one of motion compensation and inter-layer compensation on the current block, based on the plurality of split regions.

The preset partitioning modes may include at least one of a PART_2NxN mode and a PART_Nx2N mode.

The depth-based block partitioning information may indicate whether to split the current block into a first region and a second region, each having an arbitrary size.

When the depth-based block partitioning information indicates that the current block is not to be split into the plurality of regions based on the depth block corresponding to the current block, the multilayer video decoding method may further include splitting the current block into the plurality of regions, based on the obtained partitioning mode information.

When the depth-based block partitioning information indicates that the current block is to be split into the plurality of regions based on the depth block corresponding to the current block, the splitting of the current block into the plurality of regions may include determining the depth block corresponding to the current block; and splitting the current block into two regions, based on sample values included in the determined depth block.

The splitting of the current block into the two regions based on the sample values included in the determined depth block may include determining an average value of corner pixels of the depth block to be a threshold value; splitting the depth block into a first region and a second region, wherein the first region includes samples of which sample values are greater than the threshold value, and the second region includes samples of which sample values are equal to or less than the threshold value; and splitting the current block according to split shapes of the first region and the second region.

The corner pixels may include one or more samples from among a left-top sample, a left-bottom sample, a right-top sample, and a right-bottom sample in the depth block.

According to another aspect of the present disclosure, there is provided a multilayer video encoding method including determining partitioning mode information of a current block; generating depth-based block partitioning information when the partitioning mode information indicates one of preset partitioning modes; splitting the current block into a plurality of regions when the depth-based block partitioning information indicates that the current block is to be split into the plurality of regions, based on a depth block corresponding to the current block; and performing at least one of motion prediction and inter-layer prediction on the current block, based on the plurality of split regions.

The preset partitioning modes may include at least one of a PART_2NxN mode and a PART_Nx2N mode.

When the depth-based block partitioning information indicates that the current block is not split into the plurality of regions based on the depth block corresponding to the current block, the multilayer video encoding method may further include splitting the current block into the plurality of regions, based on the partitioning mode information.

When the depth-based block partitioning information indicates that the current block is to be split into the plurality of regions based on the depth block corresponding to the current block, the splitting of the current block into the plurality of regions may include determining the depth block corresponding to the current block; and splitting the current block into two regions, based on sample values included in the determined depth block.

The splitting of the current block into the two regions based on the sample values included in the determined depth block may include determining an average value of corner pixels of the depth block to be a threshold value; splitting the depth block into a first region and a second region, wherein the first region includes samples of which sample values are greater than the threshold value, and the second region includes samples of which sample values are equal to or less than the threshold value; and splitting the current block according to split shapes of the first region and the second region.

The corner pixels may include one or more samples from among a left-top sample, a left-bottom sample, a right-top sample, and a right-bottom sample in the depth block.

According to another aspect of the present disclosure, there is provided a multilayer video decoding apparatus including an obtainer configured to obtain partitioning mode information of a current block, and to obtain depth-based block partitioning information when the partitioning mode information indicates one of preset partitioning modes; and a decoder configured to split the current block into a plurality of regions when the depth-based block partitioning information indicates that the current block is to be split into the plurality of regions, based on a depth block corresponding to the current block, and to perform at least one of motion compensation and inter-layer compensation on the current block, based on the plurality of split regions.

According to another aspect of the present disclosure, there is provided a multilayer video encoding apparatus including an encoder configured to determine partitioning mode information of a current block, to generate depth-based block partitioning information when the partitioning mode information indicates one of preset partitioning modes, to split the current block into a plurality of regions when the depth-based block partitioning information indicates that the current block is to be split into the plurality of regions, based on a depth block corresponding to the current block, and to perform at least one of motion prediction and inter-layer prediction on the current block, based on the plurality of split regions; and a bitstream generator configured to generate a bitstream by using a plurality of items of encoded data generated by performing the motion prediction.

MODE OF THE INVENTION

All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. Also, some terms may be arbitrarily selected by the applicant, and in this case, the meaning of the selected terms will be described in detail in the detailed description of the invention. Thus, the terms used herein have to be defined based on the meaning of the terms together with the description throughout the specification.

Also, throughout the specification, when a part "includes" or "comprises" an element, unless there is a particular description contrary thereto, the part can further include other elements, not excluding the other elements. The term 'unit', as used herein, means, but is not limited to, a software or hardware component, such as a Field Programmable Gate Array (FPGA) or Application Specific Integrated Circuit (ASIC), which performs certain tasks. A 'unit' may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and "units" may be combined into fewer components and "units" or may be further separated into additional components and "units".

While terms "first" and "second" are used to describe various components, it is obvious that the components are not limited to the terms "first" and "second". The terms "first" and "second" are used only to distinguish between each component. For example, a first component may indicate a second component or a second component may indicate a first component without conflicting with the present disclosure. The term "and/or" includes any and all combinations of one or more of the associated listed items.

The present disclosure will now be described more fully with reference to the accompanying drawings, in which embodiments of the present disclosure are shown. The present disclosure may, however, be embodied in many different forms and should not be construed as being limited to the embodiments set forth herein.

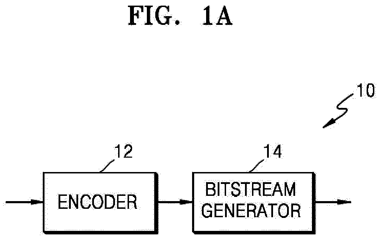

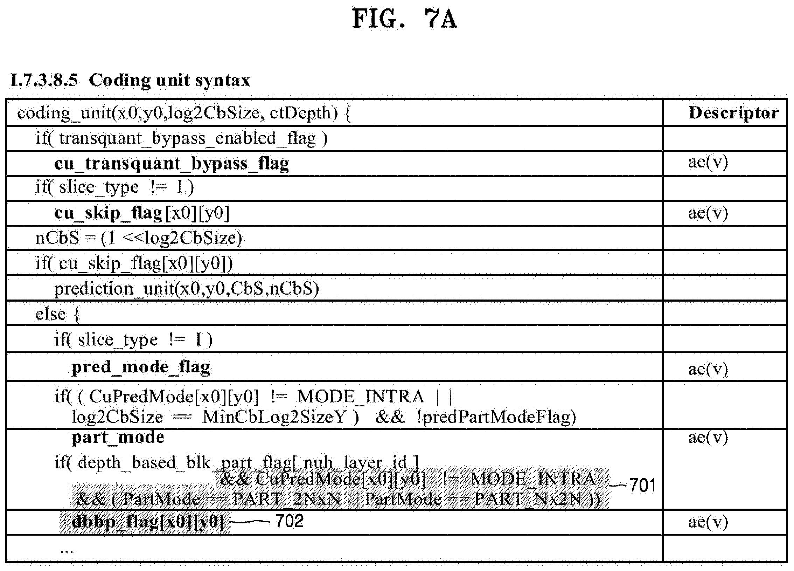

Hereinafter, with reference to FIGS. 1A through 7D, a multilayer video encoding method and multilayer video decoding method according to an embodiment will be provided.

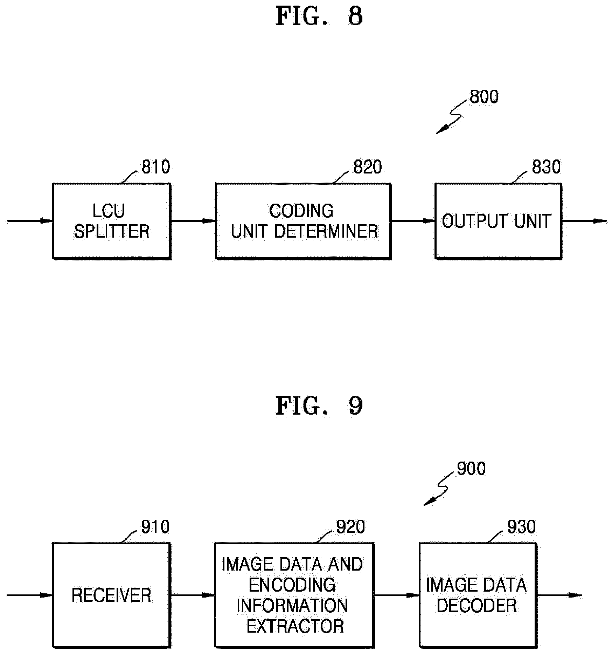

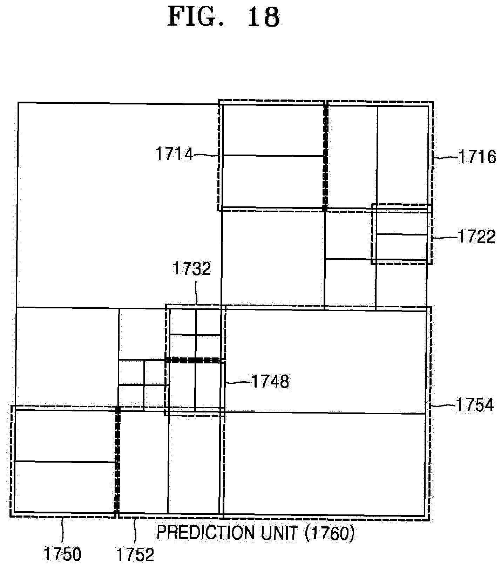

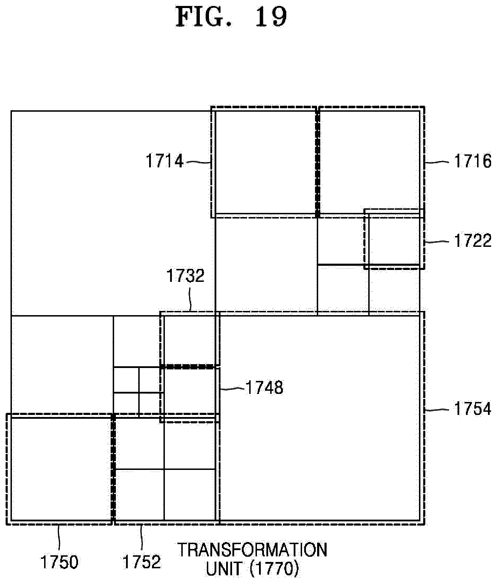

Also, with reference to FIGS. 8 through 20, a video encoding method and video decoding method based on coding units having a tree structure which are applicable to the multilayer video encoding and decoding methods will be described.

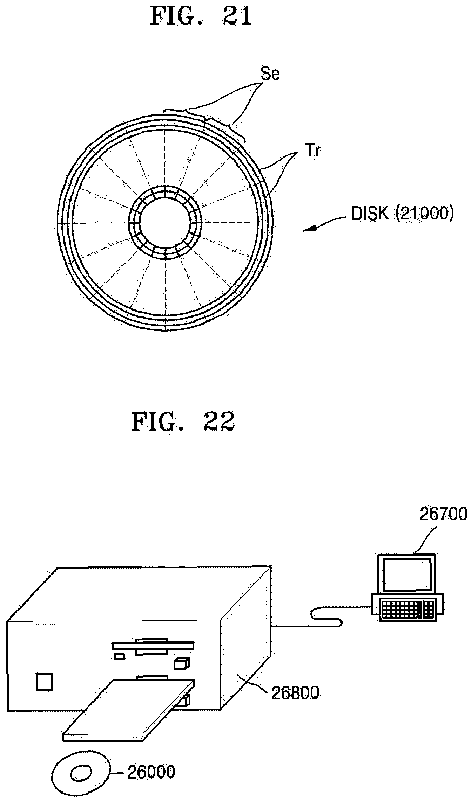

Also, with reference to FIGS. 21 through 27, embodiments to which the video encoding method and the video decoding method are applicable will be described.

Hereinafter, an "image" may refer to a still image or a moving image of a video, or a video itself.

Hereinafter, a "sample" refers to data that is assigned to a sampling location of an image and is to be processed. For example, pixels in an image of a spatial domain may be samples.

Hereinafter, a "current block" may refer to a block of an image to be encoded or decoded.

Hereinafter, a "neighboring block" refers to at least one encoded or decoded block adjacent to the current block. For example, the neighboring block may be located at the top, upper right, left, or upper left of the current block. Also, the neighboring block may include a spatially-neighboring block or a temporally-neighboring block. For example, a temporally-neighboring block may include a block of a reference picture which is adjacent to the current block. Also, the neighboring block may include a block of a reference picture, which is co-located with the current block, or a neighboring block of the co-located block.

Hereinafter, a "layer image" refers to images corresponding to a particular view or a same type. In a multiview video, one layer image refers to texture images or depth images which are input at a particular view. For example, in a three-dimensional (3D) video, a left-view texture image, a right-view texture image, and a depth image may respectively configure layer images. The left-view texture image may configure a first layer image, the right-view texture image may configure a second layer image, and the depth image may configure a third layer image.

FIG. 1A is a block diagram of a multilayer video encoding apparatus, according to an embodiment.

Referring to FIG. 1A, a multilayer video encoding apparatus 10 may include an encoder 12 and a bitstream generator 14. However, the multilayer video encoding apparatus 10 may be embodied with more elements than the shown elements or may be embodied with fewer elements than the shown elements. Hereinafter, the elements are described below.

The multilayer video encoding apparatus 10 according to an embodiment may classify and encode a plurality of image sequences according to layers, according to a scalable video coding scheme, and may output separate streams including encoded data according to the layers. The multilayer video encoding apparatus 10 may encode a first layer image sequence and a second layer image sequence to different layers.

For example, the encoder 12 may encode first layer images and may output a first layer stream including encoded data of the first layer images. Also, the encoder 12 may encode second layer images and may output a second layer stream including encoded data of the second layer images.

Also, for example, according to a scalable video coding scheme based on spatial scalability, low resolution images may be encoded as first layer images, and high resolution images may be encoded as second layer images. An encoding result of the first layer images may be output as a first layer stream, and an encoding result of the second layer images may be output as a second layer stream.

The multilayer video encoding apparatus 10 according to an embodiment may express and encode the first layer stream and the second layer stream as one bitstream through a multiplexer.

As another example, a multiview video may be encoded according to a scalable video coding scheme. Left-view images may be encoded as first layer images and right-view images may be encoded as second layer images. Alternatively, central-view images, left-view images, and right-view images may be each encoded, wherein the central-view images are encoded as first layer images, the left-view images are encoded as second layer images, and the right-view images are encoded as third layer images. Alternatively, a central-view texture image, a central-view depth image, a left-view texture image, a left-view depth image, a right-view texture image, and a right-view depth image may be respectively encoded as a first layer image, a second layer image, a third layer image, a fourth layer image, a fifth layer image, and a sixth layer image.

As another example, a central-view texture image, a central-view depth image, a left-view depth image, a left-view texture image, a right-view depth image, and a right-view texture image may be respectively encoded as a first layer image, a second layer image, a third layer image, a fourth layer image, a fifth layer image, and a sixth layer image.

As another example, a scalable video coding method may be performed according to temporal hierarchical prediction based on temporal scalability. A first layer stream including encoding information generated by encoding base frame rate images may be output. Temporal levels may be classified according to frame rates and each temporal level may be encoded according to layers. A second layer stream including encoding information of a high frame rate may be output by further encoding higher frame rate images by referring to the base frame rate images.

Also, scalable video coding may be performed on a first layer and a plurality of extension layers (a second layer, a third layer, ..., a K-th layer). When there are at least three extension layers, first layer images and K-th layer images may be encoded. Accordingly, an encoding result of the first layer images may be output as a first layer stream, and encoding results of the first, second, ..., K-th layer images may be respectively output as first, second, ..., K-th layer streams.

The multilayer video encoding apparatus 10 according to an embodiment may perform inter prediction in which images of a single layer are referenced in order to predict a current image. By performing the inter prediction, a motion vector between the current image and a reference image may be derived, and a residual component that is a disparity component between the current image and a prediction image generated by referring to the reference image may be generated.

Also, when the multilayer video encoding apparatus 10 according to an embodiment allows at least three layers, i.e., first through third layers, inter-layer prediction between a first layer image and a third layer image, and inter-layer prediction between a second layer image and a third layer image may be performed according to a multilayer prediction structure.

In inter-layer prediction, when a view of a layer of a current image is different from a view of a layer of a reference image, a disparity vector between the current image and the reference image of the layer different from that of the current image may be derived, and a residual component that is a disparity component between the current image and a prediction image generated by using the reference image of the different layer may be generated.

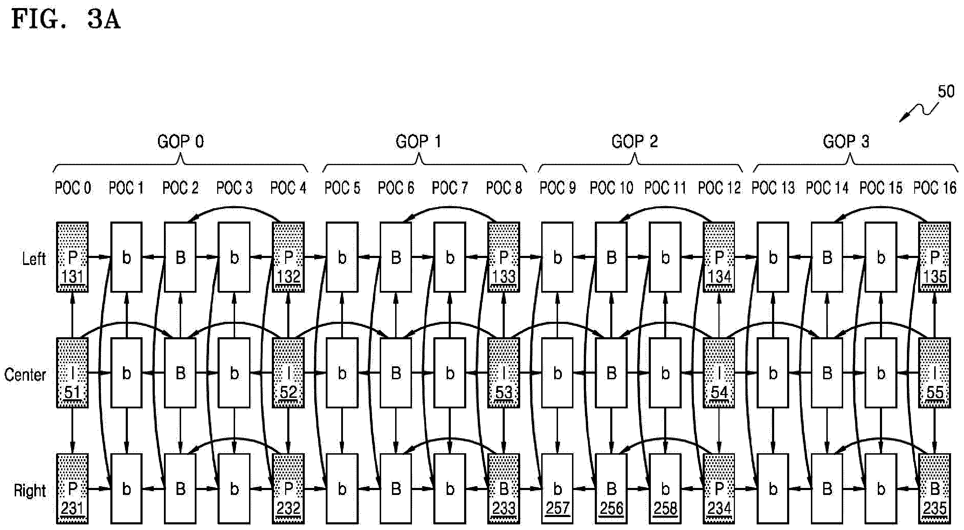

The inter-layer prediction structure will be described later with reference to FIG. 3A.

The multilayer video encoding apparatus 10 according to an embodiment may perform encoding according to blocks of each image of a video, according to layers. A block may have a square shape, a rectangular shape, or an arbitrary geometrical shape, and is not limited to a data unit having a predetermined size. The block may be a largest coding unit, a coding unit, a prediction unit, or a transformation unit, among coding units according to a tree structure. The largest coding unit including the coding units of a tree structure may be called differently, such as a coding tree unit, a coding block tree, a block tree, a root block tree, a coding tree, a coding root, or a tree trunk. Video encoding and decoding schemes based on the coding units according to a tree structure will be described later with reference to FIGS. 8 through 20.

Inter prediction and inter-layer prediction may be performed based on a data unit such as a coding unit, a prediction unit, or a transformation unit.

The encoder 12 according to an embodiment may generate symbol data by performing source coding operations including inter prediction or intra prediction on first layer images. The symbol data may indicate a value of each encoding parameter and a sample value of a residual.

For example, the encoder 12 may generate symbol data by performing inter prediction or intra prediction, transformation, and quantization on samples of a data unit of first layer images, and may generate a first layer stream by performing entropy encoding on the symbol data.

The encoder 12 may encode second layer images based on coding units of a tree structure. The encoder 12 may generate symbol data by performing inter/intra prediction, transformation, and quantization on samples of a coding unit of second layer images, and may generate a second layer stream by performing entropy encoding on the symbol data.

The encoder 12 according to an embodiment may perform inter-layer prediction in which a second layer image is predicted by using prediction information of a first layer image. In order to encode a second layer original image from a second layer image sequence through an inter-layer prediction structure, the encoder 12 may determine motion information of a second layer current image by using motion information of a reconstructed first layer image, and may encode a prediction error between the second layer original image and a second layer prediction image by generating the second layer prediction image based on the determined motion information.

The encoder 12 may determine a block of a first layer image to be referenced by a block of a second layer image by performing inter-layer prediction on the second layer image according to coding units or prediction units. For example, a reconstruction block of the first layer image, which is located correspondingly to a location of a current block in the second layer image, may be determined. The encoder 12 may use the reconstructed first layer block corresponding to a second layer block, as a second layer prediction block. Here, the encoder 12 may determine the second layer prediction block by using the reconstructed first layer block that is co-located with the second layer block.

The encoder 12 may use the second layer prediction block determined by using the reconstructed first layer block according to the inter-layer prediction structure, as a reference image for inter-layer prediction with respect to a second layer original block. The encoder 12 may perform transformation and quantization on an error between a sample value of the second layer prediction block and a sample value of the second layer original block, i.e., a residual component according to inter-layer prediction, by using the reconstructed first layer block, and may perform entropy encoding.

The encoder 12 may determine partitioning mode information of the current block. The partitioning mode information may be about partitioning modes indicating 2Nx2N, 2NxN, Nx2N, NxN, or the like. The partitioning mode information according to various embodiments may include information indicating symmetrical partitions that are obtained by symmetrically splitting a height or width of a prediction unit, partitions obtained by asymmetrically splitting the height or width of the prediction unit, such as 1:n or n:1, partitions that are obtained by geometrically splitting the prediction unit, partitions having arbitrary shapes, or the like.

The encoder 12 may determine partitioning mode information of a current block, based on a depth block corresponding to the current block. For example, the encoder 12 may determine the partitioning mode information of the current block, based on sample values in the depth block corresponding to the current block.

When the encoder 12 determines the partitioning mode information of the current block, the encoder 12 determines the partitioning mode information to indicate one of limited partitioning modes. For example, the encoder 12 may determine a partitioning mode of the current block to be at least one of a PART_2NxN mode and a PART_Nx2N mode.

The encoder 12 may determine the partitioning mode of the current block to be at least one of the limited partitioning modes by using the sample values of the depth block corresponding to the current block. For example, the encoder 12 may determine the partitioning mode of the current block to be one of a PART_2NxN mode (hereinafter, referred to as PART_2NxN) and a PART_Nx2N mode (hereinafter, referred to as PART_Nx2N) by using at least one sample from among corner samples of the depth block corresponding to the current block.

The encoder 12 may determine the partitioning mode of the current block to be at least one of the limited partitioning modes by using the sample values of the depth block corresponding to the current block. For example, the encoder 12 may determine the partitioning mode of the current block to be one of PART_2NxN and PART-Nx2N by using at least one sample from among the corner samples of the depth block corresponding to the current block.

For example, when an absolute value of (a left-top sample value - a right-top sample value) is greater than an absolute value of (the left-top sample value - a left-bottom sample value) in the depth block corresponding to the current block, the encoder 12 may determine the partitioning mode of the current block to be PART_Nx2N. Also, when the absolute value of (the left-top sample value - the right-top sample value) is equal to or less than the absolute value of (the left-top sample value - the left-bottom sample value) in the depth block corresponding to the current block, the encoder 12 may determine the partitioning mode of the current block to be PART_2NxN.

As another example, when the left-top sample value is less than a right-bottom sample value and the right-top sample value is less than the left-bottom sample value in the depth block corresponding to the current block, and when the left-top sample value is equal to or greater than the right-bottom sample value and the right-top sample value is equal to or greater than the left-bottom sample value, the encoder 12 may determine the partitioning mode of the current block to be PART_2NxN, and if not, the encoder 12 may determine the partitioning mode of the current block to be PART_Nx2N.

As another example, the encoder 12 may obtain an average value of the left-top sample value, the right-top sample value, the left-bottom sample value, and the right-bottom sample value in the depth block corresponding to the current block. When the left-top sample value is greater than the average value and the right-top sample value is greater than the average value in the depth block corresponding to the current block, and when the left-top sample value is equal to or less than the average value and the right-top sample value is equal to or less than the average value, the encoder 12 may determine the partitioning mode of the current block to be PART_2NxN, and if not, the encoder 12 may determine the partitioning mode of the current block to be PART_Nx2N.

As another example, the encoder 12 may obtain the average value of the left-top sample value, the right-top sample value, the left-bottom sample value, and the right-bottom sample value in the depth block corresponding to the current block. When the left-top sample value is greater than the average value and the left-bottom sample value is greater than the average value in the depth block corresponding to the current block, and when the left-top sample value is equal to or less than the average value and the left-bottom sample value is equal to or less than the average value, the encoder 12 may determine the partitioning mode of the current block to be PART_Nx2N, and if not, the encoder 12 may determine the partitioning mode of the current block to be PART_2NxN.

When the partitioning mode information of the current block indicates one of preset partitioning modes, the encoder 12 may generate depth-based block partitioning information. The encoder 12 may determine whether the partitioning mode information indicates one of the preset partitioning modes. The depth-based block partitioning information indicates whether the current block is to be split into a plurality of regions, based on the depth block corresponding to the current block. For example, the depth-based block partitioning information may indicate whether to split the current block into a first region and a second region, each having an arbitrary size, by referring to the depth block corresponding to the current block.

When the depth-based block partitioning information indicates that the current block is to be split into the plurality of regions, based on the depth block corresponding to the current block, the encoder 12 may split the current block into the plurality of regions, based on the depth block.

In addition, when the depth-based block partitioning information indicates that the current block is not to be split into the plurality of regions, based on the depth block corresponding to the current block, the encoder 12 may split the current block into the plurality of regions, based on the partitioning mode information of the current block.

The encoder 12 may split the current block into the plurality of regions by using the depth block corresponding to the current block, and may encode the current block, based on the plurality of split regions. The encoder 12 may determine the depth block corresponding to the current block.

For example, the encoder 12 may obtain a disparity vector of the current block from a neighboring block, and may determine the depth block corresponding to the current block, based on the obtained disparity vector.

For example, the encoder 12 may determine the depth block corresponding to the current block, wherein the depth block is indicated by the disparity vector of the current block from a location of the current block.

The encoder 12 may split the depth block corresponding to the current block into a plurality of regions, and may split the current block into the plurality of regions, based on the plurality of split regions of the depth block.

In order to split the depth block into the plurality of regions, the encoder 12 may determine a threshold value. The threshold value refers to a reference value with respect to the split when the depth block is split into the plurality of regions.

The encoder 12 may determine the threshold value by using the sample values of the depth block. For example, the encoder 12 may determine the threshold value by using one or more corner samples included in the depth block. The corner samples refer to a left-top sample, a left-bottom sample, a right-top sample, and a right-bottom sample in the depth block. The encoder 12 may determine an average value of sample values of the left-top sample, the left-bottom sample, the right-top sample, and the right-bottom sample to be the threshold value.

The encoder 12 may split the depth block into the plurality of regions by using the determined threshold value.

For example, the encoder 12 may split the depth block into a first region and a second region, wherein the first region is a region of samples having sample values each being greater than the threshold value, and the second region is a region of samples having sample values each being equal to or less than the threshold value.

The encoder 12 may split the current block into the plurality of regions, based on split shapes of the depth block corresponding to the current block. For example, if the depth block corresponding to the current block is split into the first region and the second region, the encoder 12 may split the current block into two regions by matching the first and second regions and the current block.

The encoder 12 may perform motion prediction on the current block by using the plurality of split regions.

For example, the encoder 12 may determine motion vectors respectively for the split two regions of the current block. The encoder 12 may determine reference blocks of the two regions by using the determined motion vectors, respectively, and may respectively perform motion compensation on the two regions by using the respective reference blocks, thereby encoding the current block.

The encoder 12 may perform inter-layer prediction on the current block by using the plurality of split regions. For example, the encoder 12 may determine disparity vectors respectively for the split two regions of the current block. The encoder 12 may determine reference blocks of the two regions by using the determined disparity vectors, respectively, and may respectively perform the inter-layer prediction on the two regions by using the respective reference blocks, thereby encoding the current block.

The encoder 12 may perform intra prediction on the current block by using the plurality of split regions. For example, the encoder 12 may perform the intra prediction on each of the split two regions of the current block.

The encoder 12 may perform a combination of at least two predictions from among the intra prediction, inter prediction, and the inter-layer prediction on the plurality of split regions. For example, the encoder 12 may perform the inter prediction on the first region of the split two regions, and may perform the inter-layer prediction on the second region. Alternatively, the encoder 12 may perform the inter-layer prediction on the first region of the split two regions, and may perform the intra prediction on the second region.

The bitstream generator 14 may generate a bitstream by using a plurality of items of encoded data generated as a result of the motion prediction.

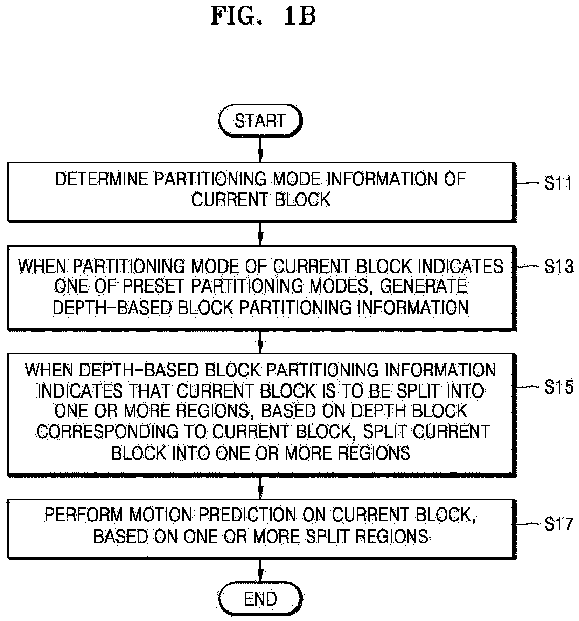

Hereinafter, various operations or applications performed by the multilayer video encoding apparatus 10 will now be described. In this regard, features that may be clearly understood and predicted by one of ordinary skill in the art to which this disclosure belongs may be considered as common implementations even if one of the encoder 12 and the bitstream generator 14 is not specified, and the scope of the present disclosure is not limited by a name or physical/logical structures of a particular configuration. Hereinafter, the operations performed by the multilayer video encoding apparatus 10 will now be described with reference to FIGS. 1B through 1D.

FIG. 1B is a flowchart of a multilayer video encoding method, according to an embodiment.

In operation S11, the multilayer video encoding apparatus 10 may determine partitioning mode information of a current block. The partitioning mode information may be about partitioning modes indicating 2Nx2N, 2NxN, Nx2N, NxN, or the like.

In operation S13, when a partitioning mode of the current block indicates one of preset partitioning modes, the multilayer video encoding apparatus 10 may generate depth-based block partitioning information.

In this regard, the preset partitioning modes may include at least one of a PART_2NxN mode and a PART_Nx2N mode. When the partitioning mode is the PART_2NxN mode or the PART_Nx2N mode, the multilayer video encoding apparatus 10 may generate the depth-based block partitioning information. The depth-based block partitioning information may indicate whether the current block is split into one or more regions, based on a depth block corresponding to the current block

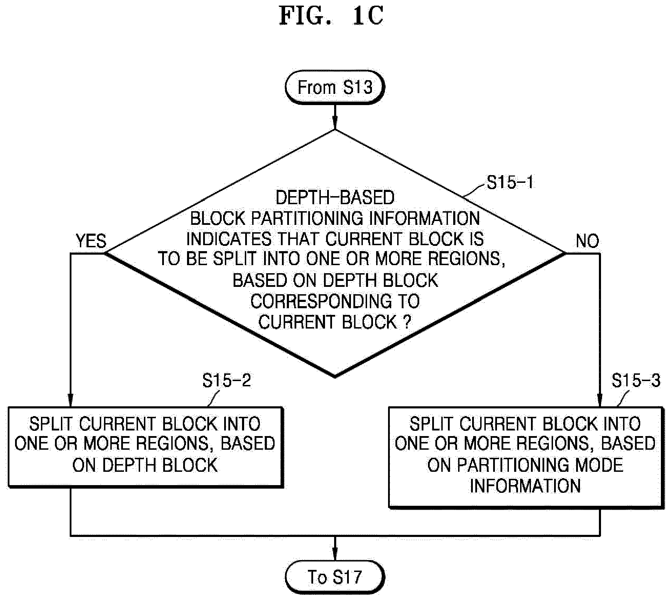

In operation S 15, when the depth-based block partitioning information indicates that the current block is to be split into a plurality of regions, based on the depth block corresponding to the current block, the multilayer video encoding apparatus 10 may split the current block into the plurality of regions by referring to the depth block. FIG. 1C is a diagram for describing operation S15 that is related to a method of splitting the current block into the plurality of regions, the method being performed by the multilayer video encoding apparatus 10.

In operation S15-1, the multilayer video encoding apparatus 10 may determine whether the depth-based block partitioning information indicates that the current block is to be split into the plurality of regions, based on the depth block corresponding to the current block.

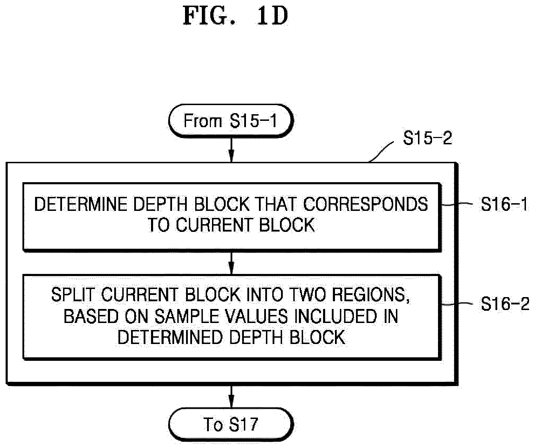

In operation S15-2, when the depth-based block partitioning information indicates that the current block is to be split into the plurality of regions, based on the depth block corresponding to the current block, the multilayer video encoding apparatus 10 may split the current block into the plurality of regions, based on the depth block. FIG. 1D is a diagram for describing operation S15-2 that is related to a method of splitting the current block into the plurality of regions, based on the depth block, the method being performed by the multilayer video encoding apparatus 10.

In operation S16-1, the multilayer video encoding apparatus 10 may determine the depth block that corresponds to the current block.

The multilayer video encoding apparatus 10 may obtain a disparity vector of the current block from a neighboring block adjacent to the current block. The multilayer video encoding apparatus 10 may derive the disparity vector of the current block by using a disparity vector of the neighboring block.

For example, the multilayer video encoding apparatus 10 may derive the disparity vector of the current block by applying a camera parameter to the disparity vector of the neighboring block.

In addition, the multilayer video encoding apparatus 10 may derive the disparity vector of the current block by applying a camera parameter to predetermined sample values included in a block indicated by the disparity vector of the neighboring block.

The aforementioned method is exemplary, and the multilayer video encoding apparatus 10 may obtain the disparity vector of the current block by using various methods without a limit to the aforementioned method.

The multilayer video encoding apparatus 10 may determine the depth block corresponding to the current block by using the disparity vector of the current block.

For example, the multilayer video encoding apparatus 10 may determine the depth block corresponding to the current block, wherein the depth block is indicated by the disparity vector of the current block from a location of the current block.

The multilayer video encoding apparatus 10 may determine the depth block corresponding to the current block in a depth image corresponding to a view equal to that of a current image. Alternatively, the multilayer video encoding apparatus 10 may determine the depth block corresponding to the current block in a depth image corresponding to a view different from that of the current image.

For example, when a current image including the current block is a left-view texture image, the multilayer video encoding apparatus 10 may determine the depth block corresponding to the current block in a left-view depth image.

Also, when a current image including the current block is a right-view texture image, the multilayer video encoding apparatus 10 may determine the depth block corresponding to the current block in a right-view depth image.

In operation S16-2, the multilayer video encoding apparatus 10 may split the current block into two regions, based on sample values included in the determined depth block.

The multilayer video encoding apparatus 10 may split the depth block corresponding to the current block into a plurality of regions, and may split the current block into a plurality of regions, based on the plurality of split regions of the depth block.

In order to split the current block into the plurality of regions, the multilayer video encoding apparatus 10 may split the depth block corresponding to the current block into the plurality of regions.

In order to split the depth block into the plurality of regions, the multilayer video encoding apparatus 10 may determine a threshold value. The threshold value refers to a reference value with respect to the split when the depth block is split into the plurality of regions.

The multilayer video encoding apparatus 10 may determine the threshold value by using sample values of the depth block. For example, the multilayer video encoding apparatus 10 may determine an average of the sample values, which are included in the depth block, to be the threshold value.

The multilayer video encoding apparatus 10 may determine the threshold value by using one or more corner samples included in the depth block. The corner samples refer to a left-top sample, a left-bottom sample, a right-top sample, and a right-bottom sample in the depth block.

For example, the multilayer video encoding apparatus 10 may determine an average of sample values of the left-top sample and the left-bottom sample in the depth block to be the threshold value. Alternatively, the multilayer video encoding apparatus 10 may determine an average of sample values of the left-top sample, the left-bottom sample, the right-top sample, and the right-bottom sample in the depth block to be the threshold value.

$$TH = (a + b + c + d)>>2 \quad ---- \quad (1)$$

$$TH = (a + b + c + d + e)>>2 ---- (2)$$

Also, the multilayer video encoding apparatus 10 may determine the threshold value by using Equation (1). a refers to a value of the left-top sample in the depth block, b refers to a value of the right-top sample in the depth block, c refers to a value of the left-bottom sample in the depth block, d refers to a value of the right-bottom sample in the depth block, and TH refers to the threshold value.

The multilayer video encoding apparatus 10 may obtain the threshold value by shifting a total sum of the left-top sample value, the left-bottom sample value, the right-top sample value, and the right-bottom sample value by 2 bits in a right direction by using Equation (1).

Also, the multilayer video encoding apparatus 10 may obtain, as the threshold value, an average of the left-top sample value, the left-bottom sample value, the right-top sample value, and the right-bottom sample value in the depth block.

Also, the multilayer video encoding apparatus 10 may determine the threshold value by using Equation (2). e refers to a compensation value. The multilayer video encoding apparatus 10 may obtain the threshold value by shifting a total sum of the left-top sample value, the left-bottom sample value, the right-top sample value, the right-bottom sample value, and the compensation value by 2 bits in a right direction. e may refer to a rounding offset value as the compensation value. The rounding offset value refers to a coefficient capable of being used to determine a level of rounding off of an average of the left-top sample value, the left-bottom sample value, the right-top sample value, and the right-bottom sample value. The multilayer video encoding apparatus 10 may split the depth block into the plurality of regions by using the determined threshold value.

For example, the multilayer video encoding apparatus 10 may split the depth block into a first region and a second region, wherein the first region is a region of samples having sample values each being equal to or greater than the threshold value, and the second region is a region of samples having sample values each being less than the threshold value. Alternatively, the multilayer video encoding apparatus 10 may split the depth block into a first region and a second region, wherein the first region is a region of samples having sample values each being greater than the threshold value, and the second region is a region of samples having sample values each being equal to or less than the threshold value.

Also, each of the plurality of split regions of the depth block may have an arbitrary shape. For example, when sample values in the depth block are asymmetrically distributed in the depth block, each of the plurality of split regions of the depth block may have an arbitrary shape.

The multilayer video encoding apparatus 10 may split the current block into the plurality of regions, based on split shapes of the depth block corresponding to the current block. For example, if the depth block corresponding to the current block is split into the first region and the second region, the multilayer video encoding apparatus 10 may split the current block into two regions by matching the first and second regions and the current block.

For example, the multilayer video encoding apparatus 10 may split the current block into a region of samples in the current block and another region of samples in the current block, wherein the samples in the region correspond to locations of samples included in the first region of the depth block, and the samples in the other region correspond to locations of samples included in the second region of the depth block.

Also, the multilayer video encoding apparatus 10 may split the current block into two regions by matching the current block and a boundary between the first and second regions of the depth block.

Also, the multilayer video encoding apparatus 10 may generate a split map by using the first region and the second region of the depth block, and may split the current block into two regions by matching the generated split map and the current block.

Also, each of the plurality of split regions of the current block may have an arbitrary shape. For example, when the sample values in the depth block are asymmetrically distributed in the depth block, each of the plurality of split regions of the depth block may have an arbitrary shape, and the multilayer video encoding apparatus 10 may match the plurality of split regions of the depth block and the current block, thereby splitting the current block into a plurality of regions, each having an asymmetrical shape.

In operation S15-3, when the depth-based block partitioning information indicates that the current block is not to be split into the plurality of regions, based on the depth block corresponding to the current block, the multilayer video encoding apparatus 10 may split the current block into the plurality of regions, based on the partitioning mode information.

In operation S 17, the multilayer video encoding apparatus 10 performs motion prediction on the current block, based on the plurality of regions split from the current block.

The multilayer video encoding apparatus 10 may perform the motion prediction on the current block by using the plurality of regions split from the current block.

For example, the multilayer video encoding apparatus 10 may determine motion vectors respectively for the two split regions of the current block. Then, the multilayer video encoding apparatus 10 may determine reference blocks of the two regions, respectively, by using the determined motion vectors, and may respectively perform the motion prediction on the regions by using the respective reference blocks, thereby encoding the current block.

The multilayer video encoding apparatus 10 may perform inter-layer prediction on the current block by using the plurality of split regions.

For example, the multilayer video encoding apparatus 10 may determine disparity vectors respectively for the two split regions of the current block. Then, the multilayer video encoding apparatus 10 may determine reference blocks of the two regions, respectively, by using the determined disparity vectors, and may respectively perform the inter-layer prediction on the regions by using the respective reference blocks, thereby encoding the current block.

The multilayer video encoding apparatus 10 may perform intra prediction on the current block by using the plurality of split regions. For example, the multilayer video encoding apparatus 10 may perform the intra prediction on each of the two split regions of the current block.

The multilayer video encoding apparatus 10 may perform a combination of at least two predictions from among the intra prediction, inter prediction, and the inter-layer prediction on the plurality of regions split from the current block. For example, the multilayer video encoding apparatus 10 may perform the inter prediction on the first region of the two regions split from the current block, and may perform the inter-layer prediction on the second region. Alternatively, the multilayer video encoding apparatus 10 may perform the inter-layer prediction on the first region of the two regions split from the current block, and may perform the intra prediction on the second region.

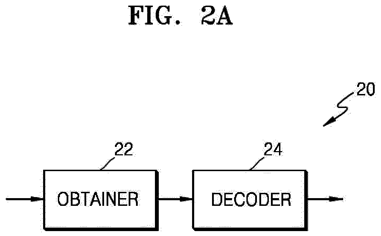

FIG. 2A is a block diagram of a multilayer video decoding apparatus, according to an embodiment.

Referring to FIG. 2A, a multilayer video decoding apparatus 20 may include an obtainer 22 and a decoder 24. However, the multilayer video decoding apparatus 20 may be embodied with more elements than the shown elements or may be embodied with fewer elements than the shown elements. Hereinafter, the elements are described below.

The multilayer video decoding apparatus 20 according to an embodiment may parse, from a bitstream, symbols according to layers.

The multilayer video decoding apparatus 20 based on spatial scalability may receive a stream in which image sequences having different resolutions are encoded in different layers. A first layer stream may be decoded to reconstruct an image sequence having a low resolution and a second layer stream may be decoded to reconstruct an image sequence having a high resolution.

As another example, a multiview video may be decoded according to a scalable video coding scheme. When a stereoscopic video stream is decoded to a plurality of layers, a first layer stream may be decoded to reconstruct left-view images. A second layer stream in addition to the first layer stream may be further decoded to reconstruct right-view images.

Alternatively, when a multiview video stream is decoded to a plurality of layers, a first layer stream may be decoded to reconstruct central-view images. A second layer stream in addition to the first layer stream may be further decoded to reconstruct left-view images. A third layer stream in addition to the first layer stream may be further decoded to reconstruct right-view images.

As another example, a scalable video coding method based on temporal scalability may be performed. A first layer stream may be decoded to reconstruct base frame rate images. A second layer stream may be further decoded to reconstruct high frame rate images.

Also, when there are at least three second layers, first layer images may be reconstructed from a first layer stream, and when a second layer stream is further decoded by referring to the reconstructed first layer images, second layer images may be further reconstructed. When a K-th layer stream is further decoded by referring to the reconstructed second layer images, K-th layer images may be further reconstructed.

The multilayer video decoding apparatus 20 may obtain encoded data of the first layer images and the second layer images from the first layer stream and the second layer stream, and in addition, may further obtain a motion vector generated through inter prediction and prediction information generated through inter-layer prediction.

For example, the multilayer video decoding apparatus 20 may decode inter-predicted data per layer, and may decode inter-layer predicted data between a plurality of layers. Reconstruction may be performed through motion compensation and inter-layer video decoding based on a coding unit or a prediction unit.

Images may be reconstructed by performing motion compensation for a current image by referencing reconstructed images predicted through inter prediction of a same layer, with respect to each layer stream. The motion compensation is an operation in which reconstructed images of the current image are reconfigured by synthesizing a reference image determined by using a motion vector of the current image and a residual component of the current image.

Also, the multilayer video decoding apparatus 20 may perform inter-layer video decoding by referring to prediction information of the first layer images so as to decode a second layer image predicted through inter-layer prediction. The inter-layer video decoding is an operation in which motion information of the current image is reconstructed by using prediction information of a reference block of a different layer so as to determine the motion information of the current image.

The multilayer video decoding apparatus 20 according to an embodiment may perform inter-layer video decoding for reconstructing third layer images predicted by using the second layer images. An inter-layer prediction structure will be described below with reference to FIG. 3A.

However, the decoder 24 according to an embodiment may decode the second layer stream without referring to the first layer image sequence. Accordingly, it should not be limitedly construed that the decoder 24 performs the inter-layer prediction to decode the second layer image sequence.

The multilayer video decoding apparatus 20 performs decoding according to blocks of each image of a video. A block may be, from among coding units according to a tree structure, a largest coding unit, a coding unit, a prediction unit, or a transformation unit.

The obtainer 22 may receive the bitstream, and may obtain information regarding an encoded image from the received bitstream.

The decoder 24 may decode the first layer image by using parsed encoding symbols of the first layer image. When the multilayer video decoding apparatus 20 receives streams encoded based on coding units of a tree structure, the decoder 24 may perform decoding based on the coding units of the tree structure, according to a largest coding unit of the first layer stream.

The decoder 24 may obtain encoding information and encoded data by performing entropy decoding per largest coding unit. The decoder 24 may reconstruct a residual component by performing inverse quantization and inverse transformation on the encoded data obtained from a stream. The decoder 24 according to another embodiment may directly receive a bitstream of quantized transformation coefficients. The residual component of images may be reconstructed by performing inverse quantization and inverse transformation on the quantized transformation coefficients.

The decoder 24 may determine a prediction image through motion compensation between same layer images, and may reconstruct the first layer images by combining the prediction image and the residual component.

According to the inter-layer prediction structure, the decoder 24 may generate a second layer prediction image by using samples of a reconstructed first layer image. The decoder 24 may obtain a prediction error according to inter-layer prediction by decoding a second layer stream. The decoder 24 may generate a reconstructed second layer image by combining the second layer prediction image and the prediction error.

The decoder 24 may determine the second layer prediction image by using the reconstructed first layer image decoded by the decoder 24. According to the inter-layer prediction structure, the decoder 24 may determine a block of a first layer image which is to be referenced by a coding unit or a prediction unit of a second layer image. For example, a reconstructed block of the first layer image which is co-located with a current block of the second layer image. The decoder 24 may determine a second layer prediction block by using the reconstructed first layer block corresponding to a second layer block. The decoder 24 may determine the second layer prediction block by using the reconstructed first layer block that is co-located with the second layer block.

The decoder 24 may use the second layer prediction block determined by using the reconstructed first layer block according to the inter-layer prediction structure, as a reference image for inter-layer prediction of a second layer original block. In this case, the decoder 24 may reconstruct the second layer block by synthesizing a sample value of the second layer prediction block determined by using the reconstructed first layer image and the residual component according to the inter-layer prediction.

The multilayer video decoding apparatus 20 may split a current block into a plurality of regions by using a depth block corresponding to the current block, and may encode the current block, based on the plurality of split regions.

The obtainer 22 obtains partitioning mode information of the current block. In this regard, the partitioning mode information may be size information regarding a partition that refers to a data unit split from a prediction unit. The partitioning mode information may be about partitioning modes indicating 2Nx2N, 2NxN, Nx2N, NxN, or the like. The partitioning mode information according to various embodiments may include information indicating symmetrical partitions that are obtained by symmetrically splitting a height or width of a prediction unit, partitions obtained by asymmetrically splitting the height or width of the prediction unit, such as 1:n or n:1, partitions that are obtained by geometrically splitting the prediction unit, partitions having arbitrary shapes, or the like.

When the partitioning mode information of the current block indicates one of preset partitioning modes, the obtainer 22 may obtain depth-based block partitioning information. The obtainer 22 may determine whether the partitioning mode information indicates one of the preset partitioning modes. The depth-based block partitioning information indicates whether the current block is to be split into a plurality of regions, based on the depth block corresponding to the current block. For example, the depth-based block partitioning information may indicate whether to split the current block into a first region and a second region, each having an arbitrary size, by referring to the depth block corresponding to the current block.

The decoder 24 may determine the depth block that corresponds to the current block. For example, the decoder 24 may obtain a disparity vector of the current block from a neighboring block, and may determine the depth block corresponding to the current block, based on the obtained disparity vector.

The decoder 24 may split the depth block corresponding to the current block into a plurality of regions, and may split the current block into a plurality of regions, based on the plurality of split regions of the depth block.

When the depth-based block partitioning information indicates that the current block is to be split into the plurality of regions, based on the depth block corresponding to the current block, the decoder 24 may split the current block into the plurality of regions, based on the plurality of split regions of the depth block.

In addition, when the depth-based block partitioning information indicates that the current block is not to be split into the plurality of regions, based on the depth block corresponding to the current block, the decoder 24 may split the current block into the plurality of regions, based on the partitioning mode information.

In order to split the depth block into the plurality of regions, the decoder 24 may determine a threshold value. The threshold value refers to a reference value with respect to the split when the depth block is split into the plurality of regions.

The decoder 24 may determine the threshold value by using the sample values of the depth block. For example, the decoder 24 may determine the threshold value by using one or more corner samples included in the depth block. The corner samples refer to a left-top sample, a left-bottom sample, a right-top sample, and a right-bottom sample in the depth block. The decoder 24 may determine an average value of sample values of the left-top sample, the left-bottom sample, the right-top sample, and the right-bottom sample to be the threshold value.

The decoder 24 may split the depth block into the plurality of regions by using the determined threshold value.

For example, the decoder 24 may split the depth block into a first region and a second region, wherein the first region is a region of samples having sample values each being greater than the threshold value, and the second region is a region of samples having sample values each being equal to or less than the threshold value.

The decoder 24 may split the current block into the plurality of regions, based on split shapes of the depth block corresponding to the current block. For example, if the depth block corresponding to the current block is split into the first region and the second region, the decoder 24 may split the current block into two regions by matching the first and second regions and the current block.

The decoder 24 may perform motion compensation on the current block by using the plurality of split regions.

For example, the decoder 24 may determine motion vectors respectively for the split two regions of the current block. The decoder 24 may determine reference blocks of the two regions by using the determined motion vectors, and may respectively perform motion compensation on the two regions by using the respective reference blocks, thereby decoding the current block.

The decoder 24 may perform inter-layer prediction on the current block by using the plurality of split regions. For example, the decoder 24 may determine disparity vectors respectively for the split two regions of the current block. The decoder 24 may determine reference blocks of the two regions by using the determined disparity vectors, respectively, and may respectively perform the inter-layer prediction on the two regions by using the respective reference blocks, thereby decoding the current block.

The decoder 24 may perform intra prediction on the current block by using the plurality of split regions. For example, the decoder 24 may perform the intra prediction on each of the split two regions of the current block.

The decoder 24 may perform a combination of at least two predictions from among the intra prediction, inter prediction, and the inter-layer prediction on the plurality of split regions. For example, the decoder 24 may perform the inter prediction on the first region of the split two regions, and may perform the inter-layer prediction on the second region. Alternatively, the decoder 24 may perform the inter-layer prediction on the first region of the split two regions, and may perform the intra prediction on the second region.

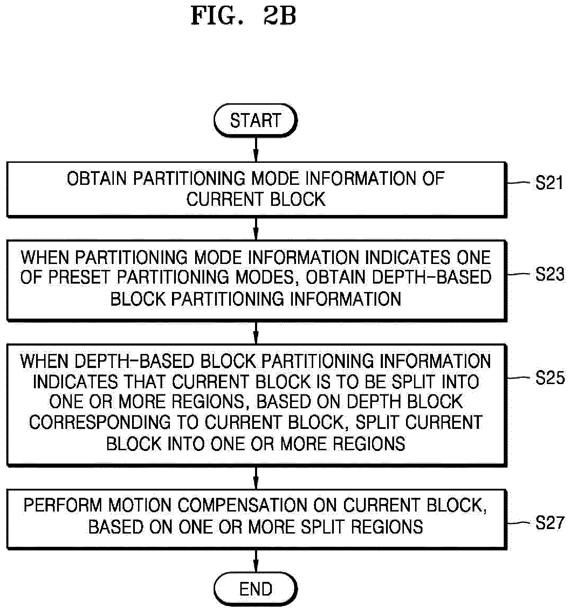

Hereinafter, various operations or applications performed by the multilayer video decoding apparatus 20 will now be described. In this regard, features that may be clearly understood and predicted by one of ordinary skill in the art to which this disclosure belongs may be considered as common implementations even if one of the obtainer 22 and the decoder 24 is not specified, and the scope of the present disclosure is not limited by a name or physical/logical structures of a particular configuration. Hereinafter, the operations performed by the multilayer video decoding apparatus 20 will now be described with reference to FIGS. 2B through 2D.

FIG. 2B is a flowchart of a multilayer video decoding method, according to an embodiment.

In operation S21, the multilayer video decoding apparatus 20 obtains partitioning mode information of a current block.

The partitioning mode information may be size information regarding a partition that refers to a data unit split from a prediction unit. The partitioning mode information may be about partitioning modes indicating 2Nx2N, 2NxN, Nx2N, NxN, or the like. The partitioning mode information according to various embodiments may include information indicating symmetrical partitions that are obtained by symmetrically splitting a height or width of a prediction unit, partitions obtained by asymmetrically splitting the height or width of the prediction unit, such as 1:n or n:1, partitions that are obtained by geometrically splitting the prediction unit, partitions having arbitrary shapes, or the like.

In operation S23, when the partitioning mode information indicates one of preset partitioning modes, the multilayer video decoding apparatus 20 may obtain depth-based block partitioning information.

In this regard, the preset partitioning modes may include at least one of a PART_2NxN mode and a PART_Nx2N mode. It is obvious to one of ordinary skill in the art the preset partitioning modes may include modes other than the aforementioned examples.

When the partitioning mode is the PART_2NxN mode or the PART_Nx2N mode, the multilayer video decoding apparatus 20 may obtain the depth-based block partitioning information. The depth-based block partitioning information may indicate whether the current block is split into a plurality of regions, based on a depth block corresponding to the current block.

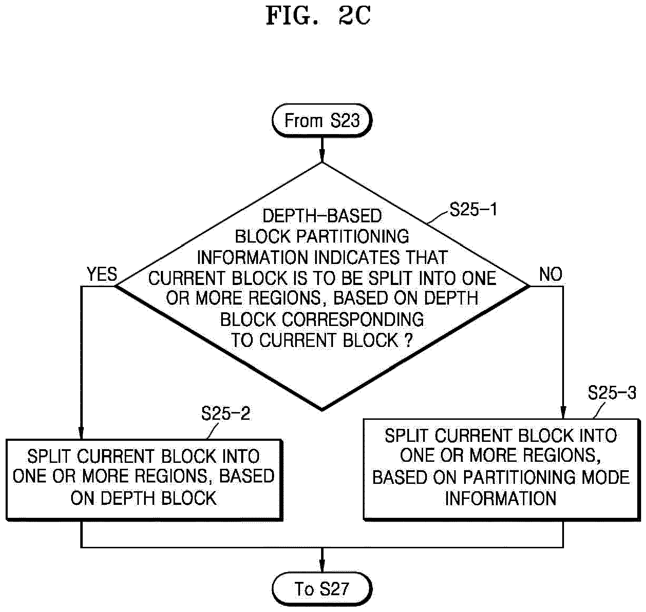

In operation S25, when the depth-based block partitioning information indicates that the current block is to be split into the plurality of regions, based on the depth block corresponding to the current block, the multilayer video decoding apparatus 20 may split the current block into the plurality of regions by referring to the depth block. FIG. 2C is a diagram for describing operation S25 that is related to a method of splitting the current block into the plurality of regions, the method being performed by the multilayer video decoding apparatus 20.

In operation S25-1, the multilayer video decoding apparatus 20 may determine whether the depth-based block partitioning information indicates that the current block is to be split into the plurality of regions, based on the depth block corresponding to the current block.

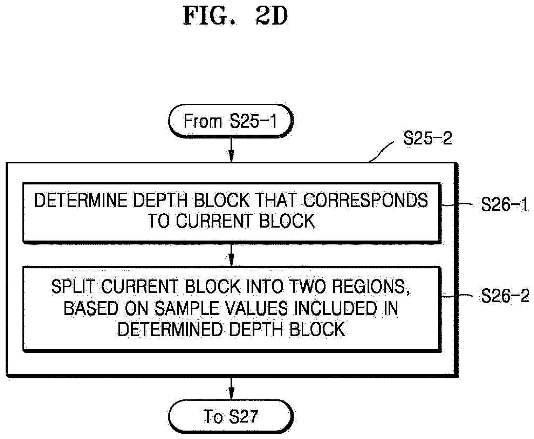

In operation S25-2, when the depth-based block partitioning information indicates that the current block is to be split into the plurality of regions, based on the depth block corresponding to the current block, the multilayer video decoding apparatus 20 may split the current block into the plurality of regions, based on the depth block. FIG. 2D is a diagram for describing operation S25-2 that is related to a method of splitting the current block into the plurality of regions, based on the depth block, the method being performed by the multilayer video decoding apparatus 20.

In operation S26-1, the multilayer video decoding apparatus 20 may determine the depth block that corresponds to the current block.

The multilayer video decoding apparatus 20 may obtain a disparity vector of the current block from a neighboring block adjacent to the current block. The multilayer video decoding apparatus 20 may derive the disparity vector of the current block by using a disparity vector of the neighboring block.

For example, the multilayer video decoding apparatus 20 may derive the disparity vector of the current block by applying a camera parameter to the disparity vector of the neighboring block.

In addition, the multilayer video decoding apparatus 20 may derive the disparity vector of the current block by applying a camera parameter to predetermined sample values included in a block indicated by the disparity vector of the neighboring block.

The aforementioned method is exemplary, and the multilayer video decoding apparatus 20 may obtain the disparity vector of the current block by using various methods without a limit to the aforementioned method.

The multilayer video decoding apparatus 20 may determine the depth block corresponding to the current block by using the disparity vector of the current block.

For example, the multilayer video decoding apparatus 20 may determine the depth block corresponding to the current block, wherein the depth block is indicated by the disparity vector of the current block from a location of the current block.

The multilayer video decoding apparatus 20 may determine the depth block corresponding to the current block in a depth image corresponding to a view equal to that of a current image. Alternatively, the multilayer video decoding apparatus 20 may determine the depth block corresponding to the current block in a depth image corresponding to a view different from that of the current image.

For example, when a current image including the current block is a left-view texture image, the multilayer video decoding apparatus 20 may determine the depth block corresponding to the current block in a left-view depth image.

Also, when a current image including the current block is a right-view texture image, the multilayer video decoding apparatus 20 may determine the depth block corresponding to the current block in a right-view depth image.

In operation S26-2, the multilayer video decoding apparatus 20 may split the current block into two regions, based on sample values included in the determined depth block.

The multilayer video decoding apparatus 20 may split the depth block corresponding to the current block into a plurality of regions, and may split the current block into a plurality of regions, based on the plurality of split regions of the depth block.

In order to split the current block into the plurality of regions, the multilayer video decoding apparatus 20 may split the depth block corresponding to the current block into the plurality of regions.

In order to split the depth block into the plurality of regions, the multilayer video decoding apparatus 20 may determine a threshold value. The threshold value refers to a reference value with respect to the split when the depth block is split into the plurality of regions.

The multilayer video decoding apparatus 20 may determine the threshold value by using sample values of the depth block. For example, the multilayer video decoding apparatus 20 may determine an average of the sample values, which are included in the depth block, to be the threshold value.

The multilayer video decoding apparatus 20 may determine the threshold value by using one or more corner samples included in the depth block. The corner samples refer to a left-top sample, a left-bottom sample, a right-top sample, and a right-bottom sample in the depth block.

For example, the multilayer video decoding apparatus 20 may determine an average of sample values of the left-top sample and the left-bottom sample in the depth block to be the threshold value. Alternatively, the multilayer video decoding apparatus 20 may determine an average of sample values of the left-top sample, the left-bottom sample, the right-top sample, and the right-bottom sample in the depth block to be the threshold value.

$$TH = (a + b + c + d) >> 2 \quad ---- \quad (1)$$

$$TH = (a + b + c + d + e) >> 2 ---- (2)$$

Also, the multilayer video decoding apparatus 20 may determine the threshold value by using Equation (1). a refers to a value of the left-top sample in the depth block, b refers to a value of the right-top sample in the depth block, c refers to a value of the left-bottom sample in the depth block, d refers to a value of the right-bottom sample in the depth block, and TH refers to the threshold value.

The multilayer video decoding apparatus 20 may obtain the threshold value by shifting a total sum of the left-top sample value, the left-bottom sample value, the right-top sample value, and the right-bottom sample value by 2 bits in a right direction by using Equation (1).

Also, the multilayer video decoding apparatus 20 may obtain, as the threshold value, an average of the left-top sample value, the left-bottom sample value, the right-top sample value, and the right-bottom sample value in the depth block.

Also, the multilayer video decoding apparatus 20 may determine the threshold value by using Equation (2). e refers to a compensation value. The multilayer video decoding apparatus 20 may obtain the threshold value by shifting a total sum of the left-top sample value, the left-bottom sample value, the right-top sample value, the right-bottom sample value, and the compensation value by 2 bits in a right direction. e may refer to a rounding offset value as the compensation value. The rounding offset value refers to a coefficient capable of being used to determine a level of rounding off of an average of the left-top sample value, the left-bottom sample value, the right-top sample value, and the right-bottom sample value. The multilayer video decoding apparatus 20 may split the depth block into the plurality of regions by using the determined threshold value.

For example, the multilayer video decoding apparatus 20 may split the depth block into a first region and a second region, wherein the first region is a region of samples having sample values each being equal to or greater than the threshold value, and the second region is a region of samples having sample values each being less than the threshold value. Alternatively, the multilayer video decoding apparatus 20 may split the depth block into a first region and a second region, wherein the first region is a region of samples having sample values each being greater than the threshold value, and the second region is a region of samples having sample values each being equal to or less than the threshold value.

Also, each of the plurality of split regions of the depth block may have an arbitrary shape. For example, when sample values in the depth block are asymmetrically distributed in the depth block, each of the plurality of split regions of the depth block may have an arbitrary shape.

The multilayer video decoding apparatus 20 may split the current block into the plurality of regions, based on split shapes of the depth block corresponding to the current block. For example, if the depth block corresponding to the current block is split into the first region and the second region, the multilayer video decoding apparatus 20 may split the current block into two regions by matching the first and second regions and the current block.

For example, the multilayer video decoding apparatus 20 may split the current block into a region of samples in the current block and another region of samples in the current block, wherein the samples in the region correspond to locations of samples included in the first region of the depth block, and the samples in the other region correspond to locations of samples included in the second region of the depth block.

Also, the multilayer video decoding apparatus 20 may split the current block into two regions by matching the current block and a boundary between the first and second regions of the depth block.

Also, the multilayer video decoding apparatus 20 may generate a split map by using the first region and the second region of the depth block, and may split the current block into two regions by matching the generated split map and the current block.

Also, each of the plurality of split regions of the current block may have an arbitrary shape. For example, when the sample values in the depth block are asymmetrically distributed in the depth block, each of the plurality of split regions of the depth block may have an arbitrary shape, and the multilayer video decoding apparatus 20 may match the plurality of split regions of the depth block and the current block, thereby splitting the current block into a plurality of regions, each having an asymmetrical shape.

In operation S25-3, when the depth-based block partitioning information indicates that the current block is not to be split into the plurality of regions, based on the depth block corresponding to the current block, the multilayer video decoding apparatus 20 may split the current block into the plurality of regions, based on the partitioning mode information.

In operation S27, the multilayer video decoding apparatus 20 performs motion compensation on the current block, based on the plurality of split regions.

The multilayer video decoding apparatus 20 may perform the motion compensation on the current block by using the plurality of regions split from the current block.

For example, the multilayer video decoding apparatus 20 may determine motion vectors respectively for the two split regions of the current block. Then, the multilayer video decoding apparatus 20 may determine reference blocks of the two regions, respectively, by using the determined motion vectors, and may respectively perform the motion compensation on the regions by using the respective reference blocks, thereby decoding the current block.

The multilayer video decoding apparatus 20 may perform inter-layer prediction on the current block by using the plurality of regions split from the current block.

For example, the multilayer video decoding apparatus 20 may determine disparity vectors respectively for the two split regions of the current block. Then, the multilayer video decoding apparatus 20 may determine reference blocks of the two regions, respectively, by using the determined disparity vectors, and may respectively perform the inter-layer prediction on the regions by using the respective reference blocks, thereby decoding the current block.

The multilayer video decoding apparatus 20 may perform intra prediction on the current block by using the plurality of regions split from the current block. For example, the multilayer video decoding apparatus 20 may perform the intra prediction on each of the split two regions of the current block.

The multilayer video decoding apparatus 20 may perform a combination of at least two predictions from among the intra prediction, inter prediction, and the inter-layer prediction on the plurality of regions split from the current block. For example, the multilayer video decoding apparatus 20 may perform the inter prediction on the first region of the split two regions, and may perform the inter-layer prediction on the second region. Alternatively, the decoding apparatus 20 may perform the inter-layer prediction on the first region of the split two regions, and may perform the intra prediction on the second region.

FIG. 3A is a diagram of an inter-layer prediction structure, according to an embodiment.

The multilayer video encoding apparatus 10 according to an embodiment may prediction-encode base-view images, left-view images, and right-view images according to a reproduction order 50 of a multiview video prediction structure of FIG. 3A.

According to an embodiment, the base-view images, the left-view images, and the right-view images may respectively correspond to images of different layers. For example, a base view may correspond to a first layer, a left view may correspond to a second layer, and a right view may correspond to a third layer.

According to the reproduction order 50 of the multiview video prediction structure according to a related technology, images corresponding to a same view are arranged in a horizontal direction. Accordingly, the left-view images indicated by 'Left' are arranged in the horizontal direction in a row, the base-view images indicated by 'Center' are arranged in the horizontal direction in a row, and the right-view images indicated by 'Right' are arranged in the horizontal direction in a row. Compared to the left/right-view images, the base-view images may be central-view images.

Also, images having a same picture order count (POC) order are arranged in a vertical direction. A POC order of images indicates a reproduction order of images forming a video. 'POC X' indicated in the reproduction order 50 of the multiview video prediction structure indicates a relative reproduction order of images in a corresponding column, wherein a reproduction order is in front when a value of X is low, and is behind when the value of X is high.

Thus, according to the reproduction order 50 of the multiview video prediction structure according to the related technology, the left-view images indicated by 'Left' are arranged in the horizontal direction according to the POC order (reproduction order), the base-view images indicated by 'Center' are arranged in the horizontal direction according to the POC order (reproduction order), and the right-view images indicated by 'Right' are arranged in the horizontal direction according to the POC order (reproduction order). Also, the left-view image and the right-view image located on the same column as the base-view image have different views but the same POC order (reproduction order).

Four consecutive images form one group of pictures (GOP) according to views. Each GOP includes images between consecutive anchor pictures, and one anchor picture (key picture).

An anchor picture is a random access point, and when a reproduction location is arbitrarily selected from images arranged according to a reproduction order, i.e., a POC order, while reproducing a video, an anchor picture closest to the reproduction location according to the POC order is reproduced. The base-layer images include base-layer anchor pictures 51, 52, 53, 54, and 55, the left-view images include left-view anchor pictures 131, 132, 133, 134, and 135, and the right-view images include right-view anchor pictures 231, 232, 233, 234, and 235.

Multiview images may be reproduced and predicted (reconstructed) according to a GOP order. First, according to the reproduction order 50 of the multiview video prediction structure, images included in GOP 0 may be reproduced, and then images included in GOP 1 may be reproduced, according to views. That is, images included in each GOP may be reproduced in an order of GOP 0, GOP 1, GOP 2, and GOP 3. Also, according to a coding order of the multiview video prediction structure, the images included in GOP 0 may be predicted (reconstructed), and then the images included in GOP 1 may be predicted (reconstructed), according to views. That is, the images included in each GOP may be predicted (reconstructed) in an order of GOP 0, GOP 1, GOP 2, and GOP 3.

According to the reproduction order 50 of the multiview video prediction structure, inter-view prediction (inter-layer prediction) and inter prediction are all performed on images. In the multiview video prediction structure, an image where an arrow starts is a reference image, and an image where an arrow ends is an image predicted by using a reference image.

A prediction result of base-view images may be encoded and then output in a form of a base-view image stream, and a prediction result of additional view images may be encoded and then output in a form of a layer bitstream. Also, a prediction encoding result of left-view images may be output as a first layer bitstream, and a prediction encoding result of right-view images may be output as a second layer bitstream.

Only inter-prediction is performed on base-view images. That is, the base-layer anchor pictures 51, 52, 53, 54, and 55 of an I-picture type do not refer to other images, but remaining images of a B-picture type and a b-picture type are predicted by referring to other base-view images. Images of a B-picture type are predicted by referring to an anchor picture of an I-picture type, which precedes the images of a B-picture type according to a POC order, and a following anchor picture of an I-picture type. Images of a b-picture type are predicted by referring to an anchor picture of an I-type, which precedes the image of a b-picture type according a POC order, and a following image of a B-picture type, or by referring to an image of a B-picture type, which precedes the images of a b-picture type according to a POC order, and a following anchor picture of an I-picture type.

Inter-view prediction (inter-layer prediction) that references different view images, and inter prediction that references same view images are performed on each of left-view images and right-view images.

Inter-view prediction (inter-layer prediction) may be performed on the left-view anchor pictures 131, 132, 133, 134, and 135 by respectively referring to the base-view anchor pictures 51, 52, 53, 54, and 55 having the same POC order. Inter-view prediction may be performed on the right-view anchor pictures 231, 232, 233, 234, and 235 by respectively referring to the base-view anchor pictures 51, 52, 53, 54, and 55 or the left-view anchor pictures 131, 132, 133, 134, and 135 having the same POC order. Also, inter-view prediction (inter-layer prediction) may be performed on remaining images other than the left-view images 131, 132, 133, 134, and 135 and the right-view images 231, 232, 233, 234, and 235 by referring to other view images having the same POC.

Remaining images other than the anchor pictures 131, 132, 133, 134, 135, 231, 232, 233, 234, and 235 from among left-view images and right-view images are predicted by referring to the same view images.

However, each of the left-view images and the right-view images may not be predicted by referring to an anchor picture that has a preceding reproduction order from among additional view images of the same view. That is, in order to perform inter prediction on a current left-view image, left-view images excluding a left-view anchor picture that precedes the current left-view image in a reproduction order may be referenced. Equally, in order to perform inter prediction on a current right-view image, right-view images excluding a right-view anchor picture that precedes the current right-view image in a reproduction order may be referenced.

Also, in order to perform inter prediction on a current left-view image, prediction may be performed by referring to a left-view image that belongs to a current GOP but is to be reconstructed before the current left-view image, instead of referring to a left-view image that belongs to a GOP before the current GOP of the current left-view image. The same is applied to a right-view image.

The multilayer video decoding apparatus 20 may reconstruct base-view images, left-view images, and right-view images according to the reproduction order 50 of the multiview video prediction structure of FIG. 3A.

Left-view images may be reconstructed via inter-view disparity compensation that references base-view images and inter motion compensation that references left-view images. Right-view images may be reconstructed via inter-view disparity compensation that references base-view images and left-view images, and inter motion compensation that references right-view images. Reference images may be first reconstructed for disparity compensation and motion compensation of left-view images and right-view images.

For inter motion compensation with respect to a left-view image, left-view images may be reconstructed through inter motion compensation that references a reconstructed left-view reference image. For inter motion compensation with respect to a right-view image, right-view images may be reconstructed through inter motion compensation that references a reconstructed right-view reference image.

Also, for inter motion compensation with respect to a current left-view image, only a left-view image that belongs to a current GOP of the current left-view image but is to be reconstructed before the current left-view image may be referenced, and a left-view image that belongs to a GOP before the current GOP is not referenced. The same is applied to a right-view image.

Also, the multilayer video decoding apparatus 20 according to an embodiment may not only perform disparity compensation (or inter-layer prediction compensation) to encode or decode a multiview image, but may also perform motion compensation between images (or inter-layer motion prediction) through inter-view motion vector prediction.

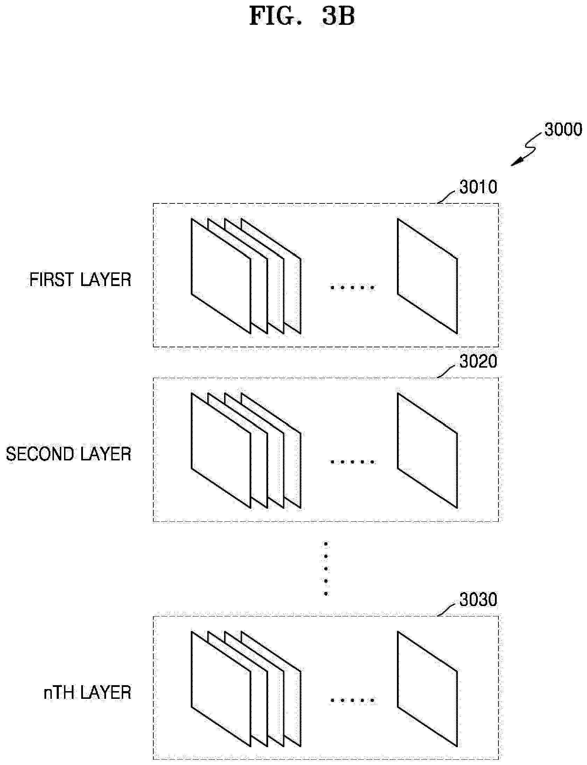

FIG. 3B illustrates a multilayer video according to an embodiment.

In order to provide an optimum service in various network environments and various terminals, the multilayer video encoding apparatus 10 may output a scalable bitstream by encoding multilayer image sequences having various spatial resolutions, various qualities, various frame rates, and different views. That is, the multilayer video encoding apparatus 10 may generate and output a scalable video bitstream by encoding an input image according to various scalability types. Scalability includes temporal, spatial, quality, and multiview scalabilities, and a combination thereof. Such scalabilities may be classified according to types. Also, the scalabilities may be classified as a dimension identifier in each type.

For example, the scalability has the same scalability type as the temporal, spatial, quality, and multiview scalability. Also, the scalability may be classified into a scalability dimension identifier according to types. For example, when scalabilities are different, the scalabilities may have different dimension identifiers. For example, a high scalability dimension may be assigned to a high-dimensional scalability with respect to the scalability type.

When a bitstream is dividable into valid substreams, the bitstream is scalable. A spatially-scalable bitstream includes substreams of various resolutions. In order to distinguish different scalabilities in the same scalability type, a scalability dimension is used. The scalability dimension may be expressed by a scalability dimension identifier.

For example, the spatially-scalable bitstream may be divided into substreams having different resolutions, such as a quarter video graphics array (QVGA), a video graphics array (VGA), a wide video graphics array (WVGA), or the like. For example, layers having different resolutions may be distinguished by using a dimension identifier. For example, the QVGA substream may have 0 as a spatial scalability dimension identifier value, the VGA substream may have 1 as a spatial scalability dimension identifier value, and the WVGA substream may have 2 as a spatial scalability dimension identifier value.

A temporally-scalable bitstream includes substreams having various frame rates. For example, the temporally-scalable bitstream may be divided into substreams having a frame rate of 7.5 Hz, a frame rate of 15 Hz, a frame rate of 30 Hz, and a frame rate of 60 Hz. A quality scalable bitstream may be divided into substreams having different qualities according to a coarse-grained scalability (CGS) method, a medium-grained scalability (MGS) method, and a fine-grained scalability (FGS) method. The temporal scalability may also be distinguished according to different dimensions according to different frame rates, and the quality scalability may also be distinguished according to different dimensions according to different methods.

A multiview scalable bitstream includes substreams of different views in one bitstream. For example, in a stereoscopic image, a bitstream includes a left image and a right image. Also, a scalable bitstream may include substreams related to a multiview image and encoded data of a depth map. The viewpoint scalability may also be distinguished according to different dimensions according to different views.

Different scalable expansion types may be combined with each other. That is, a scalable video bitstream may include substreams in which image sequences of a multilayer including images, wherein at least one of temporal, spatial, quality, and multiview scalabilities are different from each other, are encoded.

FIG. 3B illustrates image sequences 3010, 3020, and 3030 having different scalable expansion types. The image sequence 3010 of a first layer, the image sequence 3020 of a second layer, and the image sequence 3030 of an n-th layer (n is an integer) may be image sequences in which at least one of a resolution, a quality, and a view are different from each other. Also, one of the image sequence 3010 of the first layer, the image sequence 3020 of the second layer, and the image sequence 3030 of the n-th layer may be an image sequence of a base layer and the other image sequences may be image sequences of an enhancement layer.

For example, the image sequence 3010 of the first layer may include first-view images, the image sequence 3020 of the second layer may include second-view images, and the image sequence 3030 of the n-th layer may include n-th view images. As another example, the image sequence 3010 of the first layer may be a left-view image of a base layer, the image sequence 3020 of the second layer may be a right-view image of the base layer, and the image sequence 3030 of the n-th layer may be a right-view image of an enhancement layer. However, the preset disclosure is not limited to the aforementioned embodiment, and the image sequences 3010, 3020, and 3030 having different scalable expansion types may be image sequences having different image attributes.

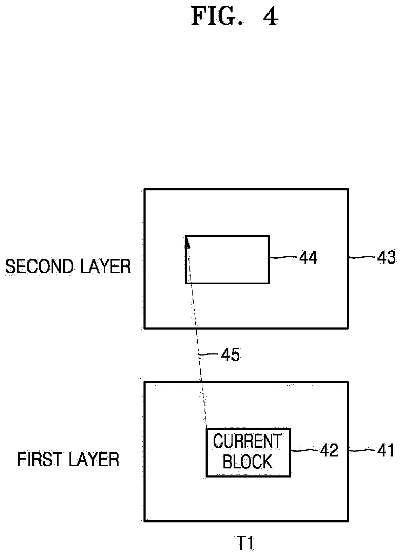

FIG. 4 is a diagram for describing a method of determining a depth block corresponding to a current block, the method being performed by a multilayer video decoding apparatus, according to an embodiment.

The multilayer video decoding apparatus 20 may obtain a disparity vector 45 of a current block 42.

For example, the multilayer video decoding apparatus 20 may obtain, as the disparity vector 45 of the current block 42, a disparity vector that is the same as a disparity vector of a neighboring block adjacent to the current block 42.

Also, the multilayer video decoding apparatus 20 may derive the disparity vector 45 of the current block 42 by using the disparity vector of the neighboring block.

For example, the multilayer video decoding apparatus 20 may derive the disparity vector 45 of the current block 42 by applying a camera parameter to the disparity vector of the neighboring block.

In addition, the multilayer video decoding apparatus 20 may derive the disparity vector 45 of the current block 42 by applying a camera parameter to predetermined sample values included in a block indicated by the disparity vector of the neighboring block.

The aforementioned method is exemplary, and the multilayer video decoding apparatus 20 may obtain the disparity vector 45 of the current block 42 by using various methods without a limit to the aforementioned method.

The multilayer video decoding apparatus 20 may search for, by using the disparity vector 45, a block 44 that corresponds to the current block 42 of a first layer.

For example, the multilayer video decoding apparatus 20 may detect the second layer block 44 corresponding to the current block 42 by using a location of the current block 42 and the disparity vector 45, wherein the second layer block 44 is present in a second layer picture 43 corresponding to a current picture 41.

The second layer picture 43 may be a depth image corresponding to a view equal to that of the first layer. For example, when the first layer picture 41 is a left-view texture picture, the second layer picture 43 may be a left-view depth picture.

Also, the second layer picture 43 may be a depth image corresponding to a view different from that of the first layer. For example, when the first layer picture 41 is the left-view texture picture, the second layer picture 43 may be a right-view depth picture.

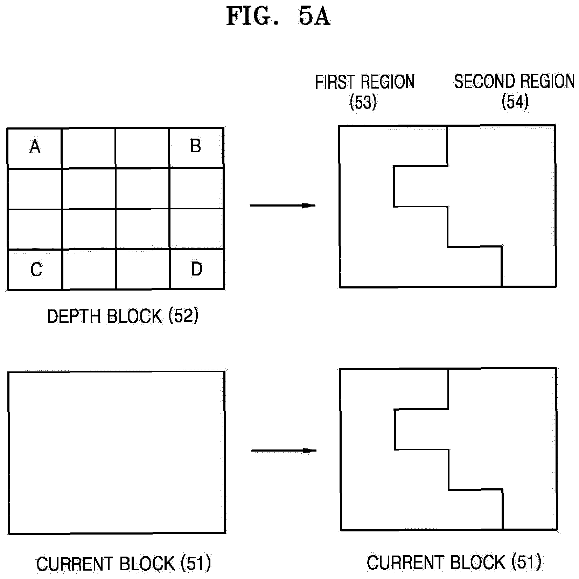

FIG. 5A is a diagram for describing a method of splitting a current block into two regions, the method being performed by a multilayer video decoding apparatus, according to an embodiment.

The multilayer video decoding apparatus 20 may split a depth block 52 into a plurality of regions, the depth block 52 corresponding to a current block 51, and may split the current block 51 into a plurality of regions, based on the plurality of split regions of the depth block 52.

In order to split the current block 51 into the plurality of regions, the multilayer video decoding apparatus 20 may split the depth block 52 corresponding to the current block 51 into the plurality of regions.

In order to split the depth block 52 into the plurality of regions, the multilayer video decoding apparatus 20 may determine a threshold value. The threshold value refers to a reference value with respect to the split when the depth block 52 is split into the plurality of regions.

The multilayer video decoding apparatus 20 may determine the threshold value by using sample values of the depth block 52. For example, the multilayer video decoding apparatus 20 may determine an average of the sample values, which are included in the depth block 52, to be the threshold value.

The multilayer video decoding apparatus 20 may determine the threshold value by using one or more corner samples included in the depth block 52. The corner samples refer to a left-top sample A, a left-bottom sample C, a right-top sample B, and a right-bottom sample D in the depth block 52. For example, the multilayer video decoding apparatus 20 may determine an average of sample values of the left-top sample A, the left-bottom sample C, the right-top sample B, and the right-bottom sample D in the depth block 52 to be the threshold value.

$$TH = (a + b + c + d) >> 2 \quad ---- \quad (1)$$

$$TH = (a + b + c + d + e) >> 2 ---- (2)$$

Also, the multilayer video decoding apparatus 20 may determine the threshold value by using Equation (1). a refers to a left-top sample value in the depth block 52, b refers to a right-top sample value in the depth block 52, c refers to a left-bottom sample value in the depth block 52, d refers to a right-bottom sample value in the depth block 52, and TH refers to the threshold value.

The multilayer video decoding apparatus 20 may obtain the threshold value by shifting a total sum of the left-top sample value, the left-bottom sample value, the right-top sample value, and the right-bottom sample value by 2 bits in a right direction by using Equation (1).

Also, the multilayer video decoding apparatus 20 may obtain, as the threshold value, an average of the left-top sample value, the left-bottom sample value, the right-top sample value, and the right-bottom sample value.

Also, the multilayer video decoding apparatus 20 may determine the threshold value by using Equation (2). e refers to a compensation value. The multilayer video decoding apparatus 20 may obtain the threshold value by shifting a total sum of the left-top sample value, the left-bottom sample value, the right-top sample value, the right-bottom sample value, and the compensation value by 2 bits in a right direction. e may refer to a rounding offset value as the compensation value. The rounding offset value refers to a coefficient capable of being used to determine a level of rounding off of an average of the left-top sample value, the left-bottom sample value, the right-top sample value, and the right-bottom sample value.

Referring to FIG. 5A, the multilayer video decoding apparatus 20 may split the depth block 52 into a first region 53 and a second region 54, wherein the first region 53 is a region of samples having sample values each being greater than the threshold value, and the second region 54 is a region of samples having sample values each being equal to or less than the threshold value.

The multilayer video decoding apparatus 20 may split the current block 51 into a plurality of regions, based on split shapes of the depth block 52 corresponding to the current block 51.

Referring to FIG. 5A, when the depth block 52 corresponding to the current block 51 is split into the first region 53 and the second region 54, the multilayer video decoding apparatus 20 may split the current block 51 into two regions by matching the first and second regions 53 and 54 and the current block 51.

For example, the multilayer video decoding apparatus 20 may generate a split map by using the first region 53 and the second region 54 of the depth block 52, and may split the current block 51 into two regions by matching the generated split map and the current block 51.

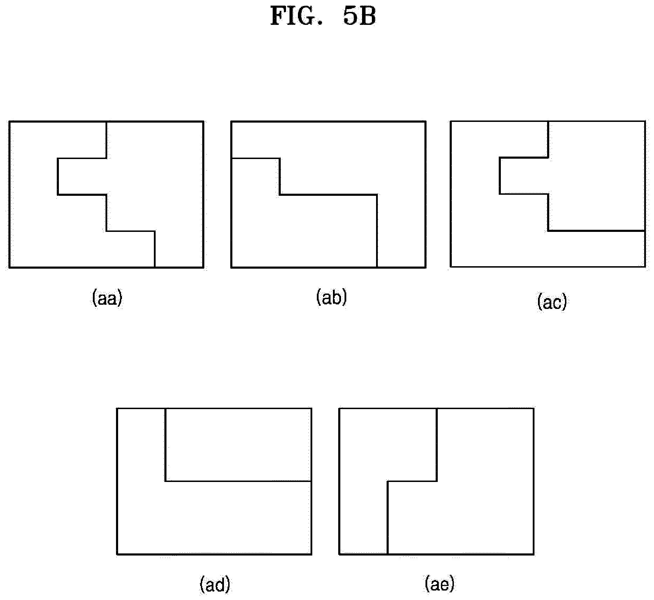

FIG. 5B illustrates examples of a current block that is split into two regions, according to an embodiment.

According to various embodiments, each of a plurality of split regions of the current block may have an arbitrary shape.

For example, when sample values in a depth block are asymmetrically distributed in the depth block, each of a plurality of split regions of the depth block may have an arbitrary shape, and the multilayer video decoding apparatus 20 may match the plurality of split regions of the depth block and the current block, thereby splitting the current block into a plurality of regions, each having an asymmetrical shape.

Examples aa, ab, ac, ad, and ae of FIG. 5B are current blocks, each of which is split by the multilayer video decoding apparatus 20 into two blocks having arbitrary shapes. The multilayer video decoding apparatus 20 may split the current block into a plurality of regions having various shapes that are not limited to the examples.

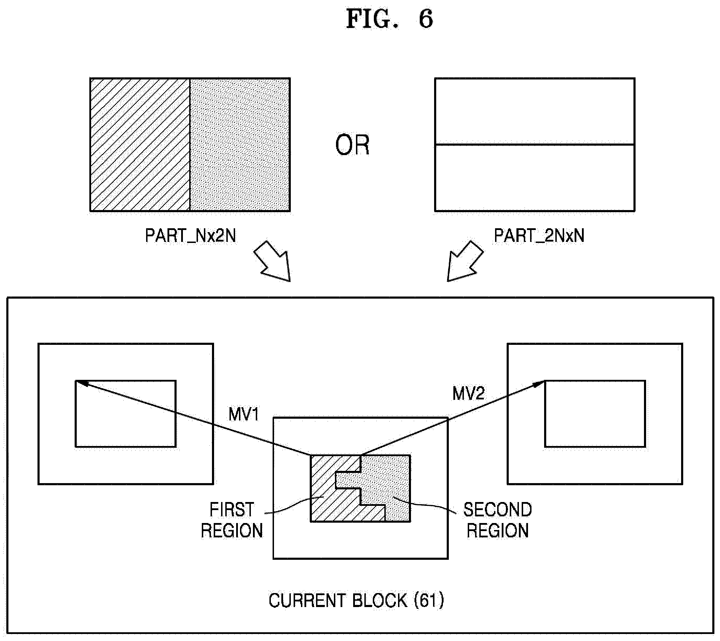

FIG. 6 is a diagram for describing a method of splitting a current block by using a depth block corresponding to the current block, and determining motion vectors for split regions, when a partitioning mode of the current block is a PART_2NxN mode or a PART_Nx2N mode.

The multilayer video decoding apparatus 20 may obtain partitioning mode information of the current block. When the obtained partitioning mode information indicates one of the PART_2NxN mode and the PART_Nx2N mode, the multilayer video decoding apparatus 20 may obtain depth-based block partitioning information.

When the depth-based block partitioning information indicates that the current block is to be split into a plurality of regions, based on the depth block corresponding to the current block, the multilayer video decoding apparatus 20 may split the current block into the plurality of regions, based on the depth block.

The multilayer video decoding apparatus 20 may perform motion compensation on the current block by using the plurality of split regions.

For example, the multilayer video decoding apparatus 20 may determine motion vectors respectively for split two regions of the current block. The multilayer video decoding apparatus 20 may determine a first motion vector MV1 for a first region of the current block, and may determine a second motion vector MV2 for a second region.

Also, the multilayer video decoding apparatus 20 may determine reference blocks of the two regions by using the determined motion vectors, and may respectively perform the motion compensation on the two regions by using the respective

The multilayer video decoding apparatus 20 may determine a partition mode of the current block. For example, the multilayer video decoding apparatus 20 may determine the partition mode of the current block, based on information obtained from a bitstream. Also, the multilayer video decoding apparatus 20 may determine the partition mode of the current block, based on sample values of the depth block corresponding to the current block.

The multilayer video decoding apparatus 20 may determine motion vectors respectively for partitions of the determined partition mode by using the motion vectors MV1 and MV2 used in decoding.

For example, when the multilayer video decoding apparatus 20 determines that the partition mode of the current block is PART_Nx2N, the multilayer video decoding apparatus 20 may determine the motion vector MV1 of the first region including a left-top sample to be a motion vector for a left partition of the current block, and may determine the motion vector MV2 of the second region in the current block to be a motion vector for a right partition of the current block.

The aforementioned method is exemplary, and the multilayer video decoding apparatus 20 may determine respective motion vectors for respective partitions of the determined partition mode by variously using motion vectors of a plurality of split regions of the current block.

The multilayer video decoding apparatus 20 may store motion vectors determined based on a partition mode of the current block. For example, when the partition mode of the current block is PART_Nx2N, the multilayer video decoding apparatus 20 may store a motion vector of a left partition in the current block and a motion vector of a right partition. Also, the multilayer video decoding apparatus 20 may decode blocks to be decoded at a later time in a decoding order, by using the stored motion vectors.

Also, when the current block refers to a block of a layer different from a current layer, MV1 and MV2 may denote disparity vectors. In this case, a left partition and a right partition of the current block may be determined by using MV1 and MV2.

The method has been described with respect to the multilayer video decoding apparatus 20 and may also be applied to the multilayer video encoding apparatus 10.

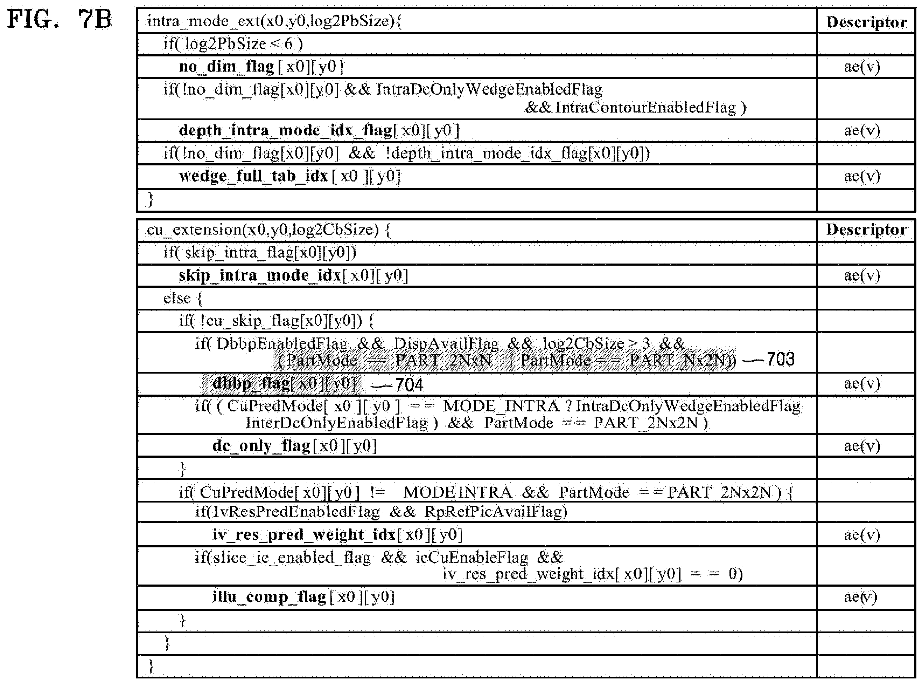

FIGS. 7A and 7B are diagrams for describing whether to obtain depth-based block partitioning information according to partitioning mode information of a current block, according to an embodiment.

The multilayer video decoding apparatus 20 obtains the partitioning mode information of the current block, and determines if the partitioning mode information of the current block indicates one of preset partitioning modes. Here, the preset partitioning modes may include at least one of a PART_2NxN mode and a PART_Nx2N mode (701 and 703).

When the partitioning mode information of the current block indicates one of the preset partitioning modes, the multilayer video decoding apparatus 20 obtains the depth-based block partitioning information. That is, when the partitioning mode information of the current block indicates at least one of the PART_2NxN mode and the PART_Nx2N mode, the multilayer video decoding apparatus 20 obtains the depth-based block partitioning information (702 and 704). In this regard, the depth-based block partitioning information indicates whether the current block is to be split into a plurality of regions, based on a depth block corresponding to the current block.

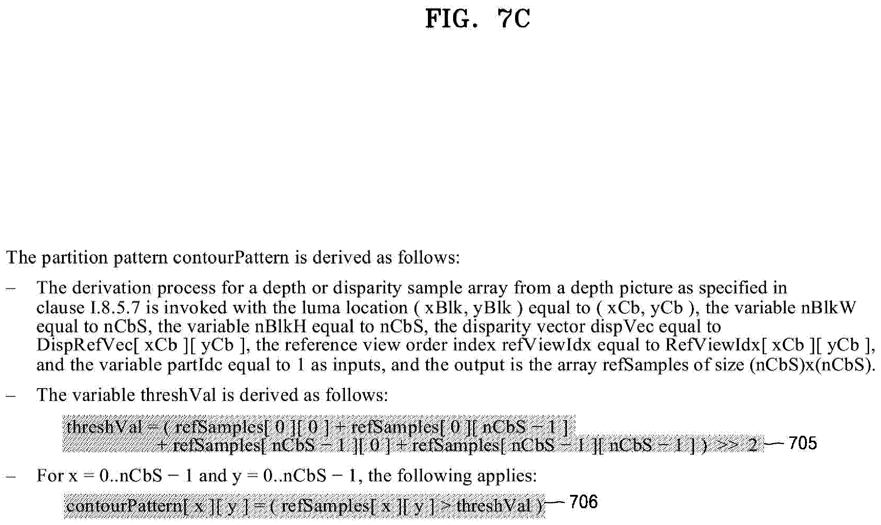

FIG. 7C is a diagram for describing a method of using corner pixels of a depth block when a current block is split, according to an embodiment.

In order to split the current block into a plurality of regions, the multilayer video decoding apparatus 20 may split a depth block, which corresponds to the current block, into a plurality of regions.

In order to split the depth block corresponding to the current block into the plurality of regions, the multilayer video decoding apparatus 20 may determine a threshold value. The threshold value refers to a reference value with respect to the split when the depth block is split into the plurality of regions.

The multilayer video decoding apparatus 20 may determine the threshold value by using one or more corner samples included in the depth block. The corner samples refer to a left-top sample, a left-bottom sample, a right-top sample, and a right-bottom sample in the depth block.

For example, the multilayer video decoding apparatus 20 may determine the threshold value by using a sample value refSamples[0][0] of a left-top sample in the depth block, a sample value refSamples[0][nCbS-1] of a left-bottom sample in the depth block, a sample value refSamples[nCbS-1][0] of a right-top sample in the depth block, and a sample value refSamples[nCbS-1][nCbS-1] of a right-bottom sample in the depth block.

The multilayer video decoding apparatus 20 may determine the threshold value by using an average value of the sample value refSamples[0][0] of the left-top sample in the depth block, the sample value refSamples[0][nCbS-1] of the left-bottom sample in the depth block, the sample value refSamples[nCbS-1][0] of the right-top sample in the depth block, and the sample value refSamples[nCbS-1][nCbS-1] of the right-bottom sample in the depth block.

The multilayer video decoding apparatus 20 may obtain the threshold value by performing an add operation on the sample value refSamples[0][0] of the left-top sample in the depth block, the sample value refSamples[0][nCbS-1] of the left-bottom sample in the depth block, the sample value refSamples[nCbS-1][0] of the right-top sample in the depth block, and the sample value refSamples[nCbS-1][nCbS-1] of the right-bottom sample in the depth block, and by shifting a result of the add operation by 2 bits in a right direction (705).

The multilayer video decoding apparatus 20 may split the depth block into two regions by using the determined threshold value threshVal.

For example, the multilayer video decoding apparatus 20 may determine a region of the depth block to be a first region contourPattern[x][y], wherein the region includes samples of which sample values refSamples[x][y] are greater than the threshold value threshVal (706).

Also, the multilayer video decoding apparatus 20 may determine a region of the depth block to be a second region, wherein the region includes samples of which sample values refSamples[x][y] are equal to or less than the threshold value threshVal.

The multilayer video decoding apparatus 20 may split the current block into a plurality of regions by matching the first region contourPattern[x][y] and the second region, and the current block.

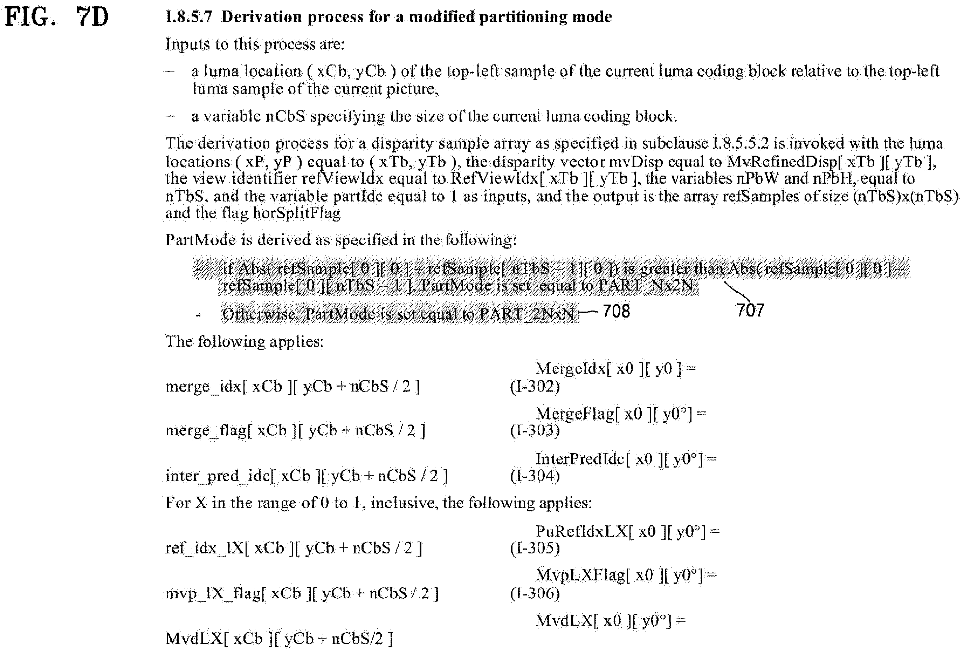

FIG. 7D is a diagram for describing a method of determining partitioning mode information of a current block, according to an embodiment.

The multilayer video decoding apparatus 20 may obtain the partitioning mode information of the current block. The partitioning mode information of the current block may be determined by using one or more corner samples included in a depth block.

For example, the partitioning mode information of the current block may be determined by using a sample value refSamples[0][0] of a left-top sample in the depth block, a sample value refSamples[nCbS-1][0] of a right-top sample in the depth block, and a sample value refSamples[0][nCbS-1] of a left-bottom sample in the depth block.

When a value of a difference between the sample value refSamples[0][0] of the left-top sample and the sample value refSamples[nCbS-1][0] of the right-top sample in the depth block is greater than a value of a difference between the sample value refSamples[0][0] of the left-top sample and the sample value refSamples[0][nCbS-1] of the left-bottom sample in the depth block, the partitioning mode information of the current block may be determined to be a PART_Nx2N mode (707).

When the value of the difference between the sample value refSamples[0][0] of the left-top sample and the sample value refSamples[nCbS-1][0] of the right-top sample in the depth block is not greater than the value of the difference between the sample value refSamples[0][0] of the left-top sample and the sample value refSamples[0][nCbS-1] of the left-bottom sample in the depth block, the partitioning mode information of the current block may be determined to be a PART_2NxN mode (708).

As described above, the multilayer video encoding apparatus 10 according to various embodiments and the multilayer video decoding apparatus 20 according to various embodiments may spilt blocks of video data into coding units having a tree structure, and coding units, prediction units, and transformation units may be used for inter-layer prediction or inter prediction of coding units. Hereinafter, with reference to FIGS. 8 through 20, a video encoding method, a video encoding apparatus, a video decoding method, and a video decoding apparatus based on coding units having a tree structure and transformation units according to various embodiments will be described.

In principle, during encoding and decoding processes for a multilayer video, encoding and decoding processes for first layer images and encoding and decoding processes for second layer images are separately performed. That is, when inter-layer prediction is performed on a multilayer video, encoding and decoding results with respect to single-layer videos may be mutually referred to, but separate encoding and decoding processes are performed on the single-layer videos.

Accordingly, since video encoding and decoding processes based on coding units having a tree structure as described below with reference to FIGS. 8 through 20 for convenience of description are video encoding and decoding processes for processing a single-layer video, only inter prediction and motion compensation are performed. However, as described above with reference to FIGS. 1A through 7D, in order to encode and decode a video stream, inter-layer prediction and compensation are performed on base view images and second layer images.

Accordingly, in order for the encoder 12 of the multilayer video encoding apparatus 10 according to various embodiments to encode a multilayer video based on coding units having a tree structure, the multilayer video encoding apparatus 10 may include as many video encoding apparatuses 800 of FIG. 8 as the number of layers of the multilayer video so as to perform video encoding according to each single-layer video, thereby controlling each video encoding apparatus 800 to encode an assigned single-layer video. Also, the multilayer video encoding apparatus 10 may perform inter-view prediction by using encoding results of individual single viewpoints of each video encoding apparatus 800. Accordingly, the encoder 12 of the multilayer video encoding apparatus 10 may generate a base view video stream and a second layer video stream, which include encoding results according to layers.

Similarly, in order for the decoder 24 of the multilayer video decoding apparatus 20 according to various embodiments to decode a multilayer video based on coding units having a tree structure, the multilayer video decoding apparatus 20 may include as many video decoding apparatuses 900 of FIG. 9 as the number of layers of the multilayer video so as to perform video decoding according to layers with respect to a received first layer video stream and a received second layer video stream, thereby controlling each video decoding apparatus 900 to decode an assigned single-layer video. Also, the multilayer video decoding apparatus 20 may perform inter-layer compensation by using a decoding result of an individual single layer of each video decoding apparatus 900. Accordingly, the decoder 24 of the multilayer video decoding apparatus 20 may generate first layer images and second layer images that are reconstructed according to layers.

FIG. 8 is a block diagram of the video encoding apparatus based on coding units according to a tree structure 800, according to an embodiment of the present disclosure.

The video encoding apparatus involving video prediction based on coding units according to a tree structure 800 according to an embodiment includes a coding unit determiner 820 and an output unit 830. Hereinafter, for convenience of description, the video encoding apparatus involving video prediction based on coding units according to a tree structure 800 will be abbreviated to the 'video encoding apparatus 800'.

The coding unit determiner 820 may split a current picture based on a largest coding unit that is a coding unit having a maximum size for the current picture of an image. If the current picture is larger than the largest coding unit, image data of the current picture may be split into the at least one largest coding unit. The largest coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the largest coding unit, and as the depth deepens, deeper coding units according to depths may be split from the largest coding unit to a smallest coding unit. A depth of the largest coding unit is an uppermost depth and a depth of the smallest coding unit is a lowermost depth. Since a size of a coding unit corresponding to each depth decreases as the depth of the largest coding unit deepens, a coding unit corresponding to an upper depth may include a plurality of coding units corresponding to lower depths.

As described above, the image data of the current picture is split into the largest coding units according to a maximum size of the coding unit, and each of the largest coding units may include deeper coding units that are split according to depths. Since the largest coding unit according to an embodiment is split according to depths, the image data of a spatial domain included in the largest coding unit may be hierarchically classified according to depths.

A maximum depth and a maximum size of a coding unit, which limit the total number of times a height and a width of the largest coding unit are hierarchically split, may be predetermined.

The coding unit determiner 820 encodes at least one split region obtained by splitting a region of the largest coding unit according to depths, and determines a depth to output a finally encoded image data according to the at least one split region. That is, the coding unit determiner 820 determines a final depth by encoding the image data in the deeper coding units according to depths, according to the largest coding unit of the current picture, and selecting a depth having the minimum encoding error. The determined final depth and the encoded image data according to the determined coded depth are output to the output unit 830.

The image data in the largest coding unit is encoded based on the deeper coding units corresponding to at least one depth equal to or below the maximum depth, and results of encoding the image data are compared based on each of the deeper coding units. A depth having the minimum encoding error may be selected after comparing encoding errors of the deeper coding units. At least one final depth may be selected for each largest coding unit.

The size of the largest coding unit is split as a coding unit is hierarchically split according to depths, and as the number of coding units increases. Also, even if coding units correspond to the same depth in one largest coding unit, it is determined whether to split each of the coding units corresponding to the same depth to a lower depth by measuring an encoding error of the image data of the each coding unit, separately. Accordingly, even when image data is included in one largest coding unit, the encoding errors may differ according to regions in the one largest coding unit, and thus the final depths may differ according to regions in the image data. Thus, one or more final depths may be determined in one largest coding unit, and the image data of the largest coding unit may be divided according to coding units of at least one final depth.

Accordingly, the coding unit determiner 820 according to an embodiment may determine coding units having a tree structure included in the largest coding unit. The 'coding units having a tree structure' according to an embodiment include coding units corresponding to a depth determined to be the final depth, from among all deeper coding units included in the largest coding unit. A coding unit of a final depth may be hierarchically determined according to depths in the same region of the largest coding unit, and may be independently determined in different regions. Similarly, a final depth in a current region may be independently determined from a final depth in another region.

A maximum depth according to an embodiment is an index related to the number of splitting times from a largest coding unit to a smallest coding unit. A first maximum depth according to an embodiment may denote the total number of splitting times from the largest coding unit to the smallest coding unit. A second maximum depth according to an embodiment may denote the total number of depth levels from the largest coding unit to the smallest coding unit. For example, when a depth of the largest coding unit is 0, a depth of a coding unit, in which the largest coding unit is split once, may be set to 1, and a depth of a coding unit, in which the largest coding unit is split twice, may be set to 2. In this case, if the smallest coding unit is a coding unit in which the largest coding unit is split four times, depth levels of depths 0, 1, 2, 3, and 4 exist, and thus the first maximum depth may be set to 4, and the second maximum depth may be set to 5.

Prediction encoding and transformation may be performed according to the largest coding unit. The prediction encoding and the transformation are also performed based on the deeper coding units according to a depth equal to or depths less than the maximum depth, according to the largest coding unit.

Since the number of deeper coding units increases whenever the largest coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a largest coding unit.

The video encoding apparatus 800 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 800 may select not only a coding unit for encoding the image data, but also a data unit different from the coding unit so as to perform the prediction encoding on the image data in the coding unit.

In order to perform prediction encoding in the largest coding unit, the prediction encoding may be performed based on a coding unit corresponding to a final depth according to an embodiment, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit and a data unit obtained by splitting at least one of a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, a size of a partition may be 2Nx2N, 2NxN, Nx2N, or NxN. Examples of a partition mode according to an embodiment may selectively include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a minimum encoding error.

The video encoding apparatus 800 according to an embodiment may also perform the transformation on the image data in a coding unit based not only on the coding unit for encoding the image data, but also based on a data unit that is different from the coding unit. In order to perform the transformation in the coding unit, the transformation may be performed based on a transformation unit having a size less than or equal to the coding unit. For example, the transformation unit may include a data unit for an intra mode and a transformation unit for an inter mode.

The transformation unit in the coding unit may be recursively split into smaller sized regions in a manner similar to that in which the coding unit is split according to the tree structure, according to an embodiment. Thus, residual data in the coding unit may be split according to the transformation unit having the tree structure according to transformation depths.

A transformation depth indicating the number of splitting times to reach the transformation unit by splitting the height and width of the coding unit may also be set in the transformation unit according to an embodiment. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. That is, the transformation unit having the tree structure may be set according to the transformation depths.

Split information according to depths requires not only information about a depth, but also about information related to prediction encoding and transformation. Accordingly, the coding unit determiner 120 not only determines a depth having a minimum encoding error, but also determines a partition mode of splitting a prediction unit into a partition, a prediction mode according to prediction units, and a size of a transformation unit for transformation.

Coding units according to a tree structure in a largest coding unit and methods of determining a prediction unit/partition, and a transformation unit, according to an embodiment, will be described in detail below with reference to FIGS. 9 through 19.

The coding unit determiner 820 may measure an encoding error of deeper coding units according to depths by using Rate-Distortion Optimization based on Lagrangian multipliers.

The output unit 830 outputs the image data of the largest coding unit, which is encoded based on the at least one depth determined by the coding unit determiner 820, and split information according to the depth, in bitstreams.

The encoded image data may be obtained by encoding residual data of an image.

The split information according to depth may include information about the depth, about the partition mode in the prediction unit, about the prediction mode, and about split of the transformation unit.

The information about the final depth may be defined by using split information according to depths, which indicates whether encoding is performed on coding units of a lower depth instead of a current depth. If the current depth of the current coding unit is a depth, the current coding unit is encoded, and thus the split information may be defined not to split the current coding unit to a lower depth. On the other hand, if the current depth of the current coding unit is not the depth, the encoding is performed on the coding unit of the lower depth, and thus the split information may be defined to split the current coding unit to obtain the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one largest coding unit, and split information is determined for a coding unit of a depth, at least one piece of split information may be determined for one largest coding unit. Also, a depth of the image data of the largest coding unit may be different according to locations since the image data is hierarchically split according to depths, and thus a depth and split information may be set for the image data.

Accordingly, the output unit 830 according to an embodiment may assign a corresponding depth and encoding information about an encoding mode to at least one of the coding unit, the prediction unit, and a minimum unit included in the largest coding unit.

The minimum unit according to an embodiment is a square data unit obtained by splitting the smallest coding unit constituting the lowermost depth by 4. Alternatively, the minimum unit according to an embodiment may be a maximum square data unit that may be included in all of the coding units, prediction units, partition units, and transformation units included in the largest coding unit.

For example, the encoding information output by the output unit 830 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit allowed with respect to a current video, and information about a minimum size of the transformation unit may also be output through a header of a bitstream, a sequence parameter set, or a picture parameter set. The output unit 830 may encode and output reference information related to prediction, prediction information, and slice type information.

In the video encoding apparatus 800 according to the simplest embodiment, the deeper coding unit may be a coding unit obtained by dividing a height or width of a coding unit of an upper depth, which is one layer above, by two. That is, when the size of the coding unit of the current depth is 2Nx2N, the size of the coding unit of the lower depth is NxN. Also, a current coding unit having a size of 2Nx2N may maximally include four lower-depth coding units each having a size of NxN.

Accordingly, the video encoding apparatus 800 may form the coding units having the tree structure by determining coding units having an optimum shape and an optimum size for each largest coding unit, based on the size of the largest coding unit and the maximum depth determined considering characteristics of the current picture. Also, since encoding may be performed on each largest coding unit by using any one of various prediction modes and transformations, an optimum encoding mode may be determined by taking into account characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 800 according to an embodiment, image compression efficiency may be increased since a coding unit is adjusted while considering characteristics of an image while increasing a maximum size of a coding unit while considering a size of the image.

The inter-layer video encoding apparatus including configuration described above with reference to FIG. 1A may include as many video encoding apparatuses 800 as the number of layers, in order to encode single-layer images according to layers of a multilayer video. For example, a first layer encoder may include one video encoding apparatus 800 and a second layer encoder may include as many video encoding apparatuses 800 as the number of second layers.

When the video encoding apparatus 800 encodes first layer images, the coding unit determiner 820 may determine, for each largest coding unit, a prediction unit for inter-prediction according to coding units having a tree structure, and perform inter-prediction according to prediction units.

Even when the video encoding apparatus 800 encodes second layer images, the coding unit determiner 820 may determine, for each largest coding unit, coding units and prediction units having a tree structure, and perform inter-prediction according to prediction units.

The video encoding apparatus 800 may encode a luminance difference to compensate for a luminance difference between a first layer image and a second layer image. However, whether to perform luminance may be determined according to an encoding mode of a coding unit. For example, luminance compensation may be performed only on a prediction unit having a size of 2Nx2N.

FIG. 9 is a block diagram of the video decoding apparatus based on coding units according to a tree structure 900, according to various embodiments.

The video decoding apparatus that involves video prediction based on coding units having a tree structure 900 according to an embodiment includes a receiver 910, an image data and encoding information extractor 920, and an image data decoder 930. For convenience of description, the video decoding apparatus that involves video prediction based on coding units having a tree structure 900 according to an embodiment will be abbreviated to the 'video decoding apparatus 900'.

Definitions of various terms, such as a coding unit, a depth, a prediction unit, a transformation unit, and various split information, for decoding operations of the video decoding apparatus 900 according to an embodiment are identical to those described with reference to FIG. 8 and the video encoding apparatus 800.

The receiver 910 receives and parses a bitstream of an encoded video. The image data and encoding information extractor 920 extracts encoded image data for each coding unit from the parsed bitstream, wherein the coding units have a tree structure according to each largest coding unit, and outputs the extracted image data to the image data decoder 930. The image data and encoding information extractor 920 may extract information about a maximum size of a coding unit of a current picture, from a header about the current picture, a sequence parameter set, or a picture parameter set.

Also, the image data and encoding information extractor 920 extracts a final depth and split information for the coding units having a tree structure according to each largest coding unit, from the parsed bitstream. The extracted final depth and split information are output to the image data decoder 930. That is, the image data in a bit stream is split into the largest coding unit so that the image data decoder 930 decodes the image data for each largest coding unit.

A depth and split information according to the largest coding unit may be set for at least one piece of depth information, and split information may include information about a partition mode of a corresponding coding unit, about a prediction mode, and about split of a transformation unit. Also, split information according to depths may be extracted as the information about a depth.

The depth and the split information according to each largest coding unit extracted by the image data and encoding information extractor 920 is a depth and split information determined to generate a minimum encoding error when an encoder, such as the video encoding apparatus 800 according to an embodiment, repeatedly performs encoding for each deeper coding unit according to depths according to each largest coding unit. Accordingly, the video decoding apparatus 900 may reconstruct an image by decoding the image data according to a coded depth and an encoding mode that generates the minimum encoding error.

Since encoding information about a depth and an encoding mode according to an embodiment may be assigned to a predetermined data unit from among a corresponding coding unit, a prediction unit, and a minimum unit, the image data and encoding information extractor 920 may extract the depth and the split information according to the predetermined data units. If the depth and the split information of a corresponding largest coding unit is recorded according to predetermined data units, the predetermined data units to which the same depth and the same split information is assigned may be inferred to be the data units included in the same largest coding unit.

The image data decoder 930 may reconstruct the current picture by decoding the image data in each largest coding unit based on the depth and the split information according to the largest coding units. That is, the image data decoder 930 may decode the encoded image data based on the extracted information about the partition mode, the prediction mode, and the transformation unit for each coding unit from among the coding units having the tree structure included in each largest coding unit. A decoding process may include a prediction including intra prediction and motion compensation, and an inverse transformation.

The image data decoder 930 may perform intra prediction or motion compensation according to a partition and a prediction mode of each coding unit, based on the information about the partition mode and the prediction mode of the prediction unit of the coding unit according to depths.

In addition, the image data decoder 930 may read information about a transformation unit according to a tree structure for each coding unit so as to perform inverse transformation based on transformation units for each coding unit, for inverse transformation for each largest coding unit. Via the inverse transformation, a pixel value of a spatial domain of the coding unit may be reconstructed.

The image data decoder 930 may determine a depth of a current largest coding unit by using split information according to depths. If the split information indicates that image data is no longer split in the current depth, the current depth is a depth. Accordingly, the image data decoder 930 may decode encoded data in the current largest coding unit by using the information about the partition mode of the prediction unit, the prediction mode, and the size of the transformation unit.

That is, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 930 in the same encoding mode. As such, the current coding unit may be decoded by obtaining the information about the encoding mode for each coding unit.

The inter-layer video decoding apparatus including configuration described above with reference to FIG. 2A may include the number of video decoding apparatuses 900 as much as the number of viewpoints, so as to reconstruct first layer images and second layer images by decoding a received first layer image stream and a received second layer image stream.

When the first layer image stream is received, the image data decoder 930 of the video decoding apparatus 900 may split samples of first layer images extracted from the first layer image stream by the image data and encoding information extractor 920 into coding units having a tree structure. The image data decoder 930 may reconstruct the first layer images by performing motion compensation according to prediction units for inter prediction, on the coding units having the tree structure obtained by splitting the samples of the first layer images.

When the second layer image stream is received, the image data decoder 930 of the video decoding apparatus 900 may split samples of second layer images extracted from the second layer image stream by the image data and encoding information extractor 920 into coding units having a tree structure. The image data decoder 930 may reconstruct the second layer images by performing motion compensation according to prediction units for inter prediction, on the coding units obtained by splitting the samples of the second layer images.

The extractor 220 may obtain information related to a luminance error from a bitstream so as to compensate for a luminance difference between a first layer image and a second layer image. However, whether to perform luminance may be determined according to an encoding mode of a coding unit. For example, luminance compensation may be performed only on a prediction unit having a size of 2Nx2N.

Thus, the video decoding apparatus 900 may obtain information about at least one coding unit that generates the minimum encoding error when encoding is recursively performed for each largest coding unit, and may use the information to decode the current picture. That is, the coding units having the tree structure determined to be the optimum coding units in each largest coding unit may be decoded.

Accordingly, even if image data has high resolution and a large amount of data, the image data may be efficiently decoded and reconstructed by using a size of a coding unit and an encoding mode, which are adaptively determined according to characteristics of the image data, by using optimum split information received from an encoder.

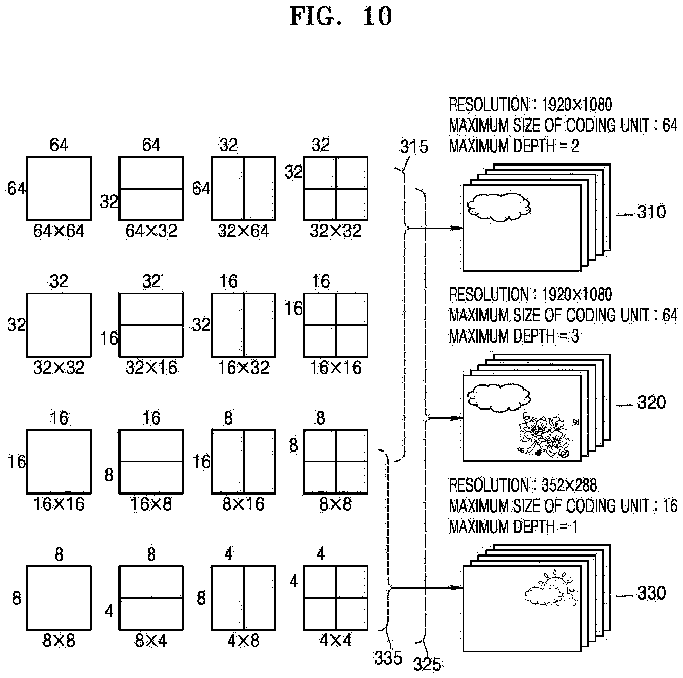

FIG. 10 is a diagram for describing a concept of coding units, according to various embodiments.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 1010, a resolution is 1920x1080, a maximum size of a coding unit is 64, and a maximum depth is 2. In video data 1020, a resolution is 1920x1080, a maximum size of a coding unit is 64, and a maximum depth is 3. In video data 1030, a resolution is 352x288, a maximum size of a coding unit is 16, and a maximum depth is 1. The maximum depth shown in FIG. 10 denotes a total number of splits from a largest coding unit to a smallest coding unit.

If a resolution is high or a data amount is large, a maximum size of a coding unit may be large so as to not only increase encoding efficiency but also to accurately reflect characteristics of an image. Accordingly, the maximum size of the coding unit of the video data 1010 and 1020 having a higher resolution than the video data 1030 may be 64.

Since the maximum depth of the video data 1010 is 2, coding units 1015 of the vide data 1010 may include a largest coding unit having a long axis size of 64, and coding units having long axis sizes of 32 and 16 since depths are deepened to two layers by splitting the largest coding unit twice. Since the maximum depth of the video data 1030 is 1, coding units 1035 of the video data 1030 may include a largest coding unit having a long axis size of 16, and coding units having a long axis size of 8 since depths are deepened to one layer by splitting the largest coding unit once.

Since the maximum depth of the video data 1020 is 3, coding units 1025 of the video data 1020 may include a largest coding unit having a long axis size of 64, and coding units having long axis sizes of 32, 16, and 8 since the depths are deepened to 3 layers by splitting the largest coding unit three times. As a depth deepens, detailed information may be precisely expressed.

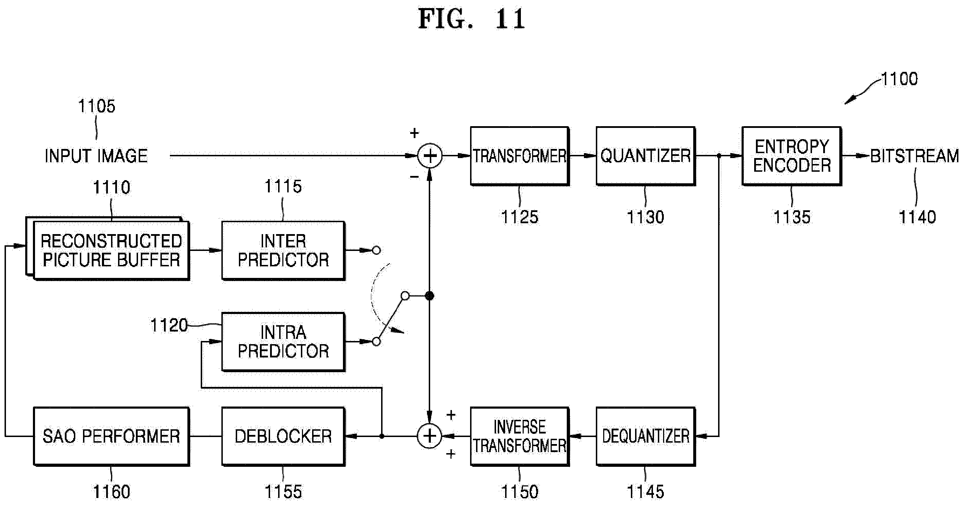

FIG. 11 is a block diagram of a video encoder 1100 based on coding units, according to various embodiments.

The video encoder 1100 according to an embodiment performs operations of the coding unit determiner 820 of the video encoding apparatus 800 to encode image data. That is, an intra predictor 1120 performs intra prediction on coding units in an intra mode, from among a current frame 1105, per prediction unit, and an inter predictor 1115 performs inter prediction on coding units in an inter mode by using the current image 1105 and a reference image obtained by a restored picture buffer 1110, per prediction unit. The current picture 1105 may be split into largest coding units, and then the largest coding units may be sequentially encoded. Here, the encoding may be performed on coding units split in a tree structure from the largest coding unit.

Residual data is generated by subtracting prediction data of a coding unit of each mode output from the intra predictor 1120 or the inter predictor 1115 from data of the current image 1105 to be encoded, and the residual data is output as a quantized transformation coefficient through a transformer 1125 and a quantizer 1130 per transformation unit. The quantized transformation coefficient is restored to residual data in a spatial domain through a dequantizer 1145 and an inverse transformer 1150. The residual data in the spatial domain is added to the prediction data of the coding unit of each mode output from the intra predictor 1120 or the inter predictor 1115 to be restored as data in a spatial domain of the coding unit of the current image 1105. The data in the spatial domain passes through a deblocker 1155 and a sample adaptive offset (SAO) performer 1160 and thus a restored image is generated. The restored image is stored in the restored picture buffer 1110. Restored images stored in the restored picture buffer 1110 may be used as a reference image for inter prediction of another image. The quantized transformation coefficient obtained through the transformer 1125 and the quantizer 1130 may be output as a bitstream 1140 through an entropy encoder 1135.

In order for the video encoder 1100 according to an embodiment to be applied in the video encoding apparatus 800, components of the video encoder 1100, i.e., the inter predictor 1115, the intra predictor 1120, the transformer 1125, the quantizer 1130, the entropy encoder 1135, the dequantizer 1145, the inverse transformer 1150, the deblocker 1155, and the SAO performer 1160 perform operations based on each coding unit among coding units having a tree structure per largest coding unit.

In particular, the intra predictor 1120 and the inter predictor 1115 determine partitions and a prediction mode of each coding unit from among the coding units having a tree structure while considering the maximum size and the maximum depth of a current largest coding unit, and the transformer 1125 may determine whether to split a transformation unit according to a quad-tree in each coding unit from among the coding units having the tree structure.

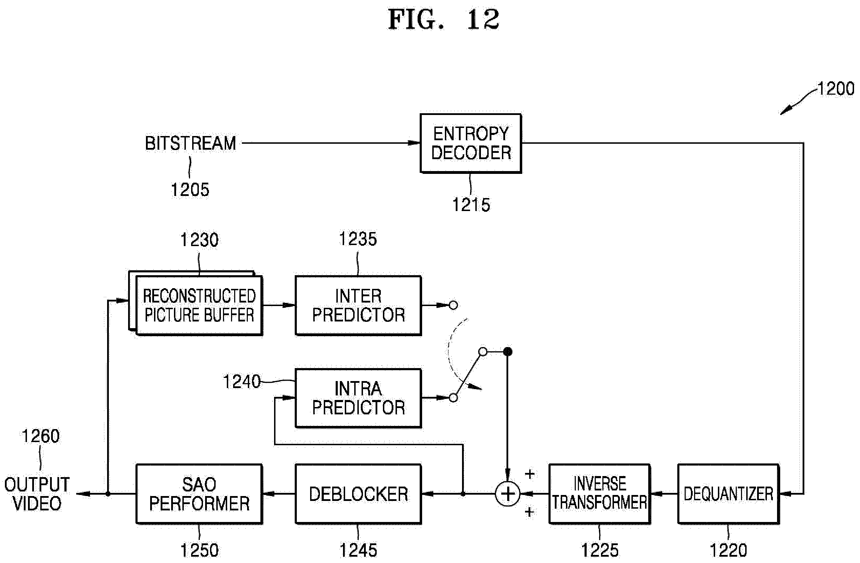

FIG. 12 is a block diagram of a video decoder 1200 based on coding units, according to various embodiments.

An entropy decoder 1215 parses encoded image data that is to be decoded and encoding information required for decoding from a bitstream 1205. The encoded image data is a quantized transformation coefficient, and a dequantizer 1220 and an inverse transformer 1225 restores residual data from the quantized transformation coefficient.

An intra predictor 1240 performs intra prediction on a coding unit in an intra mode according to prediction units. An inter predictor performs inter prediction on a coding unit in an inter mode from a current image according to prediction units, by using a reference image obtained by a restored picture buffer 1230.

Data in a spatial domain of coding units of the current image is restored by adding the residual data and the prediction data of a coding unit of each mode through the intra predictor and the inter predictor 1235, and the data in the spatial domain may be output as a restored image through a deblocker 1245 and an SAO performer 1250. Also, restored images stored in the restored picture buffer 1230 may be output as reference images.

In order to decode the image data in the image data decoder 930 of the video decoding apparatus 900, operations after the entropy decoder 1215 of the video decoder 1200 according to an embodiment may be performed.

In order for the video decoder 1200 to be applied in the video decoding apparatus 900 according to an embodiment, components of the video decoder 1200, i.e., the entropy decoder 1215, the dequantizer 1220, the inverse transformer 1225, the intra predictor 1240, the inter predictor 1235, the deblocker 1245, and the SAO performer 1250 may perform operations based on coding units having a tree structure for each largest coding unit.

In particular, the intra predictor 1240 and the inter predictor 1235 determine a partition mode and a prediction mode according to each of coding units having a tree structure, and the inverse transformer 1225 may determine whether to split a transformation unit according to a quad-tree structure per coding unit.

An encoding operation of FIG. 10 and a decoding operation of FIG. 11 are respectively a video stream encoding operation and a video stream decoding operation in a single layer. Accordingly, when the encoder 12 of FIG. 1A encodes a video stream of at least two layers, the video encoding apparatus 10 of FIG 1A may include as many video encoder 1100 as the number of layers. Similarly, when the decoder 24 of FIG. 2A decodes a video stream of at least two layers, the video decoding apparatus 20 of FIG. 2A may include as many image decoders 1200 as the number of layers.

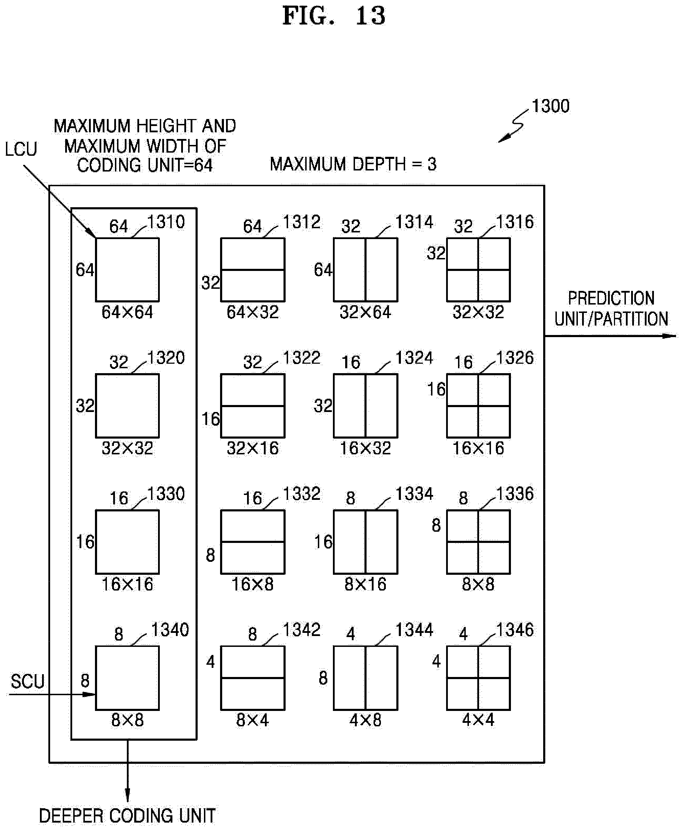

FIG. 13 is a diagram illustrating coding units and partitions, according to various embodiments.

The video encoding apparatus 800 according to an embodiment and the video decoding apparatus 900 according to an embodiment use hierarchical coding units so as to consider characteristics of an image. A maximum height, a maximum width, and a maximum depth of coding units may be adaptively determined according to the characteristics of the image, or may be variously set according to user requirements. Sizes of deeper coding units according to depths may be determined according to the predetermined maximum size of the coding unit.

In a hierarchical structure 1300 of coding units according to an embodiment, the maximum height and the maximum width of the coding units are each 64, and the maximum depth is 3. In this case, the maximum depth refers to a total number of times the coding unit is split from the largest coding unit to the smallest coding unit. Since a depth deepens along a vertical axis of the hierarchical structure 1300 of coding units according to an embodiment, a height and a width of the deeper coding unit are each split. Also, a prediction unit and partitions, which are bases for prediction encoding of each deeper coding unit, are shown along a horizontal axis of the hierarchical structure 1300.

That is, a coding unit 1310 is a largest coding unit in the hierarchical structure 1300, wherein a depth is 0 and a size, i.e., a height by width, is 64x64. The depth deepens along the vertical axis, and a coding unit 1320 having a size of 32x32 and a depth of 1, a coding unit 1330 having a size of 16x16 and a depth of 2, and a coding unit 1340 having a size of 8x8 and a depth of 3. The coding unit 1340 having a size of 8x8 and a depth of 3 is a smallest coding unit.

The prediction unit and the partitions of a coding unit are arranged along the horizontal axis according to each depth. That is, if the coding unit 1310 having a size of 64x64 and a depth of 0 is a prediction unit, the prediction unit may be split into partitions included in the encoding unit 1310 having a size of 64x64, i.e. a partition 1310 having a size of 64x64, partitions 1312 having the size of 64x32, partitions 1314 having the size of 32x64, or partitions 1316 having the size of 32x32.

Equally, a prediction unit of the coding unit 1320 having the size of 32x32 and the depth of 1 may be split into partitions included in the coding unit 1320 having the size of 32x32, i.e. a partition 1320 having a size of 32x32, partitions 1322 having a size of 32x16, partitions 1324 having a size of 16x32, and partitions 1326 having a size of 16x16.

Equally, a prediction unit of the coding unit 1330 having the size of 16x16 and the depth of 2 may be split into partitions included in the coding unit 1330 having the size of 16x16, i.e. a partition having a size of 16x16 included in the coding unit 1330, partitions 1332 having a size of 16x8, partitions 1334 having a size of 8x16, and partitions 1336 having a size of 8x8.

Equally, a prediction unit of the coding unit 1340 having the size of 8x8 and the depth of 3 may be split into partitions included in the coding unit 1340 having the size of 8x8, i.e. a partition having a size of 8x8 included in the coding unit 1340, partitions 1342 having a size of 8x4, partitions 1344 having a size of 4x8, and partitions 1346 having a size of 4x4.

In order to determine the depth of the largest coding unit 1310, the coding unit determiner 820 of the video encoding apparatus 800 according to an embodiment performs encoding for coding units corresponding to each depth included in the maximum coding unit 1310.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a minimum encoding error may be selected for the current depth by performing encoding for each prediction unit in the coding units corresponding to the current depth, along the horizontal axis of the hierarchical structure 1300. Alternatively, the minimum encoding error may be searched for by comparing the minimum encoding errors according to depths, by performing encoding for each depth as the depth deepens along the vertical axis of the hierarchical structure 1300. A depth and a partition having the minimum encoding error in the largest coding unit 1310 may be selected as the depth and a partition mode of the largest coding unit 1310.

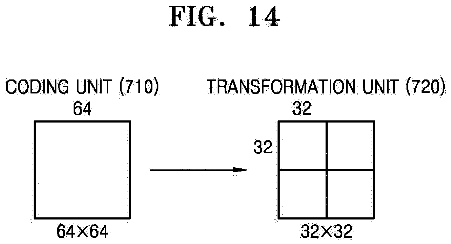

FIG. 14 is a diagram for describing a relationship between a coding unit and transformation units, according to various embodiments.

The video encoding apparatus 800 according to an embodiment or the video decoding apparatus 900 according to an embodiment encodes or decodes an image according to coding units having sizes less than or equal to a largest coding unit for each largest coding unit. Sizes of transformation units for transformation during encoding may be selected based on data units that are not larger than a corresponding coding unit.

For example, in the video encoding apparatus 800 according to an embodiment or the video decoding apparatus 900 according to an embodiment, if a size of a coding unit 1410 is 64x64, transformation may be performed by using a transformation unit 1420 having a size of 32x32.

Also, data of the coding unit 1410 having the size of 64x64 may be encoded by performing the transformation on each of the transformation units having the size of 32x32, 16x16, 8x8, and 4x4, which are smaller than 64x64, and then a transformation unit having the minimum coding error may be selected.

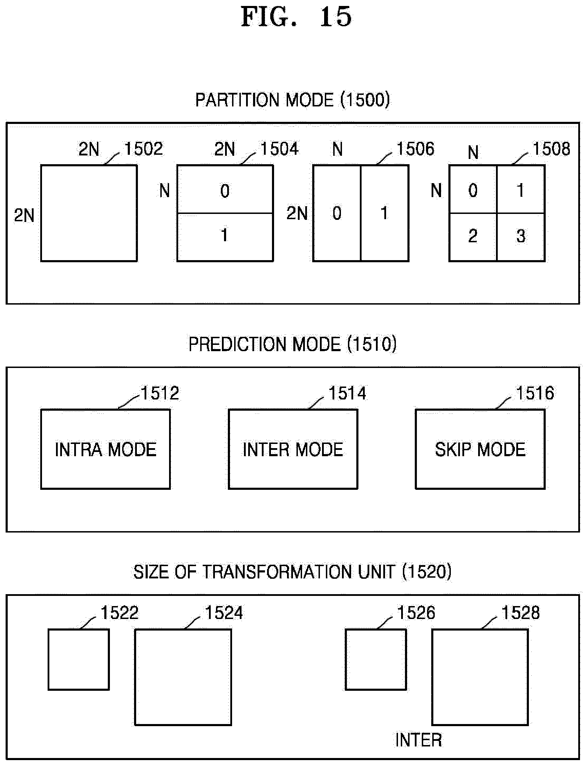

FIG. 15 illustrates a plurality of pieces of encoding information, according to various embodiments.

The output unit 830 of the video encoding apparatus 800 according to an embodiment may encode and transmit partition mode information 1500, prediction mode information 1510, and transformation unit size information 1520 for each coding unit corresponding to a depth, as split information.

The partition mode information 1500 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 1502 having a size of 2Nx2N, a partition 1504 having a size of 2NxN, a partition 1506 having a size of Nx2N, and a partition 1508 having a size of NxN. In this case, the partition mode information 1500 about a partition type of a current coding unit is set to indicate one of the partition 1504 having a size of 2NxN, the partition 1506 having a size of Nx2N, and the partition 1508 having a size of NxN.

The prediction mode information 1510 indicates a prediction mode of each partition. For example, the prediction mode information 1510 may indicate a mode of prediction encoding performed on a partition indicated by the partition mode information 1500, i.e., an intra mode 1512, an inter mode 1514, or a skip mode 1516.

The transformation unit size information 1520 indicates a transformation unit to be based on when transformation is performed on a current coding unit. For example, the transformation unit may be a first intra transformation unit 1522, a second intra transformation unit 1524, a first inter transformation unit 1526, or a second inter transformation unit 1528.

The image data and encoding information extractor 920 of the video decoding apparatus 900 according to an embodiment may extract and use the partition mode information 1500, the prediction mode information 1510, and the transformation unit size information 1520 for decoding, according to each deeper coding unit.

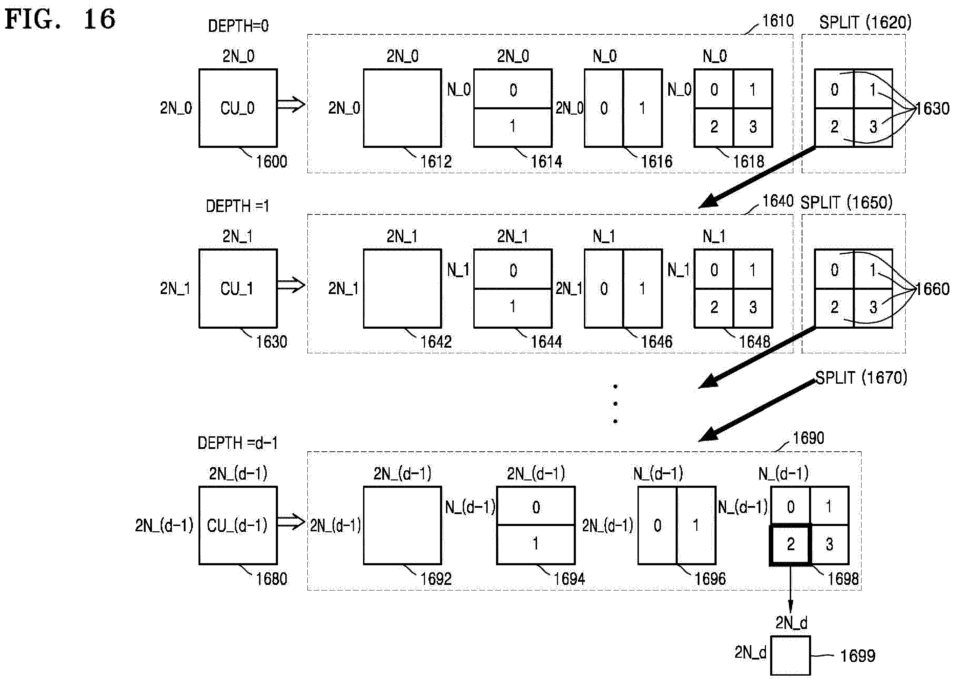

FIG. 16 is a diagram of deeper coding units according to depths, according to various embodiments.

Split information may be used to indicate a change of a depth. The spilt information indicates whether a coding unit of a current depth is to be split into coding units of a lower depth.

A prediction unit 1610 for prediction encoding a coding unit 1600 having a depth of 0 and a size of 2N_0x2N_0 may include partitions of a partition mode 1612 having a size of 2N_0x2N_0, a partition mode 1614 having a size of 2N_0xN_0, a partition mode 1616 having a size of N_0x2N_0, and a partition mode 1618 having a size of N_0xN_0. FIG. 16 only illustrates the partitions 1612, 1614, 1616, and 1618 that are obtained by symmetrically splitting the prediction unit, but a partition mode is not limited thereto, and the partitions of the prediction unit may include asymmetrical partitions, partitions having an arbitrary shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition mode. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error in one of the partition mode 1612 having the size of 2N_0x2N_0, the partition mode 1614 having the size of 2N_0xN_0, and the partition mode 1616 having the size of N_0x2N_0 is a minimum error, the prediction unit 1610 may not be split into a lower depth.

If the encoding error in the partition mode 1618 having the size of N_0xN_0 is a minimum error, a depth is changed from 0 to 1 to split the partition mode 1618 in operation 1620, and encoding is repeatedly performed on coding units 1630 in a partition mode having a depth of 2 and a size of N_0xN_0 to search for a minimum encoding error.

A prediction unit 1640 for prediction encoding the coding unit 1630 having a depth of 1 and a size of 2N_1x2N_1 (=N_0xN_0) may include partitions of a partition mode 1642 having a size of 2N_1x2N_1, a partition mode 1644 having a size of 2N_1xN_1, a partition mode 1646 having a size of N_1x2N_1, and a partition mode 1648 having a size of N_1xN_1.

If the encoding error in the partition mode 1648 having the size of N_1xN_1 is a minimum error, a depth is changed from 1 to 2 to split the partition mode 1648 in operation 1650, and encoding is repeatedly performed on coding units 1660 having a depth of 2 and a size of N_2xN_2 so as to search for a minimum encoding error.

When a maximum depth is d, deeper coding units according to depths may be set until when a depth corresponds to d-1, and split information may be set until when a depth corresponds to d-2. That is, when encoding is performed up to when the depth is d-1 after a coding unit corresponding to a depth of d-2 is split in operation 1670, a prediction unit 1690 for prediction encoding a coding unit 1680 having a depth of d-1 and a size of 2N_(d-1)x2N_(d-1) may include partitions of a partition mode 1692 having a size of 2N_(d-1)x2N_(d-1), a partition mode 1694 having a size of 2N_(d-1)xN_(d-1), a partition mode 1696 having a size of N_(d-1)x2N_(d-1), and a partition mode 1698 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition modes to search for a partition mode having a minimum encoding error.

Even when the partition mode 1698 has the minimum encoding error, since a maximum depth is d, a coding unit CU_(d-1) having a depth of d-1 is no longer split to a lower depth, and a depth for the coding units constituting a current largest coding unit 1600 is determined to be d-1 and a partition mode of the current largest coding unit 1600 may be determined to be N_(d-1)xN_(d-1). Also, since the maximum depth is d, split information for a coding unit 1652 having a depth of d-1 is not set.

A data unit 1699 may be a 'minimum unit' for the current largest coding unit. A minimum unit according to an embodiment may be a square data unit obtained by splitting a smallest coding unit having a lowermost depth by 4. By performing the encoding repeatedly, the video encoding apparatus 800 according to an embodiment may select a depth having the minimum encoding error by comparing encoding errors according to depths of the coding unit 1600 to determine a depth, and set a corresponding partition mode and a prediction mode as an encoding mode of the depth.

As such, the minimum encoding errors according to depths are compared in all of the depths of 0, 1, ..., d-1, d, and a depth having the minimum encoding error may be determined as a depth. The depth, the partition mode of the prediction unit, and the prediction mode may be encoded and transmitted as split information. Also, since a coding unit is split from a depth of 0 to a depth, only split information of the depth is set to 0, and split information of depths excluding the depth is set to 1.

The image data and encoding information extractor 1620 of the video decoding apparatus 900 according to an embodiment may extract and use the information about the depth and the prediction unit of the coding unit 1600 so as to decode the partition 1612. The video decoding apparatus 900 according to various embodiments may determine a depth, in which split information is 0, as a depth by using split information according to depths, and may use split information of the corresponding depth for decoding.

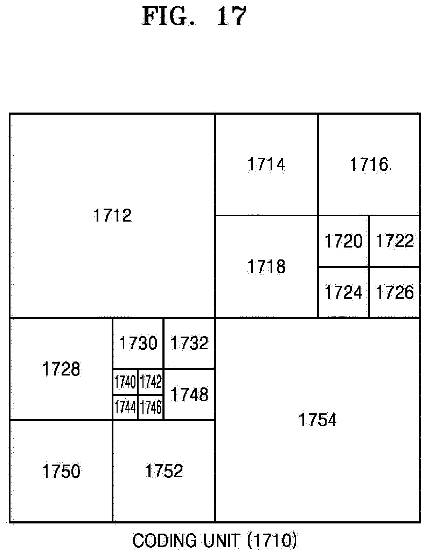

FIGS. 17, 18, and 19 are diagrams for describing a relationship between coding units, prediction units, and transformation units, according to various embodiments.

Coding units 1710 are coding units having a tree structure, according to depths determined by the video encoding apparatus 800 according to an embodiment, in a largest coding unit. Prediction units 1760 are partitions of prediction units of each of coding units according to depths, and transformation units 1770 are transformation units of each of coding units according to depths.

When a depth of a largest coding unit is 0 in the coding units 1710, depths of coding units 1712 and 1754 are 1, depths of coding units 1714, 1716, 1718, 1728, 1750, and 1752 are 2, depths of coding units 1720, 1722, 1724, 1726, 1730, 1732, and 1748 are 3, and depths of coding units 1740, 1742, 1744, and 1746 are 4.

In the prediction units 1760, some encoding units 1714, 1716, 1722, 1732, 1748, 1750, 1752, and 1754 are obtained by splitting the coding units in the encoding units 1710. That is, partition modes in the coding units 1714, 1722, 1750, and 1754 have a size of 2NxN, partition modes in the coding units 1716, 1748, and 1752 have a size of Nx2N, and a partition modes of the coding unit 1732 has a size of NxN. Prediction units and partitions of the coding units 1710 are smaller than or equal to each coding unit.

Transformation or inverse transformation is performed on image data of the coding unit 1752 in the transformation units 1770 in a data unit that is smaller than the coding unit 1752. Also, the coding units 1714, 1716, 1722, 1732, 1748, 1750, 1752, and 1754 in the transformation units 1770 are data units different from those in the prediction units 1760 in terms of sizes and shapes. That is, the video encoding and decoding apparatuses 800 and 900 according to embodiments may perform intra prediction, motion estimation and motion compensation, and transformation and inverse transformation on an individual data unit in the same coding unit.

Accordingly, encoding is recursively performed on each of coding units having a hierarchical structure in each region of a largest coding unit to determine an optimum coding unit, and thus coding units having a recursive tree structure may be obtained. Encoding information may include split information about a coding unit, information about a partition mode, information about a prediction mode, and information about a size of a transformation unit. Table 1 shows the encoding information that may be set by the video encoding and decoding apparatuses 800 and 900 according to embodiments.

[Table 1]

| Split Information 0 (Encoding on Coding Unit having Size of 2N×2N and Current Depth of d) | | | | | Split Information 1 |
|---|---|---|---|---|---|
| Prediction Mode | Partition Mode | | Size of Transformation Unit | | Repeatedly Encode Coding Units having Lower Depth of d+1 |
| | Symmetrical Partition Mode | Asymmetrical Partition Mode | Split Information 0 of Transformation Unit | Split Information 1 of Transformation Unit | |
| Intra Inter Skip (Only 2N×2N) | 2N×2N 2N×N N×2N N×N | 2N×nU 2N×nD nL×2N nR×2N | 2N×2N | N×N (Symmetrical Partition Mode) N/2×N/2 (Asymmetrica 1 Partition Mode) | |

The output unit 830 of the video encoding apparatus 800 according to an embodiment may output the encoding information about the coding units having a tree structure, and the image data and encoding information extractor 920 of the video decoding apparatus 900 according to an embodiment may extract the encoding information about the coding units having a tree structure from a received bitstream.

Split information indicates whether a current coding unit is to be split into coding units of a lower depth. If split information of a current depth d is 0, a depth, in which a current coding unit is no longer split into a lower depth, is a depth, and thus information about a partition mode, prediction mode, and a size of a transformation unit may be defined for the depth. If the current coding unit is further split according to the split information, encoding has to be independently performed on four split coding units of a lower depth.

A prediction mode may be one of an intra mode, an inter mode, and a skip mode. The intra mode and the inter mode may be defined in all partition modes, and the skip mode may be defined only in a partition mode having a size of 2Nx2N.

The information about the partition mode may indicate symmetrical partition modes having sizes of 2Nx2N, 2NxN, Nx2N, and NxN, which are obtained by symmetrically splitting a height or a width of a prediction unit, and asymmetrical partition modes having sizes of 2NxnU, 2NxnD, nLx2N, and nRx2N, which are obtained by asymmetrically splitting the height or width of the prediction unit. The asymmetrical partition modes having the sizes of 2NxnU and 2NxnD may be respectively obtained by splitting the height of the prediction unit in 1:3 and 3:1, and the asymmetrical partition modes having the sizes of nLx2N and nRx2N may be respectively obtained by splitting the width of the prediction unit in 1:3 and 3:1.

The size of the transformation unit may be set to be two types in the intra mode and two types in the inter mode. That is, if split information of the transformation unit is 0, the size of the transformation unit may be 2Nx2N, which is the size of the current coding unit. If the split information of the transformation unit is 1, the transformation units may be obtained by splitting the current coding unit. Also, if a partition mode of the current coding unit having the size of 2Nx2N is a symmetrical partition mode, a size of a transformation unit may be NxN, and if the partition type of the current coding unit is an asymmetrical partition mode, the size of the transformation unit may be N/2xN/2.

The encoding information about coding units having a tree structure according to an embodiment may be assigned to at least one of a coding unit corresponding to a depth, a prediction unit, and a minimum unit. The coding unit corresponding to the depth may include at least one of a prediction unit and a minimum unit that have the same encoding information.

Accordingly, it is determined whether adjacent data units are included in the same coding unit corresponding to the depth by comparing a plurality of pieces of encoding information of the adjacent data units. Also, a corresponding coding unit corresponding to a depth is determined by using encoding information of a data unit, and thus a distribution of depths in a largest coding unit may be determined.

Accordingly, if a current coding unit is predicted based on encoding information of adjacent data units, encoding information of data units in deeper coding units adjacent to the current coding unit may be directly referred to and used.

As another example, if a current coding unit is prediction-encoded by referring to adjacent coding units, a data unit that is adjacent to the current coding unit and is in adjacent deeper coding units is searched by using a plurality of pieces of encoding information of the adjacent coding units, in such a manner that the adjacent coding units may be referred to.

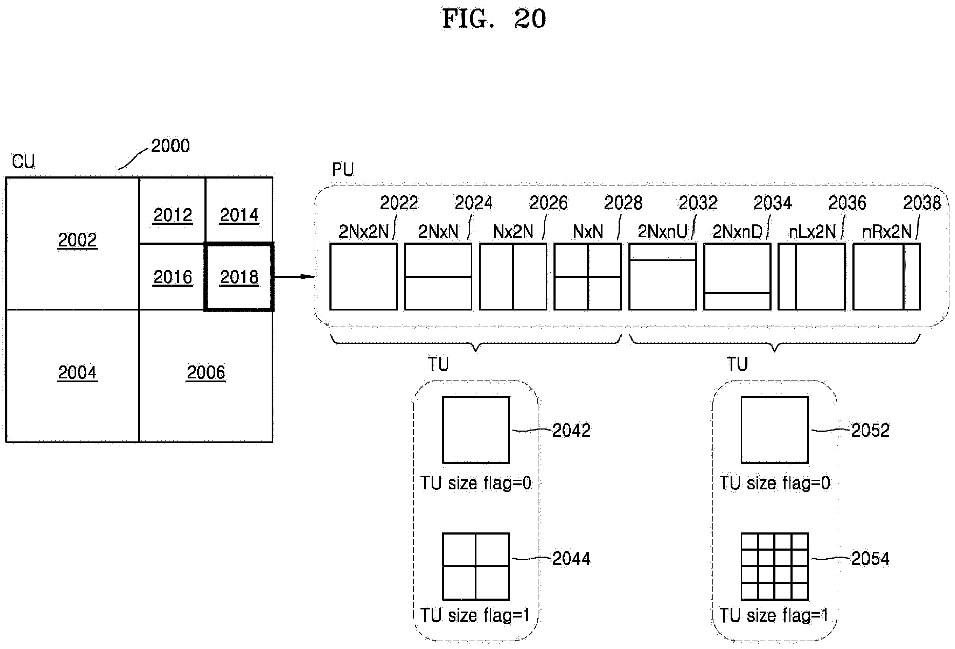

FIG. 20 is a diagram for describing a relationship between a coding unit, a prediction unit, and a transformation unit, according to encoding mode information of Table 1.

A largest coding unit 2000 includes coding units 2002, 2004, 2006, 2012, 2014, 2016, and 2018 of depths. Here, since the coding unit 2018 is a coding unit of a depth, split information may be set to 0. Information about a partition mode of the coding unit 2018 having a size of 2Nx2N may be set to be one of a partition mode 2022 having a size of 2Nx2N, a partition mode 2024 having a size of 2NxN, a partition mode 2026 having a size of Nx2N, a partition mode 2028 having a size of NxN, a partition mode 2032 having a size of 2NxnU, a partition mode 2034 having a size of 2NxnD, a partition mode 2036 having a size of nLx2N, and a partition mode 2038 having a size of nRx2N.

Transformation unit split information (TU size flag) is a type of a transformation index. A size of a transformation unit corresponding to the transformation index may be changed according to a prediction unit type or a partition mode of the coding unit.

For example, when information about the partition mode is set to be symmetrical, i.e. the partition mode 2022 having a size of $2N \times 2N$, the partition mode 2024 having a size of $2N \times N$, the partition mode 2026 having a size of $N \times 2N$, or the partition mode 2028 having a size of $N \times N$, a transformation unit 2042 having a size of 2Nx2N may be set if the TU size flag of the transformation unit is 0, and a transformation unit 2044 having a size of NxN may be set if the TU size flag is 1.

When the information about the partition mode is set to be asymmetrical, i.e., the partition mode 2032 having a size of $2N \times nU$, the partition mode 2034 having a size of $2N \times nD$, the partition mode 2036 having a size of $nL \times 2N$, or the partition mode 2038 having a size of $nR \times 2N$, a transformation unit 2052 having a size of 2Nx2N may be set if the TU size flag is 0, and a transformation unit 2054 having a size of N/2xN/2 may be set if the TU size flag is 1.

Referring to FIG. 20, the TU size flag is a flag having a value or 0 or 1, but the TU size flag according to an embodiment is not limited to a flag of 1 bit, and the transformation unit may be hierarchically split while the TU size flag increases from 0. The TU size flag may be an example of the transformation index.

In this case, the size of the transformation unit that has been actually used may be expressed by using the TU size flag according to an embodiment together with a maximum size of the transformation unit and a minimum size of the transformation unit. The video encoding apparatus 800 according to an embodiment may encode maximum-transformation unit size information, minimum-transformation unit size information, and maximum-TU size flag information. The result of encoding the maximum-transformation unit size information, the minimum-transformation unit size information, and the maximum-TU size flag information may be inserted into an SPS. The video decoding apparatus 900 according to an embodiment may decode video by using the maximum-transformation unit size information, the minimum-transformation unit size information, and the maximum-TU size flag information.

For example, (a) if a size of a current coding unit is 64x64 and a maximum transformation unit size is 32x32, (a-1) then a size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and the maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max(\text{MinTransformSize}, \text{RootTuSize}/(2^{\wedge}\text{MaxTransformSizeIndex})) \ldots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

The maximum transformation unit size RootTuSize according to an embodiment may vary according to a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \ldots (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \ldots (3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present disclosure is not limited thereto.

According to the video encoding method based on coding units having a tree structure as described with reference to FIGS. 8 through 20, image data of a spatial domain is encoded for each coding unit of a tree structure. According to the video decoding method based on coding units having a tree structure, decoding is performed for each largest coding unit to reconstruct image data of a spatial domain. Thus, a picture and a video that is a picture sequence may be reconstructed. The reconstructed video may be reproduced by a reproducing apparatus, may be stored in a storage medium, or may be transmitted through a network.

The embodiments according to the present disclosure may be written as computer programs and may be implemented in general-use digital computers that execute the programs using a non-transitory computer-readable recording medium. Examples of the non-transitory computer-readable recording medium include magnetic storage media (e.g., ROM, floppy discs, hard discs, etc.) and optical recording media (e.g., CD-ROMs, or DVDs).

For convenience of description, the video encoding method and/or the video encoding method described above with reference to FIGS. 1A through 20 will be collectively referred to as a 'video encoding method of the present disclosure'. In addition, the video decoding method and/or the video decoding method described above with reference to FIGS. 1A through 20 will be referred to as a 'video decoding method of the present disclosure'.

Also, a video encoding apparatus including the video encoding apparatus 10, the video encoding apparatus 800, or the video encoder 1100, which has been described with reference to FIGS. 1A through 20, will be referred to as a 'video encoding apparatus of the present disclosure'. In addition, a video decoding apparatus including the video decoding apparatus 20, the video decoding apparatus 900, or the video decoder 1200, which has been descried with reference to FIGS. 1A through 20, will be referred to as a 'video decoding apparatus of the present disclosure'.

The non-transitory computer-readable recording medium such as a disc 26000 that stores the programs according to an embodiment will now be described in detail.

FIG. 21 is a diagram of a physical structure of the disc 26000 in which a program is stored, according to various embodiments. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000 according to an embodiment, a program that executes the quantization parameter determining method, the video encoding method, and the video decoding method described above may be assigned and stored.

A computer system embodied using the storage medium that stores the program for executing the video encoding method and the video decoding method as described above will now be described with reference to FIG. 22.

FIG. 22 is a diagram of a disc drive 26800 for recording and reading a program by using the disc 26000. A computer system 26700 may store a program that executes at least one of a video encoding method and a video decoding method of the present disclosure, in the disc 26000 via the disc drive 26800. In order to run the program stored in the disc 26000 in the computer system 26700, the program may be read from the disc 26000 and be transmitted to the computer system 26700 by using the disc drive 27000.

The program that executes at least one of a video encoding method and a video decoding method of the present disclosure may be stored not only in the disc 26000 illustrated in FIGS. 21 and 22 but also in a memory card, a ROM cassette, or a solid state drive (SSD).

A system to which the video encoding method and the video decoding method according to the embodiments described above are applied will be described below.

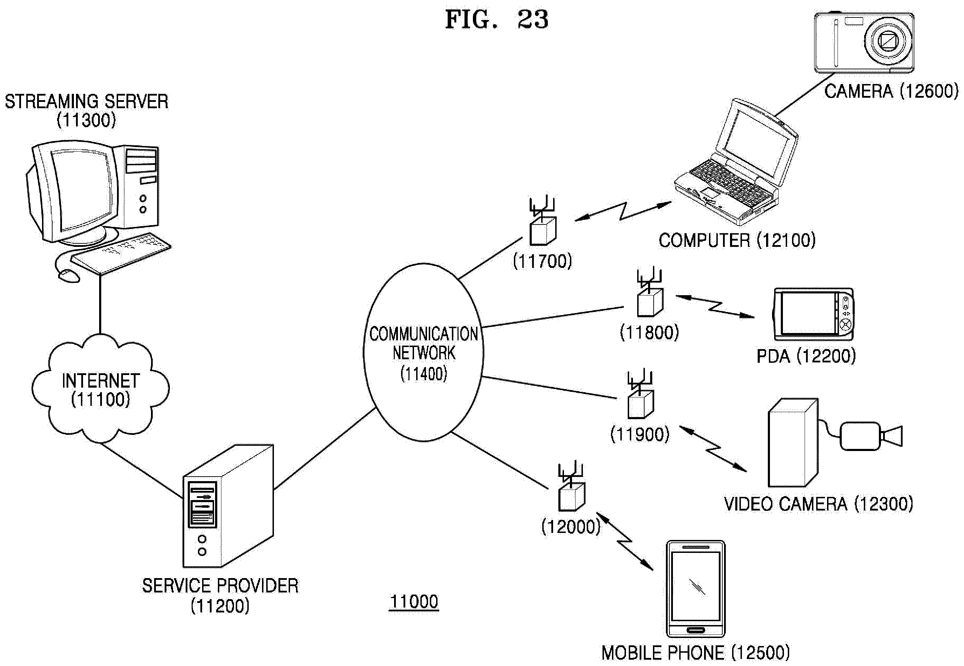

FIG. 23 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as that illustrated in FIG. 23, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded by the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded by the camera 12600 or the computer 12100. Software that performs encoding and decoding video may be stored in a non-transitory computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

In the content supply system 11000 according to an embodiment, content data, e.g., content recorded during a concert, which has been recorded by a user using the video camera 12300, the camera 12600, the mobile phone 12500, or another imaging device is encoded and is transmitted to the streaming server 11300. The streaming server 11300 may transmit the encoded content data in a type of a streaming content to other clients that request the content data.

The clients, for example, the computer 12100, the PDA 12200, the video camera 12300, or the mobile phone 12500, are devices capable of decoding the encoded content data. Thus, the content supply system 11000 allows the clients to receive and reproduce the encoded content data. Also, the content supply system 11000 allows the clients to receive the encoded content data and decode and reproduce the encoded content data in real-time, thereby enabling personal broadcasting.

The video encoding apparatus and the video decoding apparatus of the present disclosure may be applied to encoding and decoding operations of the plurality of independent devices included in the content supply system 11000.

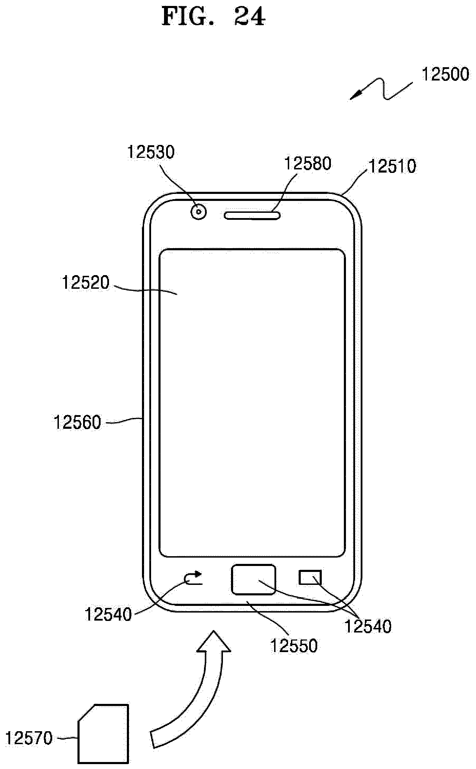

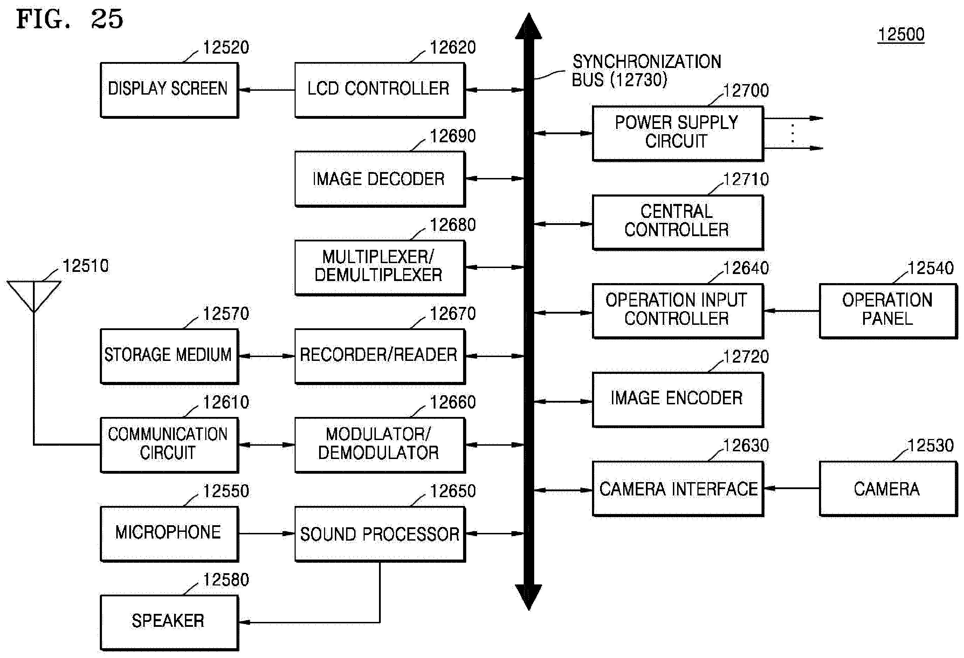

With reference to FIGS. 24 and 25, an embodiment of the mobile phone 12500 included in the content supply system 11000 will now be described in detail below.

FIG. 24 illustrates an external structure of the mobile phone 12500 to which the video encoding method and the video decoding method of the present disclosure are applied, according to various embodiments. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 25 illustrates an internal structure of the mobile phone 12500. In order to systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off state to a 'power on' state, the power supply circuit 12700 supplies power to all the parts of the mobile phone 12500 from a battery pack, thereby setting the mobile phone 12500 in an operation mode.

The central controller 12710 includes a central processing unit (CPU), a read-only memory (ROM), and a random-access memory (RAM)

While the mobile phone 12500 transmits communication data to the outside, a digital signal is generated by the mobile phone 12500 under control of the central controller 12710. For example, the sound processor 12650 may generate a digital sound signal, the image encoding unit 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is converted to a digital sound signal by the sound processor 12650, under control of the central controller 12710. The generated digital sound signal may be converted to a transmission signal through the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

In order to transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the aforementioned video encoding apparatus of the present disclosure. The image encoding unit 12720 may transform the image data received from the camera 12530 into compressed and encoded image data according to the aforementioned video encoding method of the present disclosure, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from an outer source, frequency recovery and analog-to-digital conversion (ADC) are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

In the data communication mode, when data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

In order to decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the aforementioned video decoding apparatus of the present disclosure. The image decoding unit 12690 may decode the encoded video data to generate reconstructed video data and may provide the reconstructed video data to the display screen 12520 via the LCD controller 12620, according to the aforementioned video decoding method of the present disclosure.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both the video encoding apparatus and the video decoding apparatus of the present disclosure, may be a transceiving terminal including only the video encoding apparatus of the present disclosure, or may be a transceiving terminal including only the video decoding apparatus of the present disclosure.

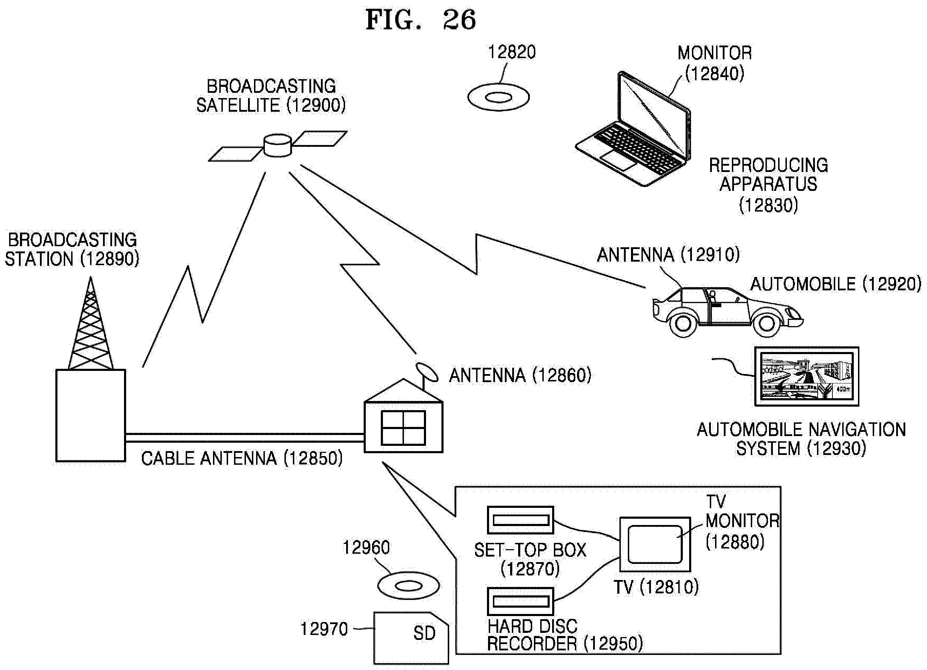

A communication system according to the present disclosure is not limited to the communication system described above with reference to FIG. 24. For example, FIG. 26 illustrates a digital broadcasting system employing a communication system, according to an embodiment. The digital broadcasting system of FIG. 26 according to an embodiment may receive a digital broadcast transmitted via a satellite or a terrestrial network by using the video encoding apparatus and the video decoding apparatus of the present disclosure.

In more detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus of the present disclosure is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus of the present disclosure may be installed. Data output from the set-top box 12870 may also be reproduced on a TV monitor 12880.

As another example, the video decoding apparatus of the present disclosure may be installed in the TV receiver 12810 instead of the set-top box 12870.

An automobile 12920 that has an appropriate antenna 12910 may receive a signal transmitted from the satellite 12900 or the wireless base station 11700 of FIG. 23. A decoded video may be reproduced on a display screen of an automobile navigation system 12930 installed in the automobile 12920.

A video signal may be encoded by the video encoding apparatus of the present disclosure and may then be recorded to and stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus of the present disclosure according to an embodiment, a video signal recorded on the DVD disc 12960, the SD card 12970, or another storage medium may be reproduced on the TV monitor 12880.

The automobile navigation system 12930 may not include the camera 12530, the camera interface 12630, and the image encoding unit 12720 of FIG. 26. For example, the computer 12100 and the TV receiver 12810 may not include the camera 12530, the camera interface 12630, and the image encoding unit 12720 of FIG. 26.

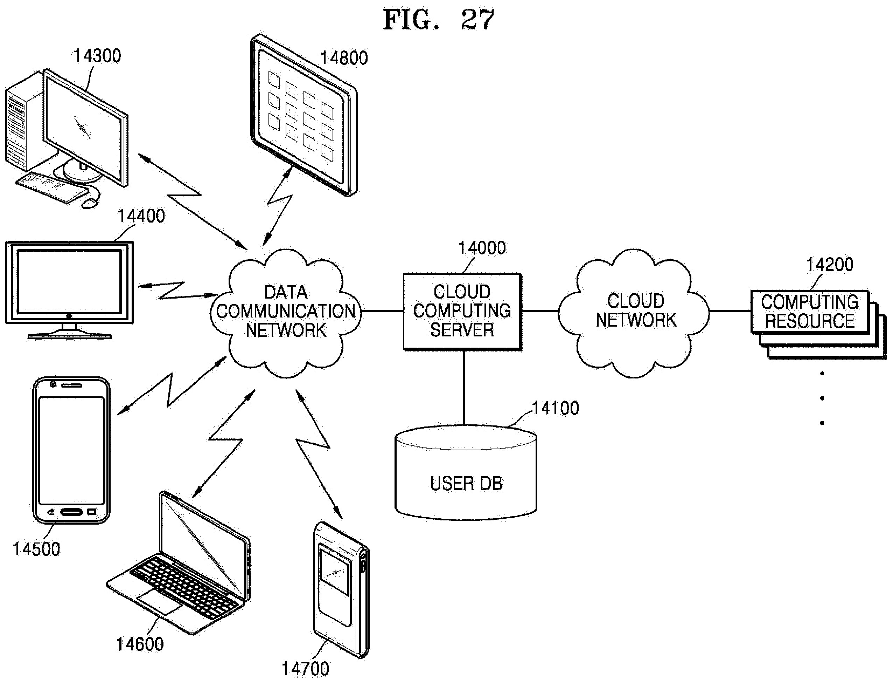

FIG. 27 is a diagram illustrating a network structure of a cloud computing system using a video encoding apparatus and a video decoding apparatus, according to various embodiments.

The cloud computing system of the present disclosure may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a user who uses a specified service is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. On the other hand, if the user terminal requests to reproduce the video, starting from the pausing point thereof, the cloud computing server 14000 transmits streaming data of the video starting from a frame corresponding to the pausing point, to the user terminal.

In this case, the user terminal may include the video decoding apparatus of the present disclosure as described above with reference to FIGS. 1A through 20. As another example, the user terminal may include the video encoding apparatus of the present disclosure as described above with reference to FIGS. 1A through 20. Alternatively, the user terminal may include both the video decoding apparatus and the video encoding apparatus of the present disclosure as described above with reference to FIGS. 1A through 20.

Various applications of the video encoding method, the video decoding method, the video encoding apparatus, and the video decoding apparatus according to various embodiments described above with reference to FIGS. 1A through 20 are described above with reference to FIGS. 21 through 27. However, embodiments with respect to methods of storing the video encoding method and the video decoding method in a storage medium or methods of implementing the video encoding apparatus and the video decoding apparatus in a device according to various embodiments described above with reference to FIGS. 1A through 20 are not limited to the embodiments described above with reference to FIGS. 21 through 27.

The disclosure can also be embodied as computer-readable codes on a non-transitory computer-readable recording medium. The non-transitory computer-readable recording medium is any data storage device that can store data which can be thereafter read by a computer system. Examples of the non-transitory computer-readable recording medium include ROMs, RAMs, CD-ROMs, magnetic tapes, floppy disks, optical data storage devices, etc. The non-transitory computer-readable recording medium can also be distributed over network coupled computer systems so that the computer-readable code is stored and executed in a distributed fashion.

While this disclosure has been particularly shown and described with reference to embodiments thereof, it will be understood by one of ordinary skill in the art that various changes in form and details may be made therein without departing from the spirit and scope of the disclosure as defined by the appended claims. Therefore, the scope of the disclosure is defined not by the detailed description of the disclosure but by the appended claims, and all differences within the scope will be construed as being included in the present disclosure.

**Claims**

1. A multilayer video decoding method comprising:

    obtaining partitioning mode information of a current block;
    obtaining depth-based block partitioning information when the partitioning mode information indicates one of preset partitioning modes;
    splitting the current block into a plurality of regions when the depth-based block partitioning information indicates that the current block is to be split into the plurality of regions, based on a depth block corresponding to the current block; and
    performing at least one of motion compensation and inter-layer compensation on the current block, based on the plurality of split regions.

2. The multilayer video decoding method of claim 1, wherein the preset partitioning modes comprise at least one of a PART_2NxN mode and a PART_Nx2N mode.

3. The multilayer video decoding method of claim 1, wherein the depth-based block partitioning information indicates whether to split the current block into a first region and a second region, each having an arbitrary size.

4. The multilayer video decoding method of claim 1, further comprising, when the depth-based block partitioning information indicates that the current block is not to be split into the plurality of regions based on the depth block corresponding to the current block, splitting the current block into the plurality of regions, based on the obtained partitioning mode information.

5. The multilayer video decoding method of claim 1, wherein, when the depth-based block partitioning information indicates that the current block is to be split into the plurality of regions based on the depth block corresponding to the current block, the splitting of the current block into the plurality of regions comprises:

    determining the depth block corresponding to the current block; and
    splitting the current block into two regions, based on sample values comprised in the determined depth block.

6. The multilayer video decoding method of claim 5, wherein the splitting of the current block into the two regions based on the sample values comprised in the determined depth block comprises:

    determining an average value of corner pixels of the depth block to be a threshold value;
    splitting the depth block into a first region and a second region, wherein the first region comprises samples of which sample values are greater than the threshold value, and the second region comprises samples of which sample values are equal to or less than the threshold value; and
    splitting the current block according to split shapes of the first region and the second region.

7. The multilayer video decoding method of claim 6, wherein the corner pixels comprise one or more samples from among a left-top sample, a left-bottom sample, a right-top sample, and a right-bottom sample in the depth block.

8. A multilayer video encoding method comprising:

    determining partitioning mode information of a current block;
    generating depth-based block partitioning information when the partitioning mode information indicates one of preset partitioning modes;
    splitting the current block into a plurality of regions when the depth-based block partitioning information indicates that the current block is to be split into the plurality of regions, based on a depth block corresponding to the current block; and
    performing at least one of motion prediction and inter-layer prediction on the current block, based on the plurality of split regions.

9. The multilayer video encoding method of claim 8, wherein the preset partitioning modes comprise at least one of a PART_2NxN mode and a PART_Nx2N mode.

10. The multilayer video encoding method of claim 8, further comprising, when the depth-based block partitioning information indicates that the current block is not split into the plurality of regions based on the depth block corresponding to the current block, splitting the current block into the plurality of regions, based on the partitioning mode information.

11. The multilayer video encoding method of claim 8, wherein, when the depth-based block partitioning information indicates that the current block is to be split into the plurality of regions based on the depth block corresponding to the current block, the splitting of the current block into the plurality of regions comprises:

    determining the depth block corresponding to the current block; and
    splitting the current block into two regions, based on sample values comprised in the determined depth block.

12. The multilayer video encoding method of claim 11, wherein the splitting of the current block into the two regions based on the sample values comprised in the determined depth block comprises:

    determining an average value of corner pixels of the depth block to be a threshold value;
    splitting the depth block into a first region and a second region, wherein the first region comprises samples of which sample values are greater than the threshold value, and the second region comprises samples of which sample values are equal to or less than the threshold value; and
    splitting the current block according to split shapes of the first region and the second region.

13. The multilayer video encoding method of claim 12, wherein the corner pixels comprise one or more samples from among a left-top sample, a left-bottom sample, a right-top sample, and a right-bottom sample in the depth block.

14. A multilayer video decoding apparatus comprising:

an obtainer configured to obtain partitioning mode information of a current block, and to obtain depth-based block partitioning information when the partitioning mode information indicates one of preset partitioning modes; and

a decoder configured to split the current block into a plurality of regions when the depth-based block partitioning information indicates that the current block is to be split into the plurality of regions, based on a depth block corresponding to the current block, and to perform at least one of motion compensation and inter-layer compensation on the current block, based on the plurality of split regions.

15. A multilayer video encoding apparatus comprising:

an encoder configured to determine partitioning mode information of a current block, to generate depth-based block partitioning information when the partitioning mode information indicates one of preset partitioning modes, to split the current block into a plurality of regions when the depth-based block partitioning information indicates that the current block is to be split into the plurality of regions, based on a depth block corresponding to the current block, and to perform at least one of motion prediction and inter-layer prediction on the current block, based on the plurality of split regions; and

a bitstream generator configured to generate a bitstream by using a plurality of items of encoded data generated by performing at least one of the motion prediction and the inter-layer prediction.

FIG. 1A

# FIG. 1B

START

DETERMINE PARTITIONING MODE INFORMATION OF
CURRENT BLOCK — S11

WHEN PARTITIONING MODE OF CURRENT BLOCK INDICATES — S13
ONE OF PRESET PARTITIONING MODES, GENERATE
DEPTH-BASED BLOCK PARTITIONING INFORMATION

WHEN DEPTH-BASED BLOCK PARTITIONING INFORMATION
INDICATES THAT CURRENT BLOCK IS TO BE SPLIT INTO
ONE OR MORE REGIONS, BASED ON DEPTH BLOCK — S15
CORRESPONDING TO CURRENT BLOCK, SPLIT CURRENT
BLOCK INTO ONE OR MORE REGIONS

PERFORM MOTION PREDICTION ON CURRENT BLOCK, — S17
BASED ON ONE OR MORE SPLIT REGIONS

END

EP 3 160 140 A1

FIG. 1C

From S13

DEPTH-BASED
BLOCK PARTITIONING INFORMATION
INDICATES THAT CURRENT BLOCK IS
TO BE SPLIT INTO ONE OR MORE REGIONS,
BASED ON DEPTH BLOCK
CORRESPONDING TO
CURRENT BLOCK ?

S15-1

YES

NO

S15-2

SPLIT CURRENT BLOCK INTO
ONE OR MORE REGIONS, BASED
ON DEPTH BLOCK

S15-3

SPLIT CURRENT BLOCK INTO
ONE OR MORE REGIONS, BASED
ON PARTITIONING MODE
INFORMATION

To S17

# FIG. 1D

From S15-1

S15-2

DETERMINE DEPTH BLOCK THAT CORRESPONDS
TO CURRENT BLOCK

S16-1

SPLIT CURRENT BLOCK INTO TWO REGIONS,
BASED ON SAMPLE VALUES INCLUDED IN
DETERMINED DEPTH BLOCK

S16-2

To S17

# FIG. 2A

# FIG. 2B

```
                    ( START )
                        │
                        ▼
┌──────────────────────────────────────────────┐
│    OBTAIN PARTITIONING MODE INFORMATION OF     │ ── S21
│                CURRENT BLOCK                    │
└──────────────────────────────────────────────┘
                        │
                        ▼
┌──────────────────────────────────────────────┐
│ WHEN PARTITIONING MODE INFORMATION INDICATES ONE│ ── S23
│ OF PRESET PARTITIONING MODES, OBTAIN DEPTH-BASED│
│           BLOCK PARTITIONING INFORMATION        │
└──────────────────────────────────────────────┘
                        │
                        ▼
┌──────────────────────────────────────────────┐
│ WHEN DEPTH-BASED BLOCK PARTITIONING INFORMATION │ ── S25
│  INDICATES THAT CURRENT BLOCK IS TO BE SPLIT INTO│
│   ONE OR MORE REGIONS, BASED ON DEPTH BLOCK     │
│  CORRESPONDING TO CURRENT BLOCK, SPLIT CURRENT  │
│           BLOCK INTO ONE OR MORE REGIONS        │
└──────────────────────────────────────────────┘
                        │
                        ▼
┌──────────────────────────────────────────────┐
│ PERFORM MOTION COMPENSATION ON CURRENT BLOCK,   │ ── S27
│       BASED ON ONE OR MORE SPLIT REGIONS        │
└──────────────────────────────────────────────┘
                        │
                        ▼
                    ( END )
```

# FIG. 2C

From S23

DEPTH-BASED BLOCK PARTITIONING INFORMATION INDICATES THAT CURRENT BLOCK IS TO BE SPLIT INTO ONE OR MORE REGIONS, BASED ON DEPTH BLOCK CORRESPONDING TO CURRENT BLOCK ? — S25-1

YES

NO

S25-2
SPLIT CURRENT BLOCK INTO ONE OR MORE REGIONS, BASED ON DEPTH BLOCK

S25-3
SPLIT CURRENT BLOCK INTO ONE OR MORE REGIONS, BASED ON PARTITIONING MODE INFORMATION

To S27

# FIG. 2D

From S25-1

S25-2

DETERMINE DEPTH BLOCK THAT CORRESPONDS
TO CURRENT BLOCK — S26-1

SPLIT CURRENT BLOCK INTO TWO REGIONS,
BASED ON SAMPLE VALUES INCLUDED IN
DETERMINED DEPTH BLOCK — S26-2

To S27

FIG. 3A

# FIG. 3B

FIRST LAYER 3010

SECOND LAYER 3020

nTH LAYER 3030

3000

# FIG. 4

SECOND LAYER

44 — 43

FIRST LAYER

45

CURRENT
BLOCK — 42 — 41

T1

# FIG. 5A

FIRST REGION (53)  SECOND REGION (54)

| A | | | B |
|---|---|---|---|
| | | | |
| | | | |
| C | | | D |

DEPTH BLOCK (52)

CURRENT BLOCK (51)

CURRENT BLOCK (51)

FIG. 5B

(aa)

(ab)

(ac)

(ad)

(ae)

# FIG. 6

PART_Nx2N          OR          PART_2NxN

MV1                                    MV2

FIRST
REGION

SECOND
REGION

CURRENT BLOCK (61)

EP 3 160 140 A1

# FIG. 7A

**I.7.3.8.5  Coding unit syntax**

| coding_unit(x0,y0,log2CbSize, ctDepth) { | Descriptor |
|---|---|
|    if( transquant_bypass_enabled_flag ) | |
|      **cu_transquant_bypass_flag** | ae(v) |
|    if( slice_type  != I ) | |
|      **cu_skip_flag**[x0][y0] | ae(v) |
|    nCbS = (1 <<log2CbSize) | |
|    if( cu_skip_flag[x0][y0]) | |
|      prediction_unit(x0,y0,CbS,nCbS) | |
|    else { | |
|      if( slice_type  != I ) | |
|        **pred_mode_flag** | ae(v) |
|      if( ( CuPredMode[x0][y0] != MODE_INTRA \|\|<br>       log2CbSize == MinCbLog2SizeY )  && !predPartModeFlag) | |
|        **part_mode**<br>     if( depth_based_blk_part_flag[ nuh_layer_id ]<br>             && CuPredMode[x0][y0]  != MODE_INTRA —— 701<br>     && ( PartMode == PART_2NxN \|\| PartMode == PART_Nx2N )) | ae(v) |
|        **dbbp_flag[x0][y0]** —— 702 | ae(v) |
|      ... | |

**FIG. 7B**

| intra_mode_ext(x0,y0,log2PbSize){ | Descriptor |
|---|---|
| if( log2PbSize < 6 ) | |
|   **no_dim_flag** [ x0 ][ y0 ] | ae(v) |
| if(!no_dim_flag[x0][y0] && IntraDcOnlyWedgeEnabledFlag<br>&& IntraContourEnabledFlag ) | |
|   **depth_intra_mode_idx_flag**[ x0 ][ y0 ] | ae(v) |
| if(!no_dim_flag[x0][y0] && !depth_intra_mode_idx_flag[x0][y0]) | |
|   **wedge_full_tab_idx** [ x0 ][ y0 ] | ae(v) |
| } | |

| cu_extension(x0,y0,log2CbSize) { | Descriptor |
|---|---|
| if( skip_intra_flag[x0][y0]) | |
|   **skip_intra_mode_idx**[ x0 ][ y0 ] | ae(v) |
| else { | |
|   if( !cu_skip_flag[x0][y0]) { | |
|     if( DbbpEnabledFlag && DispAvailFlag && log2CbSize > 3 &&<br>      (PartMode == PART_2NxN \|\| PartMode == PART_Nx2N)) —703 | |
|       **dbbp_flag**[ x0 ][ y0 ] —704 | ae(v) |
|     if( ( CuPredMode[ x0 ][ y0 ] == MODE_INTRA ? IntraDcOnlyWedgeEnabledFlag<br>      InterDcOnlyEnabledFlag ) && PartMode == PART_2Nx2N ) | |
|       **dc_only_flag**[ x0 ][ y0 ] | ae(v) |
|     } | |
|     if( CuPredMode[ x0 ][ y0 ] != MODE INTRA && PartMode ==PART 2Nx2N ) { | |
|       if(IvResPredEnabledFlag && RpRefPicAvailFlag) | |
|       **iv_res_pred_weight_idx**[ x0 ][ y0 ] | ae(v) |
|       if(slice_ic_enabled_flag && icCuEnableFlag &&<br>        iv_res_pred_weight_idx[ x0 ][ y0 ] == 0) | |
|       **illu_comp_flag**[ x0 ][ y0 ] | ae(v) |
|     } | |
|   } | |
| } | |

# FIG. 7C

The partition pattern contourPattern is derived as follows:

- The derivation process for a depth or disparity sample array from a depth picture as specified in clause I.8.5.7 is invoked with the luma location ( xBlk, yBlk ) equal to ( xCb, yCb ), the variable nBlkW equal to nCbS, the variable nBlkH equal to nCbS, the disparity vector dispVec equal to DispRefVec[ xCb ][ yCb ], the reference view order index refViewIdx equal to RefViewIdx[ xCb ][ yCb ], and the variable partIdc equal to 1 as inputs, and the output is the array refSamples of size (nCbS)x(nCbS).

- The variable threshVal is derived as follows:

$$\text{threshVal} = ( \text{refSamples}[ 0 ][ 0 ] + \text{refSamples}[ 0 ][ nCbS - 1 ] + \text{refSamples}[ nCbS - 1 ][ 0 ] + \text{refSamples}[ nCbS - 1 ][ nCbS - 1 ] ) >> 2 \quad \text{— 705}$$

- For x = 0..nCbS − 1 and y = 0..nCbS − 1, the following applies:

$$\text{contourPattern}[ x ][ y ] = ( \text{refSamples}[ x ][ y ] > \text{threshVal} ) \quad \text{— 706}$$

**FIG. 7D**

### I.8.5.7 Derivation process for a modified partitioning mode

Inputs to this process are:

— a luma location ( xCb, yCb ) of the top-left sample of the current luma coding block relative to the top-left luma sample of the current picture,

— a variable nCbS specifying the size of the current luma coding block.

The derivation process for a disparity sample array as specified in subclause I.8.5.5.2 is invoked with the luma locations ( xP, yP ) equal to ( xTb, yTb ), the disparity vector mvDisp equal to MvRefinedDisp[ xTb ][ yTb ], the view identifier refViewIdx equal to RefViewIdx[ xTb ][ yTb ], the variables nPbW and nPbH, equal to nTbS, and the variable partIdc equal to 1 as inputs, and the output is the array refSamples of size (nTbS)x(nTbS) and the flag horSplitFlag

PartMode is derived as specified in the following:

— if Abs( refSample[ 0 ][ 0 ] − refSample[ nTbS − 1 ][ 0 ]) is greater than Abs( refSample[ 0 ][ 0 ] − refSample[ 0 ][ nTbS − 1 ], PartMode is set equal to PART_Nx2N

- Otherwise, PartMode is set equal to PART_2NxN — 708          707

The following applies:

merge_idx[ xCb ][ yCb + nCbS / 2 ]            MergeIdx[ x0 ][ y0 ] = (I-302)

merge_flag[ xCb ][ yCb + nCbS / 2 ]           MergeFlag[ x0 ][ y0° ] = (I-303)

inter_pred_idc[ xCb ][ yCb + nCbS / 2 ]       InterPredIdc[ x0 ][ y0° ] = (I-304)

For X in the range of 0 to 1, inclusive, the following applies:

ref_idx_lX[ xCb ][ yCb + nCbS / 2 ]           PuRefIdxLX[ x0 ][ y0° ] = (I-305)

mvp_lX_flag[ xCb ][ yCb + nCbS / 2 ]          MvpLXFlag[ x0 ][ y0° ] = (I-306)

MvdLX[ xCb ][ yCb + nCbS/2 ]                   MvdLX[ x0 ][ y0° ] =

# FIG. 8

```
          /810              /820              /830
  ┌──────────────┐  ┌──────────────────┐  ┌──────────────┐
  │     LCU      │  │     CODING       │  │              │
──▶│   SPLITTER   │─▶│ UNIT DETERMINER  │─▶│ OUTPUT UNIT  │──▶
  └──────────────┘  └──────────────────┘  └──────────────┘
```

# FIG. 9

```
          /910              /920              /930
  ┌──────────────┐  ┌──────────────────┐  ┌──────────────┐
  │              │  │ IMAGE DATA AND   │  │              │
  │   RECEIVER   │  │    ENCODING      │  │  IMAGE DATA  │
──▶│              │─▶│   INFORMATION    │─▶│   DECODER    │──▶
  │              │  │    EXTRACTOR     │  │              │
  └──────────────┘  └──────────────────┘  └──────────────┘
```

# FIG. 10

## FIG. 11

EP 3 160 140 A1

# FIG. 12

EP 3 160 140 A1

# FIG. 13

1300

MAXIMUM HEIGHT AND
MAXIMUM WIDTH OF
CODING UNIT=64          MAXIMUM DEPTH = 3

LCU

64  1310
64
64×64

64  1312
32
64×32

32  1314
64
32×64

32  1316
32
32×32

PREDICTION
UNIT/PARTITION

32  1320
32
32×32

32  1322
16
32×16

16  1324
32
16×32

16  1326
16
16×16

16  1330
16
16×16

16  1332
8
16×8

8  1334
16
8×16

8  1336
8
8×8

8  1340
8
8×8

8  1342
4
8×4

4  1344
8
4×8

4  1346
4
4×4

SCU

DEEPER CODING UNIT

# FIG. 14

CODING UNIT (710)    TRANSFORMATION UNIT (720)

64

64×64

32

32

32×32

# FIG. 15

PARTITION MODE (1500)

PREDICTION MODE (1510)

SIZE OF TRANSFORMATION UNIT (1520)

FIG. 16

# FIG. 17

CODING UNIT (1710)

# FIG. 18

1714

1716

1732

1722

1748

1754

PREDICTION UNIT (1760)

1750    1752

# FIG. 19

TRANSFORMATION
UNIT (1770)

# FIG. 20

EP 3 160 140 A1

# FIG. 21

Se

Tr

DISK (21000)

# FIG. 22

26700

26800

26000

# FIG. 23

STREAMING SERVER
(11300)

CAMERA (12600)

INTERNET
(11100)

COMPUTER (12100)

(11700)

COMMUNICATION
NETWORK
(11400)

(11800)

PDA (12200)

(11900)

VIDEO CAMERA (12300)

SERVICE PROVIDER
(11200)

11000

(12000)

MOBILE PHONE (12500)

EP 3 160 140 A1

FIG. 24

12500

12530

12580

12510

12520

12560

12540

12550

12540

12570

**FIG. 25**

12500

DISPLAY SCREEN 12520 — LCD CONTROLLER 12620

SYNCHRONIZATION BUS (12730)

POWER SUPPLY CIRCUIT 12700

IMAGE DECODER 12690

CENTRAL CONTROLLER 12710

MULTIPLEXER/ DEMULTIPLEXER 12680

12510

OPERATION INPUT CONTROLLER 12640 — OPERATION PANEL 12540

STORAGE MEDIUM 12570 — RECORDER/READER 12670

COMMUNICATION CIRCUIT 12610 — MODULATOR/ DEMODULATOR 12660

IMAGE ENCODER 12720

CAMERA INTERFACE 12630 — CAMERA 12530

MICROPHONE 12550 — SOUND PROCESSOR 12650

SPEAKER 12580

EP 3 160 140 A1

# FIG. 26

EP 3 160 140 A1

## FIG. 27

14300

14800

14400

14000

CLOUD COMPUTING SERVER

CLOUD NETWORK

14200

COMPUTING RESOURCE

DATA COMMUNICATION NETWORK

14500

14100

USER DB

14600

14700

EP 3 160 140 A1

<div align="center">INTERNATIONAL SEARCH REPORT</div>

| International application No. |
| --- |
| **PCT/KR2015/006179** |

### A. CLASSIFICATION OF SUBJECT MATTER

*H04N 19/119(2014.01)i, H04N 19/30(2014.01)i, H04N 19/176(2014.01)i, H04N 19/122(2014.01)i*

According to International Patent Classification (IPC) or to both national classification and IPC

### B. FIELDS SEARCHED

Minimum documentation searched (classification system followed by classification symbols)
H04N 19/119; H04N 19/103; H04N 19/30; H04N 19/176; H04N 19/122

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: partition, flag, depth, coding

### C. DOCUMENTS CONSIDERED TO BE RELEVANT

| Category* | Citation of document, with indication, where appropriate, of the relevant passages | Relevant to claim No. |
| --- | --- | --- |
| X | FABIAN JAGER et al.. "CE3: Results on Depth-based Block Partitioning (DBBP)," JCT3V-G0106, JCT3V 7th Meeting: San Jose, USA, 11 January 2014, pages 1-12. See abstract, pages 1, 4 and figure 3. | 1-3,8-9,14-15 |
| Y | | 4-7,10-13 |
| Y | KR 10-2013-0050325 A (SAMSUNG ELECTRONICS CO., LTD.) 15 May 2013 See paragraphs [0162]-[0163] and figure 2. | 4,10 |
| Y | XIANGUO ZHANG et al.. "Simplification on depth-based block partitioning (DBBP)," JCT3V-H0073, JCT3V 8th Meeting: Valencia, ES, 30 March 2014, pages 1-6. See pages 1-2 and figure 1. | 5-7,11-13 |
| A | XIANGUO ZHANG et al.. "Bug-fix of depth-based block partitioning," JCT3V-H0072, JCT3V 8th Meeting: Valencia, ES, 30 March 2014, pages 1-3. See pages 1-2. | 1-15 |
| A | FABIAN JAGER et al.. "Low Complex Partitioning Derivation for DBBP," JCT3V-H0058, JCT3V 8th Meeting: Valencia, ES, 21 March 2014, pages 1-6. See pages 1-2 and figures 1-2. | 1-15 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 SEPTEMBER 2015 (10.09.2015) | **24 SEPTEMBER 2015 (24.09.2015)** |

| Name and mailing address of the ISA/**KR** | Authorized officer |
| --- | --- |
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/006179**

| Patent document cited in search report | Publication date | Patent family member | Publication date |
|---|---|---|---|
| KR 10-2013-0050325 A | 15/05/2013 | CA 2783786 A1 | 16/06/2011 |
| | | CA 2816467 A1 | 16/06/2011 |
| | | CA 2816755 A1 | 16/06/2011 |
| | | CN 102771124 A | 07/11/2012 |
| | | CN 103220519 A | 24/07/2013 |
| | | CN 103220523 A | 24/07/2013 |
| | | EP 2510698 A2 | 17/10/2012 |
| | | EP 2629527 A2 | 21/08/2013 |
| | | EP 2629527 A3 | 30/10/2013 |
| | | EP 2629528 A2 | 21/08/2013 |
| | | EP 2629528 A3 | 30/10/2013 |
| | | EP 2629528 B1 | 18/03/2015 |
| | | JP 2013-255274 A | 19/12/2013 |
| | | JP 2013-255275 A | 19/12/2013 |
| | | JP 2013-513330 A | 18/04/2013 |
| | | JP 5632515 B2 | 26/11/2014 |
| | | JP 5632516 B2 | 26/11/2014 |
| | | KR 10-1484280 B1 | 20/01/2015 |
| | | KR 10-1484282 B1 | 22/01/2015 |
| | | KR 10-1513891 B1 | 23/04/2015 |
| | | KR 10-2014-0060480 A | 20/05/2014 |
| | | KR 10-2014-0139460 A | 05/12/2014 |
| | | KR 10-2015-0013931 A | 05/02/2015 |
| | | US 2011-0134998 A1 | 09/06/2011 |
| | | US 2012-0114043 A1 | 10/05/2012 |
| | | US 2012-0236944 A1 | 20/09/2012 |
| | | US 2013-0251035 A1 | 26/09/2013 |
| | | US 2014-0192874 A1 | 10/07/2014 |
| | | US 2014-0192875 A1 | 10/07/2014 |
| | | US 2014-0192890 A1 | 10/07/2014 |
| | | US 2014-0286426 A1 | 25/09/2014 |
| | | US 8223843 B2 | 17/07/2012 |
| | | US 8446959 B2 | 21/05/2013 |
| | | US 8780993 B2 | 15/07/2014 |
| | | US 8885723 B2 | 11/11/2014 |
| | | US 8885724 B2 | 11/11/2014 |
| | | US 8885725 B2 | 11/11/2014 |
| | | US 8938006 B2 | 20/01/2015 |
| | | US 9025667 B2 | 05/05/2015 |
| | | WO 2011-071308 A2 | 16/06/2011 |
| | | WO 2011-071308 A3 | 27/10/2011 |

Form PCT/ISA/210 (patent family annex) (July 2009)